# EUROPEAN PATENT SPECIFICATION

(11) **EP 2 958 164 B1**
(45) Date of publication and mention of the grant of the patent: **08.11.2017**
(21) Application number: 15173188.2
(22) Date of filing: 22.06.2015
(51) Int. Cl.: H01M 2/02, H01M 10/052, H01M 10/0585, H01M 2/30

(54) **ELECTRICITY CHARGING/DISCHARGING DEVICE WITH INSULATION PACKAGE ENCLOSE MEMBER HAVING ELECTRODE PLATE PAIR WITH MULTIPLE-SIDED ELECTRIC CONDUCTIVE TERMINALS**
ELEKTRIZITÄTSLADE-/ENTLADEVORRICHTUNG MIT ISOLIERPAKETGEHÄUSEELEMENT MIT ELEKTRODENPLATTENPAAR MIT MEHRSEITIGEN ELEKTRISCHEN LEITENDEN ANSCHLÜSSEN
DISPOSITIF DE CHARGE/DÉCHARGE D'ÉLECTRICITÉ AVEC ÉLÉMENT D'EMBALLAGE ISOLANT COMPRENANT UNE PAIRE DE PLAQUES D'ÉLECTRODES AVEC DES BORNES ÉLECTRIQUES CONDUCTRICES MULTI-CÔTÉS

(30) Priority: 20.06.2014 US 201414310517; 20.06.2014 US 201414310542; 20.06.2014 US 201414310498
(43) Date of publication of application: 23.12.2015
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- WO-A1-01/65624
- CN-A- 1 697 240
- US-A- 4 425 414
- US-A1- 2004 106 038

## Description

### BACKGROUND OF THE INVENTION

### (a) Field of the Invention

The present invention provides an electricity charging/discharging device with insulation package enclose member having electrode plate pair with multiple-sided electric conductive terminals, wherein both the electrode plate pair with multiple-sided electric conductive terminals and the section of the electric conductive terminal adjacent to the connected electrode plate extending from at least two sides thereof to the external for inputting/outputting electric energy are sealed covered by a packing material with insulation property to form a full-closed type electricity charging/discharging device with insulation package enclose member such as Lithium-ion Batteries, for instance Lithium Iron Phosphate (LFP) Battery, Lithium Nickel Manganese Cobalt Oxide (NMC) Battery, and Lithium Polymer Battery, or a supercapacity, so the electrode plate pair is able to output or input electric energy to the exterior through an electric conductive interface formed by at least two-sided electric conductive terminal, or further to be connected in series, or in parallel, or in series then in parallel, or in parallel then in series for forming as an electricity charging/discharging device module of two or more than two electricity charging/discharging devices with insulation package enclose member applicable for various requirements; said electricity charging/discharging device with insulation package enclose member can be used directly or can be further selectively covered with a housing for protection at the external of the electrode plate pair with multiple-sided electric conductive terminals of the insulation package enclose member.

### (b) Description of the Prior Art

The conventional electricity charging/discharging device having electrode plate pair with multiple-sided electric conductive terminals is configured to a housing of groove structure, then the housing is welded or adhered with the end housing; the electric conductive terminals of the electrode plate pair with multiple-sided electric conductive terminals need to pass through the through holes on the housing or the end housing for extending to the external, and the sealing packaging material is additional filled at the through hole thus constituting a sealed packaging structure; there is numerous manufacturing processes and the quality control of the sealing location is difficult, therefore the sealing structure is often deteriorated after long-time use.

### SUMMARY OF THE INVENTION

The conventional electricity charging/discharging device having electrode plate pair with multiple-sided electric conductive terminals is configured to a housing of groove structure, then the housing is welded or adhered with the end housing; the electric conductive terminals of the electrode plate pair with multiple-sided electric conductive terminals need to pass through the through holes on the housing or the end housing for extending to the external, and the sealing packaging material is additional filled at the through hole thus constituting a sealed packaging structure; there is numerous manufacturing processes and the quality control of the sealing location is difficult, therefore the sealing structure is often deteriorated after long-time use.

The present invention provides an electricity charging/discharging device with insulation package enclose member having electrode plate pair with multiple-sided electric conductive terminals, wherein both the electrode plate pair with multiple-sided electric conductive terminals and the section of the electric conductive terminal adjacent to the connected electrode plate extending from at least two sides thereof to the external for inputting/outputting electric energy are sealed covered by a packing material with insulation property to form a full-closed type electricity charging/discharging device with insulation package enclose member such as Lithium-ion Batteries, for instance Lithium Iron Phosphate (LFP) Battery, Lithium Nickel Manganese Cobalt Oxide (NMC) Battery, and Lithium Polymer Battery, or a supercapacity, so the electrode plate pair is able to output or input electric energy to the exterior through an electric conductive interface formed by at least two-sided electric conductive terminal, or further to be connected in series, or in parallel, or in series then in parallel, or in parallel then in series for forming as an electricity charging/discharging device module of two or more than two electricity charging/discharging devices with insulation package enclose member applicable for various requirements; said electricity charging/discharging device with insulation package enclose member can be used directly or can be further selectively covered with a housing for protection at the external of the electrode plate pair with multiple-sided electric conductive terminals of the insulation package enclose member.

According to another aspect of the present invention, an electricity charging/discharging device comprises: a positive electrode plate having electric conductive terminals extending from opposite sides of the plate; a negative electrode plate having electric conductive terminals extending from opposite sides of the plate; an separator disposed between the positive and negative electrode plates; and electrically insulating package member disposed around the positive and negative electrode plates and around the separator but from which the electric conductive terminals extend.

### BRIEF DESCRIPTION OF THE DRAWINGS

FIG. 1 is a schematic structural view showing a conventional electrode plate having single-sided electric energy transferring terminal.
FIG. 2 is a schematic structural view showing a conventional electrode plate pair with single-sided electric energy transferring terminal being formed as an electricity charging/discharging cell.
FIG. 3 is a lateral cross sectional view of FIG. 2.
FIG. 4 is the first embodiment showing a conventional electrode plate having multiple-sided electric energy transferring terminals.
FIG. 5 is the second embodiment showing a conventional electrode plate having multiple-sided electric energy transferring terminals.
FIG. 6 is the third embodiment showing a conventional electrode plate having multiple-sided electric energy transferring terminals.
FIG. 7 is the fourth embodiment showing an electrode plate having multiple-sided electric energy transferring terminals.
FIG. 8 is an embodiment showing a conventional circular electrode plate having electric energy transferring terminals.
FIG. 9 is a schematic structural view showing the input/output electric conductive terminals having positive and negative polarities at one side of the electrode plate pair and a quadrilateral sheet-like lateral positive electric conductive member (109) and a lateral negative electric conductive member (110) at two lateral sides being structured as a multiple input/output electric conductive interface according to one embodiment of the present invention.
FIG. 10 is a lateral cross sectional view of FIG. 9 taken along A-A.
FIG. 11 is a lateral cross sectional view of FIG. 9 taken along B-B.
FIG. 12 is a schematic structural view showing the input/output electric conductive terminals having positive and negative polarities at one side of the electrode plate pair and the strip-like lateral positive electric conductive member (109) and the lateral negative electric conductive member (110) at two lateral sides are structured as the multiple input/output electric conductive interface according to one embodiment of the present invention.
FIG. 13 is a schematic structural view showing the input/output electric conductive terminals having positive and negative polarities at one side of the electrode plate pair and the circular sheet-like lateral positive electric conductive member (109) and the lateral negative electric conductive member (110) at two lateral sides are structured as the multiple input/output electric conductive interface according to one embodiment of the present invention.

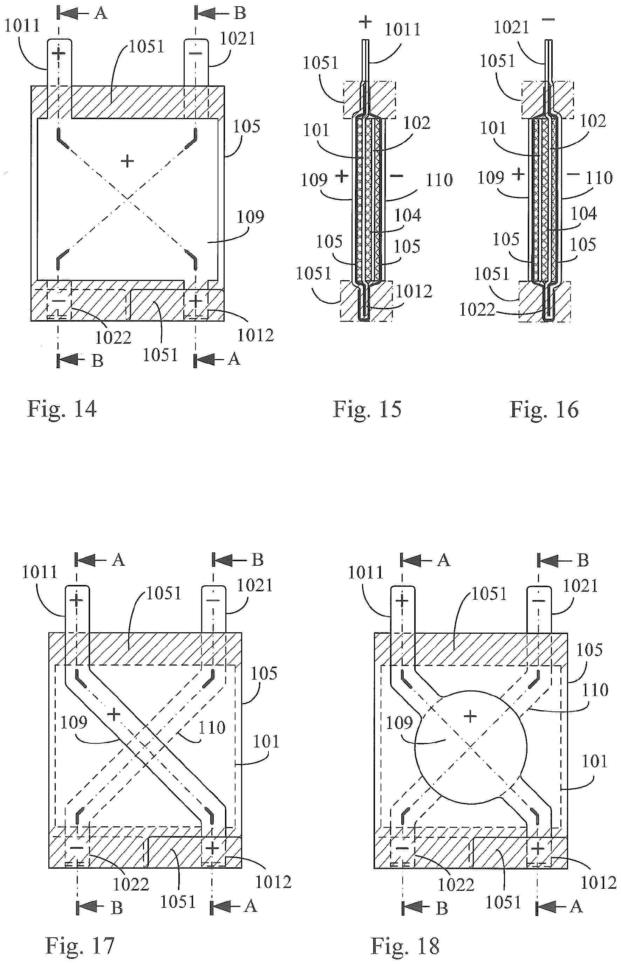

FIG. 14 is a schematic structural view showing the positive electrode plate (101) and the lateral positive electric conductive member (109), and the negative electrode plate (102) and the lateral negative electric conductive member (110) being integrally formed, and the input/output electric conductive terminals having positive and negative polarities at one side of the electrode plate pair and the quadrilateral sheet-like lateral positive electric conductive member (109) and the lateral negative electric conductive member (110) at two lateral sides being structured as the multiple input/output electric conductive interface according to one embodiment of the present invention.
FIG. 15 is a lateral cross sectional view of FIG. 14 taken along A-A.
FIG. 16 is a lateral cross sectional view of FIG. 14 taken along B-B.
FIG. 17 is a schematic structural view showing the positive electrode plate (101) and the lateral positive electric conductive member (109), and the negative electrode plate (102) and the lateral negative electric conductive member (110) being integrally formed, and the input/output electric conductive terminals having positive and negative polarities at one side of the electrode plate pair and the strip-like lateral positive electric conductive member (109) and the lateral negative electric conductive member (110) at two lateral sides being structured as the multiple input/output electric conductive interface according to one embodiment of the present invention.
FIG. 18 is a schematic structural view showing the positive electrode plate (101) and the lateral positive electric conductive member (109), and the negative electrode plate (102) and the lateral negative electric conductive member (110) being integrally formed, and the input/output electric conductive terminals having positive and negative polarities at one side of the electrode plate pair and the circular sheet-like lateral positive electric conductive member (109) and the lateral negative electric conductive member (110) at two lateral sides being structured as the multiple input/output electric conductive interface according to one embodiment of the present invention.

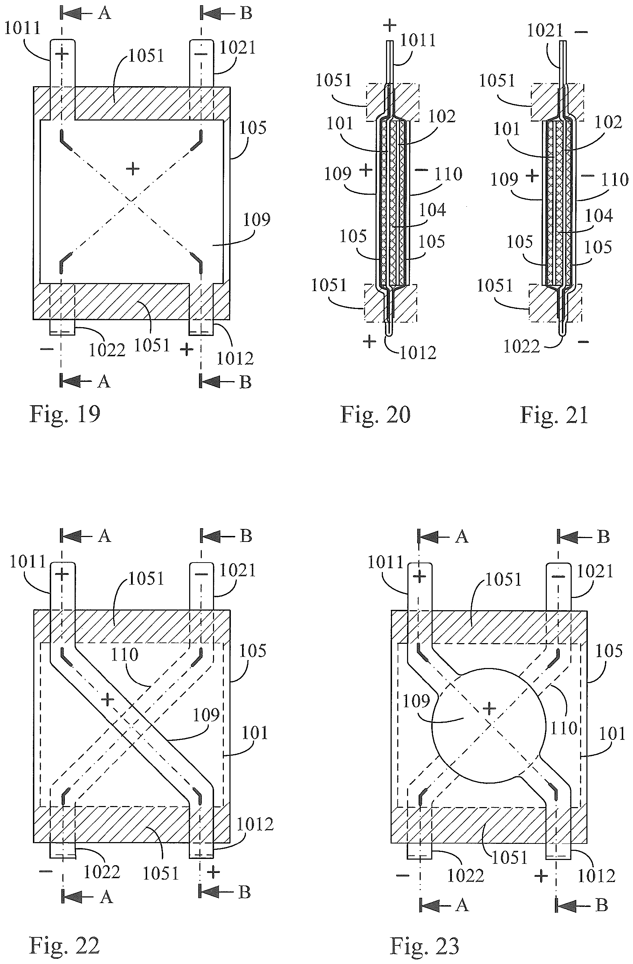

FIG. 19 is a schematic structural view showing the positive electrode plate (101) and the lateral positive electric conductive member (109), and the negative electrode plate (102) and the lateral negative electric conductive member (110) being integrally formed, and the input/output electric conductive terminals having at least one positive polarity input/output electric conductive terminal and at least one negative polarity input/output electric conductive terminal at two sides of the electrode plate pair and the quadrilateral sheet-like lateral positive electric conductive member (109) and the lateral negative electric conductive member (110) at two lateral sides being structured as the multiple input/output electric conductive interface according to one embodiment of the present invention.
FIG. 20 is a lateral cross sectional view of FIG. 19 taken along A-A.
FIG. 21 is a lateral cross sectional view of FIG. 19 taken along B-B.
FIG. 22 is a schematic structural view showing the positive electrode plate (101) and the lateral positive electric conductive member (109), and the negative electrode plate (102) and the lateral negative electric conductive member (110) being integrally formed, and the input/output electric conductive terminals having at least one positive polarity input/output electric conductive terminal and at least one negative polarity input/output electric conductive terminal at two sides of the electrode plate pair and the strip-like lateral positive electric conductive member (109) and the lateral negative electric conductive member (110) at two lateral sides being structured as the multiple input/output electric conductive interface according to one embodiment of the present invention.
FIG. 23 is a schematic structural view showing the positive electrode plate (101) and the lateral positive electric conductive member (109), and the negative electrode plate (102) and the lateral negative electric conductive member (110) being integrally formed, and the input/output electric conductive terminals having at least one positive polarity input/output electric conductive terminal and at least one negative polarity input/output electric conductive terminal at two sides of the electrode plate pair and the circular sheet-like lateral positive electric conductive member (109) and the lateral negative electric conductive member (110) at two lateral sides being structured as the multiple input/output electric conductive interface according to one embodiment of the present invention.
FIG. 24 is a schematic structural view showing the input/output electric conductive terminals having positive and negative polarities and respectively formed by a folded structure at two sides of the electrode plate pair and the quadrilateral sheet-like lateral positive electric conductive member (109) and the lateral negative electric conductive member (110) at two lateral sides being structured as the multiple input/output electric conductive interface according to one embodiment of the present invention.
FIG. 25 is a lateral cross sectional view of FIG. 24 taken along A-A.
FIG. 26 is a lateral cross sectional view of FIG. 24 taken along B-B.
FIG. 27 is a schematic structural view showing the input/output electric conductive terminals having positive and negative polarities respectively formed by a folded structure at two sides of the electrode plate pair and the strip-like lateral positive electric conductive member (109) and the lateral negative electric conductive member (110) at two lateral sides being structured as the multiple input/output electric conductive interface according to one embodiment of the present invention.
FIG. 28 is a schematic structural view showing the input/output electric conductive terminals having positive and negative polarities respectively formed by a folded structure at two sides of the electrode plate pair and the circular sheet-like lateral positive electric conductive member (109) and the lateral negative electric conductive member (110) at two lateral sides being structured as the multiple input/output electric conductive interface according to one embodiment of the present invention.
FIG. 29 is a schematic structural view showing an input/output electric conductive terminal having different polarity and respectively provided at two ends defined at the same side of the electrode plate pair and the quadrilateral sheet-like lateral positive electric conductive member (109) and the lateral negative electric conductive member (110) at two lateral sides of the electrode plate pair being structured as the multiple input/output electric conductive interface according to one embodiment of the present invention.
FIG. 30 is a lateral cross sectional view of FIG. 29 taken along A-A.
FIG. 31 is a lateral cross sectional view of FIG. 29 taken along B-B.
FIG. 32 is a schematic structural view showing an input/output electric conductive terminal having different polarity and respectively provided at two ends defined at the same side of the electrode plate pair and the strip-like lateral positive electric conductive member (109) and the lateral negative electric conductive member (110) at two lateral sides of the electrode plate pair being structured as the multiple input/output electric conductive interface according to one embodiment of the present invention.
FIG. 33 is a schematic structural view showing an input/output electric conductive terminal having different polarity and respectively provided at two ends defined at the same side of the electrode plate pair and the circular sheet-like lateral positive electric conductive member (109) and the lateral negative electric conductive member (110) at two lateral sides of the electrode plate pair being structured as the multiple input/output electric conductive interface according to one embodiment of the present invention.
FIG. 34 is a schematic structural view showing the electricity charging/discharging cells being disposed inside the housing (120) for forming as a module according to the present invention.
FIG. 35 is a lateral structural view of FIG. 34.
FIG. 36 is a structural develop view showing the multiple input/output electric conductive interface being formed as a rolling structure according to one embodiment of the present invention.
FIG. 37 is a lateral cross sectional view of FIG. 36 taken along A-A.
FIG. 38 is a lateral cross sectional view of FIG. 36 taken along B-B.
FIG. 39 is the first cross sectional view showing the rolling structure shown in FIG. 36 taken along C-C according to the present invention.
FIG. 40 is the second cross sectional view showing the rolling structure shown in FIG. 36 taken along C-C according to the present invention.
FIG. 41 is the third cross sectional view showing the rolling structure shown in FIG. 36 taken along C-C according to the present invention.
FIG. 42 is a schematic structural view showing one side of the electrode plate pair having a quadrilateral sheet-like lateral positive electric conductive member (109) and a lateral negative electric conductive member (110) being provided with the input/output electric conductive terminal having positive and negative polarity for being structured as a single-sided input/output electric conductive interface according to one embodiment of the present invention.
FIG. 43 is a lateral cross sectional view of FIG. 42 taken along A-A.
FIG. 44 is a lateral cross sectional view of FIG. 42 taken along B-B.
FIG. 45 is a schematic structural view showing one side of the electrode plate pair having the strip-like lateral positive electric conductive member (109) and the lateral negative electric conductive member (110) being provided with the input/output electric conductive terminals having positive and negative polarity for being structured as the single-sided input/output electric conductive interface according to one embodiment of the present invention.
FIG. 46 is a schematic structural view showing one side of the electrode plate pair having the circular sheet-like lateral positive electric conductive member (109) and the lateral negative electric conductive member (110) being provided with the input/output electric conductive terminals having positive and negative polarity for being structured as the single-sided input/output electric conductive interface according to one embodiment of the present invention.
FIG. 47 is a schematic structural view showing one side of the electrode plate pair having the quadrilateral sheet-like lateral positive electric conductive member (109) and the lateral negative electric conductive member (110) being served as the input/output electric conductive terminal having positive polarity, and the other side thereof being served as the input/output electric conductive terminal having negative polarity thereby structuring the single-sided input/output electric conductive interface according to one embodiment of the present invention.
FIG. 48 is a lateral cross sectional view of FIG. 47 taken along A-A.
FIG. 49 is a lateral cross sectional view of FIG. 47 taken along B-B.
FIG. 50 is a schematic structural view showing one side of the electrode plate pair having the strip-like lateral positive electric conductive member (109) and the lateral negative electric conductive member (110) being served as the input/output electric conductive terminal having positive polarity, and the other end thereof being served as the input/output electric conductive terminal having negative polarity thereby structuring the single-sided input/output electric conductive interface according to one embodiment of the present invention.
FIG. 51 is a schematic structural view showing one side of the electrode plate pair having the circular sheet-like lateral positive electric conductive member (109) and the lateral negative electric conductive member (110) being served as the input/output electric conductive terminal having positive polarity, and the other end thereof being served as the input/output electric conductive terminal having negative polarity thereby structuring the single-sided input/output electric conductive interface according to one embodiment of the present invention.
FIG. 52 is a schematic structural view showing the electricity charging/discharging cells being disposed inside the housing (120) for forming as a module according to the present invention.
FIG. 53 is a lateral structural view of FIG. 52.
FIG. 54 is a structural unfold view of the electrode plate formed in rolling structure showing the single-sided input/output electric conductive terminal and the lateral positive electric conductive member (109) and the lateral negative electric conductive member (110) of the electrode plate pair being sealed in a single-layer insulation status for forming as the rolling structure, wherein the input/output electric conductive terminal at one side being served as the single-sided input/output electric conductive interface according one embodiment of the present invention.
FIG. 55 is a lateral cross sectional view of FIG. 54 taken along A-A.
FIG. 56 is a lateral cross sectional view of FIG. 54 taken along B-B.
FIG. 57 is a cross sectional view showing the rolling structure shown in FIG. 54 taken along C-C according to the present invention.
FIG. 58 is another cross sectional view showing the rolling structure shown in FIG. 54 taken along C-C according to the present invention.
FIG. 59 is a structural unfold view of the electrode plate formed in the rolling structure showing the input/output electric conductive terminals at two sides of the electrode plate pair being sealed in a single-layer insulation status, and the lateral positive electric conductive member (109) and the lateral negative electric conductive member (110) being structured as the single-sided input/output electric conductive interface according one embodiment of the present invention.
FIG. 60 is a lateral cross sectional view of FIG. 59 taken along A-A.
FIG. 61 is a lateral cross sectional view of FIG. 59 taken along B-B.
FIG. 62 is a cross sectional view showing the rolling structure shown in FIG. 59 taken along C-C according to the present invention.
FIG. 63 is a schematic structural view showing the electricity charging/discharging device with insulation package enclose member having electrode plate pair with multiple-sided electric conductive terminals being provided with a quadrilateral sheet-like lateral positive electric conductive member (109) and a lateral negative electric conductive member (110).
FIG. 64 is a lateral cross sectional view of FIG. 63 taken along A-A.
FIG. 65 is a lateral cross sectional view of FIG. 63 taken along B-B.
FIG. 66 is a schematic structural view showing the electricity charging/discharging device with insulation package enclose member having electrode plate pair with multiple-sided electric conductive terminals being installed with the strip-like lateral positive electric conductive member (109) and the lateral negative electric conductive member (110).
FIG. 67 is a schematic structural view showing the electricity charging/discharging device with insulation package enclose member having electrode plate pair with multiple-sided electric conductive terminals being installed with the circular sheet-like lateral positive electric conductive member (109) and the lateral negative electric conductive member (110).

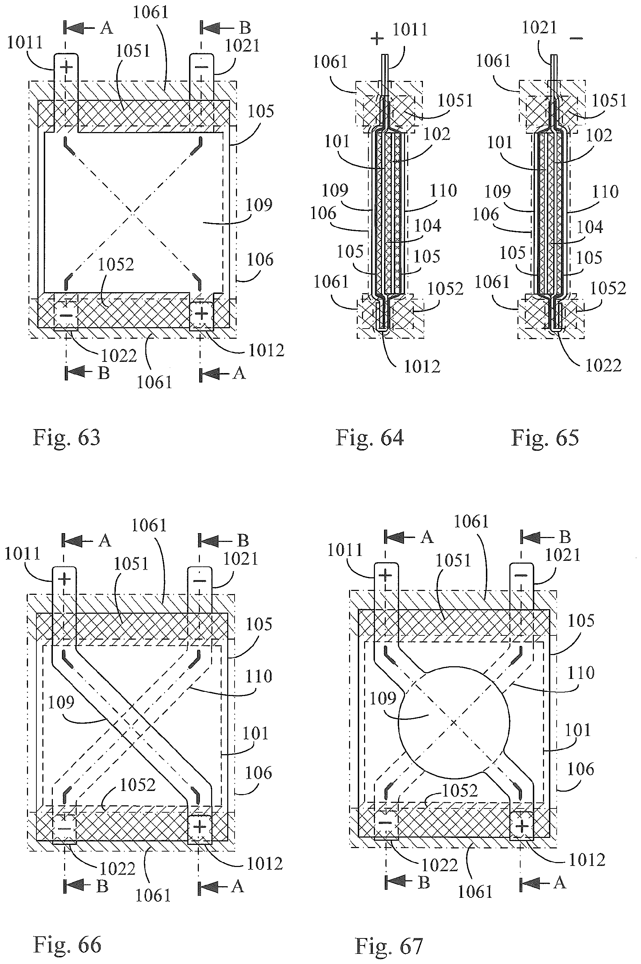

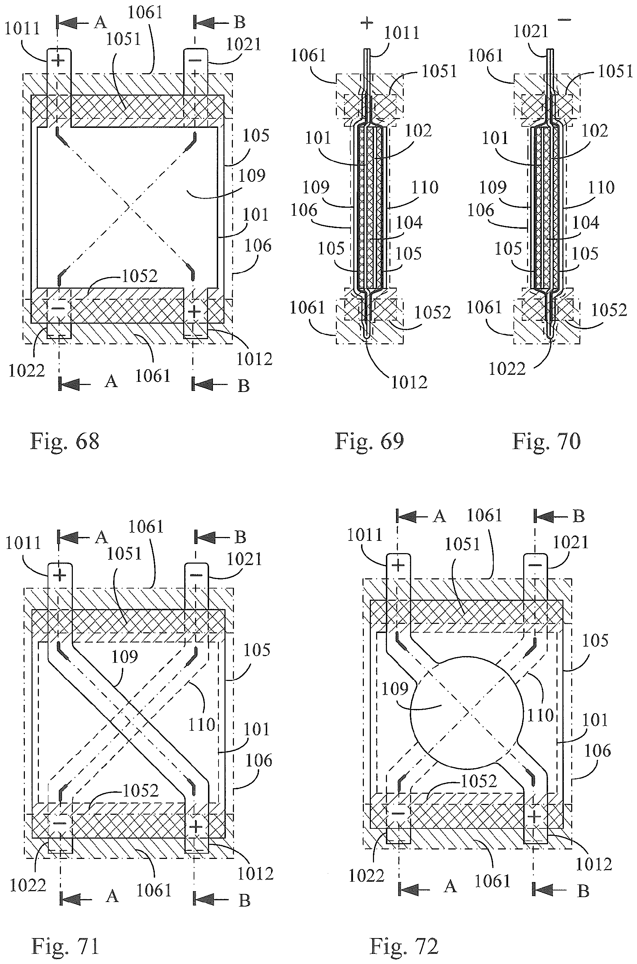

FIG. 68 is a schematic structural view showing one side of the positive electrode plate (101) shown in FIG. 63 being integrally extended with the electric conductive terminal for inputting/outputting electric energy (1012) and the lateral positive electric conductive member (109) then combined with the electric conductive terminal for inputting/outputting electric energy (1011), and one side of the negative electrode plate (102) being integrally extended with the electric conductive terminal for inputting/outputting electric energy (1022) and the lateral negative electric conductive member (110) then combined with the negative electrode plate (102).
FIG. 69 is a lateral cross sectional view of FIG. 68 taken along A-A.
FIG. 70 is a lateral cross sectional view of FIG. 68 taken along B-B.
FIG. 71 is a schematic structural view showing one side of the positive electrode plate (101) shown in FIG. 66 being integrally extended with the electric conductive terminal for inputting/outputting electric energy (1012) and the lateral positive electric conductive member (109) then combined with the electric conductive terminal for inputting/outputting electric energy (1011), and one side of the negative electrode plate (102) being integrally extended with the electric conductive terminal for inputting/outputting electric energy (1022) and the lateral negative electric conductive member (110) then combined with the negative electrode plate (102).
FIG. 72 is a schematic structural view showing one side of the positive electrode plate (101) shown in FIG. 67 being integrally extended with the electric conductive terminal for inputting/outputting electric energy (1012) and the lateral positive electric conductive member (109) then combined with the electric conductive terminal for inputting/outputting electric energy (1011), and one side of the negative electrode plate (102) being integrally extended with the electric conductive terminal for inputting/outputting electric energy (1022) and the lateral negative electric conductive member (110) then combined with the negative electrode plate (102).
FIG. 73 is a schematic structural view showing the lateral positive electric conductive member (109) and the lateral negative electric conductive member (110) at two sides of the electricity charging/discharging device with insulation package enclose member having electrode plate pair with multiple-sided electric conductive terminals shown in FIG. 63 passing openings (1060) of the outer auxiliary insulation package enclosed member (106) at two sides for respectively being served as an input/output electric conductive interface.
FIG. 74 is a lateral cross sectional view of FIG. 73 taken along A-A.
FIG. 75 is a lateral cross sectional view of FIG. 73 taken along B-B.
FIG. 76 is a schematic structural view showing the lateral positive electric conductive member (109) and the lateral negative electric conductive member (110) at two sides of the electricity charging/discharging device with insulation package enclose member having electrode plate pair with multiple-sided electric conductive terminals shown in FIG. 66 passing openings (1060) of the outer auxiliary insulation package enclosed member (106) at two sides for respectively being served as an input/output electric conductive interface.
FIG. 77 is a schematic structural view showing the lateral positive electric conductive member (109) and the lateral negative electric conductive member (110) at two sides of the electricity charging/discharging device with insulation package enclose member having electrode plate pair with multiple-sided electric conductive terminals shown in FIG. 67 passing openings (1060) of the outer auxiliary insulation package enclosed member (106) at two sides for respectively being served as an input/output electric conductive interface.

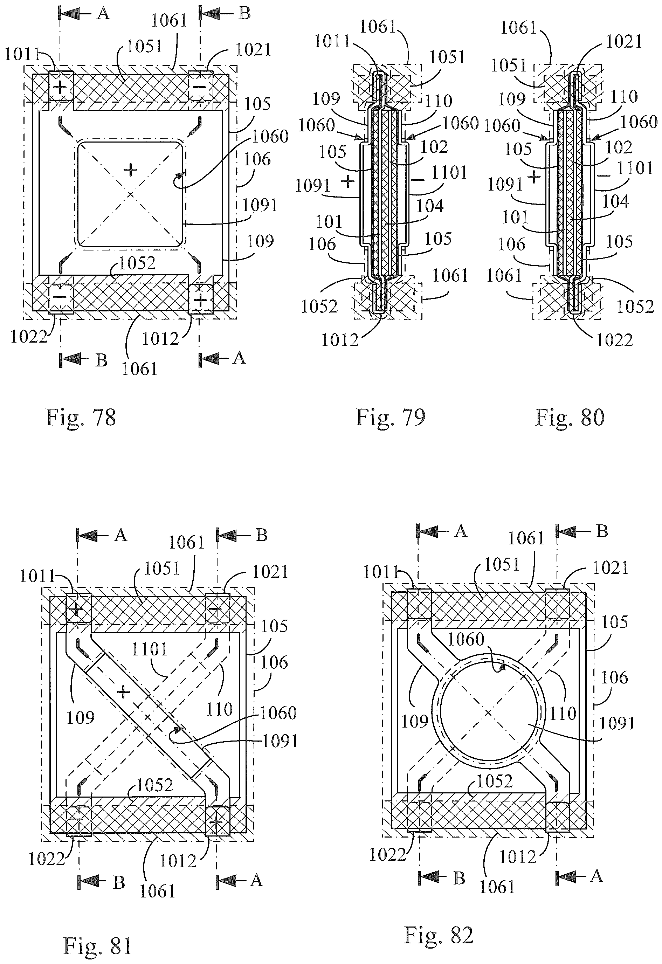

FIG. 78 is a schematic structural view showing the lateral positive electric conductive member (109) being installed with the lateral positive auxiliary electric conductive member (1091) and the lateral negative electric conductive member (110) being installed with the lateral negative auxiliary electric conductive member (1101) at two sides of the electricity charging/discharging device with insulation package enclose member having electrode plate pair with multiple-sided electric conductive terminals shown in FIG. 63 passing openings (1060) of the outer auxiliary insulation package enclosed member (106) at two sides for respectively being served as an input/output electric conductive interface.
FIG. 79 is a lateral cross sectional view of FIG. 78 taken along A-A.
FIG. 80 is a lateral cross sectional view of FIG. 78 taken along B-B.
FIG. 81 is a schematic structural view showing the lateral positive electric conductive member (109) being installed with the lateral positive auxiliary electric conductive member (1091) and the lateral negative electric conductive member (110) being installed with the lateral negative auxiliary electric conductive member (1101) at two sides of the electricity charging/discharging device with insulation package enclose member having electrode plate pair with multiple-sided electric conductive terminals shown in FIG. 66 passing openings (1060) of the outer auxiliary insulation package enclosed member (106) at two sides for respectively being served as an input/output electric conductive interface.
FIG. 82 is a schematic structural view showing the lateral positive electric conductive member (109) being installed with the lateral positive auxiliary electric conductive member (1091) and the lateral negative electric conductive member (110) being installed with the lateral negative auxiliary electric conductive member (1101) at two sides of the electricity charging/discharging device with insulation package enclose member having electrode plate pair with multiple-sided electric conductive terminals shown in FIG. 67 passing openings (1060) of the outer auxiliary insulation package enclosed member (106) at two sides for respectively being served as an input/output electric conductive interface.

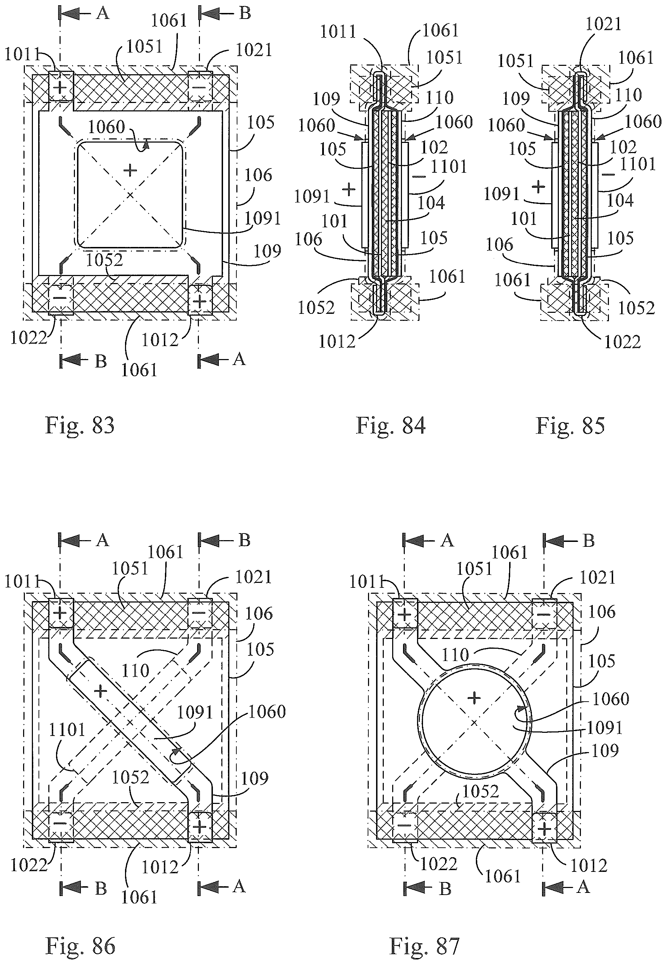

FIG. 83 is a schematic structural view showing the lateral positive electric conductive member (109) having the mid portion being formed with an outwardly-protruded structure and the lateral negative electric conductive member (110) having the mid portion being formed with an outwardly-protruded structure at two sides of the electricity charging/discharging device with insulation package enclose member having electrode plate pair with multiple-sided electric conductive terminals shown in FIG. 63 passing openings (1060) of the outer auxiliary insulation package enclosed member (106) at two sides for respectively being served as an input/output electric conductive interface.
FIG. 84 is a lateral cross sectional view of FIG. 83 taken along A-A.
FIG. 85 is a lateral cross sectional view of FIG. 83 taken along B-B.
FIG. 86 is a schematic structural view showing the lateral positive electric conductive member (109) having the mid portion being formed with an outwardly-protruded structure and the lateral negative electric conductive member (110) having the mid portion being formed with an outwardly-protruded structure at two sides of the electricity charging/discharging device with insulation package enclose member having electrode plate pair with multiple-sided electric conductive terminals shown in FIG. 66 passing openings (1060) of the outer auxiliary insulation package enclosed member (106) at two sides for respectively being served as an input/output electric conductive interface.
FIG. 87 is a schematic structural view showing the lateral positive electric conductive member (109) having the mid portion being formed with an outwardly-protruded structure and the lateral negative electric conductive member (110) having the mid portion being formed with an outwardly-protruded structure at two sides of the electricity charging/discharging device with insulation package enclose member having electrode plate pair with multiple-sided electric conductive terminals shown in FIG. 67 passing openings (1060) of the outer auxiliary insulation package enclosed member (106) at two sides for respectively being served as an input/output electric conductive interface.
FIG. 88 is a schematic structural view showing the electricity charging/discharging cells being disposed inside the housing (120) for forming as a module according to the present invention.
FIG. 89 is a lateral structural view of FIG. 88.
FIG. 90 is a structural develop view showing the single-sided input/output electric conductive terminal and the lateral positive electric conductive member (109) and the lateral negative electric conductive member (110) of the electrode plate pair being sealed as a multi-layer insulation package enclosed member, wherein the input/output electric conductive terminal at one side being served as the single-sided input/output electric conductive interface according to the present invention.
FIG. 91 is a lateral cross sectional view of FIG. 90 taken along A-A.
FIG. 92 is a lateral cross sectional view of FIG. 90 taken along B-B.
FIG. 93 is the first cross sectional view showing the rolling structure shown in FIG. 90 taken along C-C according to the present invention.
FIG. 94 is the second cross sectional view showing the rolling structure shown in FIG. 90 taken along C-C according to the present invention.
FIG. 95 is the third cross sectional view showing the rolling structure shown in FIG. 90 taken along C-C according to the present invention.
FIG. 96 is a schematic structural view showing an embodiment of increasing the number of the positive electrode plate (101) and/or the negative electrode plate (102) at the same time applied to a multiple-layer package structure with specific single-sided input/output and having electrode plate pair with multiple-sided input/output terminals.
FIG. 97 is a lateral cross sectional view of FIG. 96 taken along A-A.
FIG. 98 is a lateral cross sectional view of FIG. 96 taken along B-B.
FIG. 99 is a lateral cross sectional view of FIG. 96 taken along A-A showing the first embodiment of the thickness of part of the electrode plates, the positive electrode plate (101) and/or the negative electrode plate (102), being different.
FIG. 100 is a lateral cross sectional view of FIG. 96 taken along B-B showing the first embodiment of the thickness of part of the electrode plates, the positive electrode plate (101) and/or the negative electrode plate (102), being different.
FIG. 101 is a lateral cross sectional view of FIG. 96 taken along A-A showing the second embodiment of the thickness of part of the electrode plates, the positive electrode plate (101) and/or the negative electrode plate (102), being different.
FIG. 102 is a lateral cross sectional view of FIG. 96 taken along B-B showing the second embodiment of the thickness of part of the electrode plates, the positive electrode plate (101) and/or the negative electrode plate (102), being different.
FIG. 103 is a schematic structural view showing an embodiment of two sides of the positive electrode plate (101) and/or the negative electrode plate (102) being respectively installed with two electric conductive terminals for inputting/outputting electric energy applied to a multiple-layer package structure with specific single-sided input/output and having electrode plate pair with multiple-sided input/output terminals.

### DESCRIPTION OF MAIN COMPONENT SYMBOLS

101 : Positive electrode plate
102 : Negative electrode plate
104 : Separator
105 : Insulation package enclose member
1050 : Folding covering and packing segment
1051 - 1052 : Sealing zone
106 : Outer auxiliary insulation package enclose member
1060 : Opening of the outer auxiliary insulation package enclosed member (106)
1061 : Outer sealing zone
109 : Lateral positive electric conductive member
1091 : Lateral positive auxiliary electric conductive member
110 : Lateral negative electric conductive member
1101 : Lateral negative auxiliary electric conductive member
120 : Housing
1011, 1011', 1012, 1012', 1013, 1013', 1014, 1014', 1021, 1022, 1023, 1024 : Electric conductive terminal

### DETAILED DESCRIPTION OF THE PREFERRED EMBODIMENTS

A electrode plate is a fundamental component for structuring a primary cell or a rechargeable secondary cell or a capacitor or a super capacitor and a fuel cell for outputting electric energy, the configuration thereof is often composed of electrode plates having various geometric shapes, and at least a positive electrode plate and at least a negative electrode plate having the same or different quantity are formed as an electrode plate pair so as to structure an electricity charging/discharging cell, and at least two electricity charging/discharging cells are adopted for being homo-polarity connected in parallel or normal-polarity connected in series or being connected in series then in parallel or connected in parallel then in series for forming as a module applicable for various requirements.

It is well known that the electrode plate applied in the above-mentioned primary cell or rechargeable secondary cell or capacitor or super capacitor and fuel cell for outputting electric energy is mainly formed in a circular or quadrilateral shape or other geometric shapes according to actual needs. The conventional electricity charging/discharging device having electrode plate pair with multiple-sided electric conductive terminals is configured to a housing of groove structure, then the housing is welded or adhered with the end housing; the electric conductive terminals of the electrode plate pair with multiple-sided electric conductive terminals need to pass through the through holes on the housing or the end housing for extending to the external, and the sealing packaging material is additional filled at the through hole thus constituting a sealed packaging structure; there is numerous manufacturing processes and the quality control of the sealing location is difficult, therefore the sealing structure is often deteriorated after long-time use.

The present invention provides an electricity charging/discharging device with insulation package enclose member having electrode plate pair with multiple-sided electric conductive terminals, wherein both the electrode plate pair with multiple-sided electric conductive terminals and the section of the electric conductive terminal adjacent to the connected electrode plate extending from at least two sides thereof to the external for inputting/outputting electric energy are sealed covered by a packing material with insulation property to form a full-closed type electricity charging/discharging device with insulation package enclose member such as Lithium-ion Batteries, for instance Lithium Iron Phosphate (LFP) Battery, Lithium Nickel Manganese Cobalt Oxide (NMC) Battery, and Lithium Polymer Battery, or a supercapacity, so the electrode plate pair is able to output or input electric energy to the exterior through an electric conductive interface formed by at least two-sided electric conductive terminal, or further to be connected in series, or in parallel, or in series then in parallel, or in parallel then in series for forming as an electricity charging/discharging device module of two or more than two electricity charging/discharging devices with insulation package enclose member applicable for various requirements; said electricity charging/discharging device with insulation package enclose member can be used directly or can be further selectively covered with a housing for protection at the external of the electrode plate pair with multiple-sided electric conductive terminals of the insulation package enclose member. A positive electrode plate is adopted for illustration (the same illustration can be applied to a negative electrode plate therefore not provided), as followings:

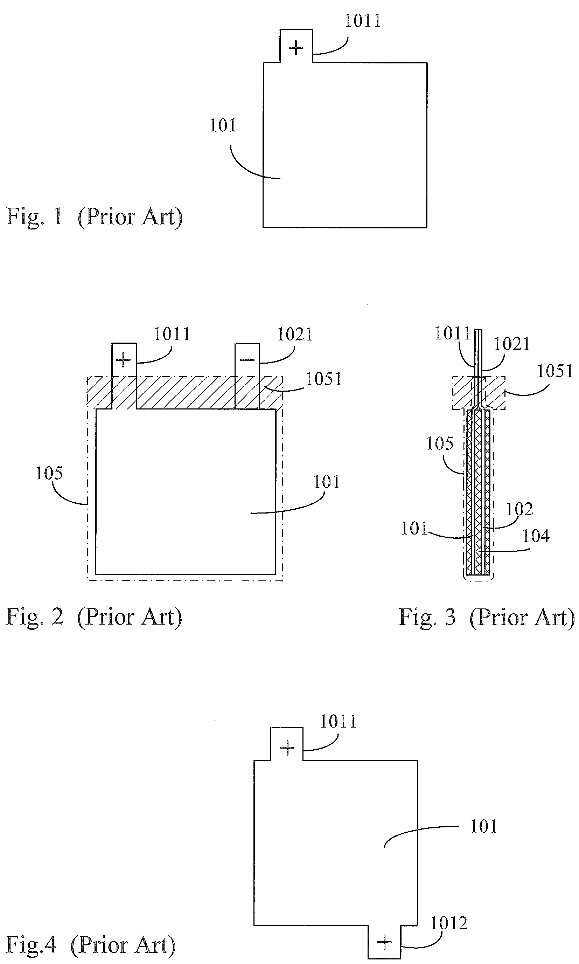

FIG. 1 is a schematic structural view showing a conventional electrode plate having single-sided electric energy transferring terminal.

As shown in FIG. 1, the electrode plate formed in a shape is provided as an example, and the main configuration is that one side of the quadrilateral electrode plate is outwardly extended for forming the electric conductive terminal for inputting/outputting electric energy.

FIG. 2 is a schematic structural view showing a conventional electrode plate pair with single-sided electric energy transferring terminal being formed as an electricity charging/discharging cell.

FIG. 3 is a lateral cross sectional view of FIG. 2.

As shown in FIG. 2 and FIG. 3, the main configuration is that a quadrilateral positive electrode plate (101) having single-sided electric conductive terminal for inputting/outputting electric energy (1011) and a negative electrode plate (102) having single-sided electric conductive terminal for inputting/outputting electric energy (1021) are provided, and an separator is provided between the positive and the negative electrode plates, and the separator is directly installed or clamped at the exterior after an electrolyte solution or an electrolyte material is filled in then is disposed in an insulation package enclose member (105), and the electric conductive terminals for inputting/outputting electric energy (1011), (1012) are outwardly extended through a sealing zone (1051) from another side of the insulation package enclose member (105).

FIG. 4 is the first embodiment showing a conventional electrode plate having multiple-sided electric energy transferring terminals.

As shown in FIG. 4, the main configuration is that end portions defined at two opposite sides of the quadrilateral positive electrode plate (101) are respectively formed with an electric conductive terminal for inputting/outputting electric energy (1011), (1012).

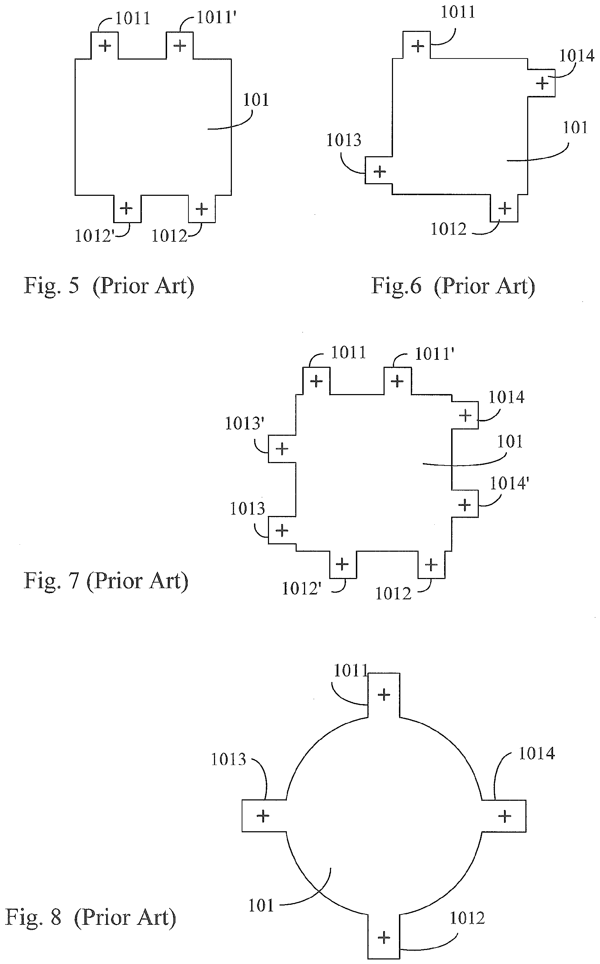

FIG. 5 is the second embodiment showing a conventional electrode plate having multiple-sided electric energy transferring terminals.

As shown in FIG. 5, the main configuration is that two opposite sides of the quadrilateral positive electrode plate (101) are respectively formed with two electric conductive terminals for inputting/outputting electric energy (1011), (1011') and two electric conductive terminals for inputting/outputting electric energy (1012), (1012'), wherein the electric conductive terminals for inputting/outputting electric energy (1011), (1011') formed at one side and the electric conductive terminals for inputting/outputting electric energy (1012), (1012') formed at the opposite side are staggeringly arranged.

FIG. 6 is the third embodiment showing a conventional electrode plate having multiple-sided electric energy transferring terminals.

As shown in FIG. 6, four sides of the quadrilateral positive electrode plate (101) are respectively formed with an electric conductive terminal for inputting/outputting electric energy (1011), (1012), (1013), (1014), wherein the electric conductive terminals for inputting/outputting electric energy arranged at opposite sides are staggeringly arranged.

FIG. 7 is the fourth embodiment showing an electrode plate having multiple-sided electric energy transferring terminals.

As shown in FIG. 7, a first side of the quadrilateral positive electrode plate (101) is formed with two electric conductive terminals for inputting/outputting electric energy (1011), (1011'), a second side thereof is formed with two electric conductive terminals for inputting/outputting electric energy (1012), (1012'), a third side thereof is formed with two electric conductive terminals for inputting/outputting electric energy (1013), (1013') and a fourth side thereof is formed with two electric conductive terminals for inputting/outputting electric energy (1014), (1014'), wherein the electric conductive terminals for inputting/outputting electric energy arranged at opposite sides are staggeringly arranged.

FIG. 8 is an embodiment showing a conventional circular electrode plate having electric energy transferring terminals.

As shown in FIG. 8, the main configuration is that the periphery of the circular electrode plate is radially formed with electric conductive terminals for inputting/outputting electric energy (1011), (1012), (1013), (1014).

Other various geometric shapes have substantially the same feature, therefore no further illustration is provided.The present invention provides an electricity charging/discharging device with insulation package enclose member having electrode plate pair with multiple-sided electric conductive terminals, wherein both the electrode plate pair with multiple-sided electric conductive terminals and the section of the electric conductive terminal adjacent to the connected electrode plate extending from at least two sides thereof to the external for inputting/outputting electric energy are sealed covered by a packing material with insulation property to form a full-closed type electricity charging/discharging device with insulation package enclose member such as Lithium-ion Batteries, for instance Lithium Iron Phosphate (LFP) Battery, Lithium Nickel Manganese Cobalt Oxide (NMC) Battery, and Lithium Polymer Battery, or a supercapacity, so the electrode plate pair is able to output or input electric energy to the exterior through an electric conductive interface formed by at least two-sided electric conductive terminal, or further to be connected in series, or in parallel, or in series then in parallel, or in parallel then in series for forming as an electricity charging/discharging device module of two or more than two electricity charging/discharging devices with insulation package enclose member applicable for various requirements; said electricity charging/discharging device with insulation package enclose member can be used directly or can be further selectively covered with a housing for protection at the external of the electrode plate pair with multiple-sided electric conductive terminals of the insulation package enclose member.

Various applicable structures of the present application are described as following:
I. The present invention further utilizes a single-layer insulation package enclose member to cover the electrode plate pair with multiple-sided electric conductive terminals for structuring a structural embodiment of an electricity charging/discharging device, thereby allowing the electrode plate pair with multiple-sided electric conductive terminals to be structured as an input/output electric conductive interface through input/output electric conductive terminals having positive and negative polarities for the purpose of transferring electric energy to the exterior; because the shapes and types of electrode plates can be varied according to actual needs, a quadrilateral electrode plate is adopted herein for illustration, as followings:

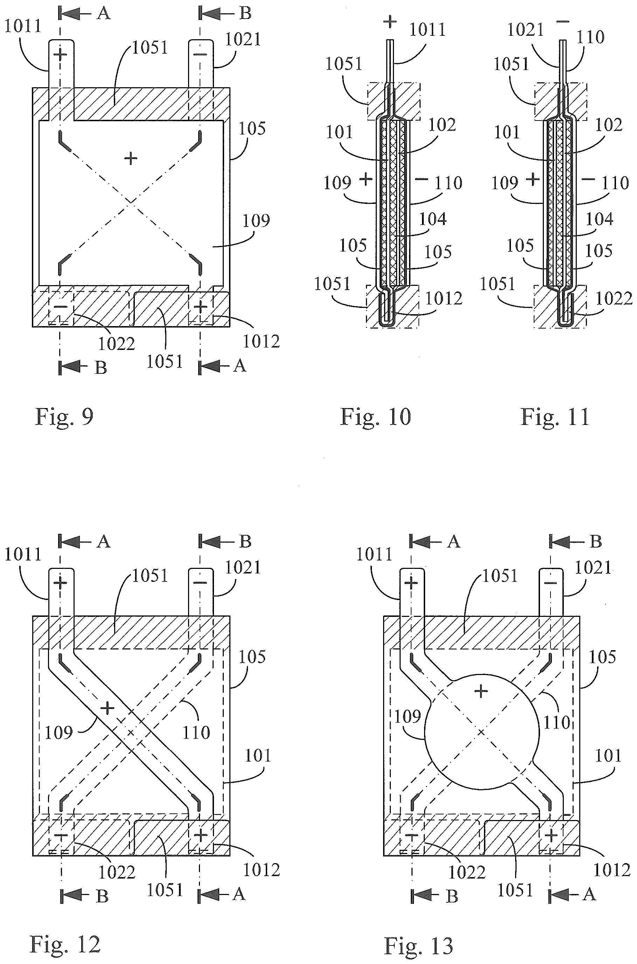

FIG. 9 is a schematic structural view showing the input/output electric conductive terminals having positive and negative polarities at one side of the electrode plate pair and a quadrilateral sheet-like lateral positive electric conductive member (109) and a lateral negative electric conductive member (110) at two lateral sides being structured as a multiple input/output electric conductive interface according to one embodiment of the present invention.

FIG. 10 is a lateral cross sectional view of FIG. 9 taken along A-A.

FIG. 11 is a lateral cross sectional view of FIG. 9 taken along B-B.

As shown in FIG. 9, FIG. 10 and FIG. 11, mainly consists:
-- positive electrode plate (101): composed of one or more than one of sheet-like or film-like quadrilateral positive electrode plates, opposite sides of the positive electrode plate are respectively formed with at least an electric conductive terminal for inputting/outputting electric energy, and the surface of the positive electrode plate is provided with an electrochemical material;
-- negative electrode plate (102): composed of one or more than one of sheet-like or film-like quadrilateral negative electrode plates, opposite sides of the negative electrode plate are respectively formed with at least an electric conductive terminal for inputting/outputting electric energy, and the surface of the negative electrode plate is provided with an electrochemical material;
-- separator (104): formed by a thin film having micro-porous or porous property and mainly made of PP or PE, disposed between the positive and the negative electrode plates, and the main function thereof is to isolate the positive and the negative electrode plates for preventing the self-discharge of the cell and the short circuit between the two polarities, and installed between electrode plates having different polarities and installed at a lateral side of the electrode plate according to actual needs;

Opposite sides of the quadrilateral electrode plate are respectively and outwardly extended with one or more input/output terminals for transferring electric energy, and the separator is disposed between one or more of the positive electrode plates and one or more of the negative electrode plates having the same or different quantity, and the electrode plates having different polarities are staggeringly stacked for forming as an electrode plate pair; and when a plurality of the electrode plates having the same polarity are provided, the input/output terminals having the same polarity for transferring electric energy and formed at the same side of each of the electrode plates having the same polarity are conductive electrically connected in parallel.
-- insulation package enclosed member (105): made of a soft or rigid package material having insulation property such as an AL packing foil, the periphery of the insulation package enclosed member (105) is formed in a sealed hollow sleeve status, and openings formed at two sides allow the positive electrode plate (101) and the negative electrode plate (102) having the separator (104) clamped in between to be disposed, one opening of the insulation package enclosed member (105) allows the electric conductive terminal for inputting/outputting electric energy (1011) and the electric conductive terminal for inputting/outputting electric energy (1021) to be exposed, and the insulation package enclosed member (105) is processed for forming a sealing zone (1051) so as to seal the portions of the electric conductive terminal for inputting/outputting electric energy (1011) and the electric conductive terminal for inputting/outputting electric energy (1021) defined close to the electrode plate, and the distal ends of the electric conductive terminal for inputting/outputting electric energy (1011) and the electric conductive terminal for inputting/outputting electric energy (1021) are exposed at the same side, an electrolyte solution or an electrolyte material is filled in the insulation package enclosed member (105), the other opening allows the electric conductive terminal for inputting/outputting electric energy (1012) and the electric conductive terminal for inputting/outputting electric energy (1022) to be exposed, and the insulation package enclose member (105) is processed for forming a sealing zone (1052) so as to seal the portions of the electric conductive terminal for inputting/outputting electric energy (1012) and the electric conductive terminal for inputting/outputting electric energy (1022) defined close to the electrode plate, and the distal ends of the electric conductive terminal for inputting/outputting electric energy (1012) and the electric conductive terminal for inputting/outputting electric energy (1022) are exposed and inwardly bent along the exterior of the sealing zone (1052) of the insulation package enclosed member (105) thereby being respectively connected with the lateral positive electric conductive member (109) and the lateral negative electric conductive member (110), wherein the electric conductive terminal for inputting/outputting electric energy (1012) is conductive electrically connected to one end of the lateral positive electric conductive member (109), and the other end of the lateral positive electric conductive member (109) is conductive electrically connected to the electric conductive terminal for inputting/outputting electric energy (1011) thereby forming a parallel connection with positive polarity; the electric conductive terminal for inputting/outputting electric energy (1022) is electrically connected to one end of the lateral negative electric conductive member (110), and the other end of the lateral negative electric conductive member (110) is conductive electrically connected to the electric conductive terminal for inputting/outputting electric energy (1021) thereby forming a parallel conductive electrical connection with negative polarity, so an electricity charging/discharging cell is structured;
-- lateral positive electric conductive member (109): made of an electric conductive material and disposed at one side of the insulation package enclosed member (105);
-- lateral negative electric conductive member (110): made of an electric conductive material and disposed at another side of the insulation package enclosed member (105);

The above-mentioned lateral positive electric conductive member (109) and the lateral negative electric conductive member (110) include being composed of an electric conductive member formed in a quadrilateral sheet-like, or strip-like or circular sheet-like status, and the top and the bottom ends thereof are respectively extended with an electric conductive strip, the electric conductive strip respectively extended from the top and the bottom ends of the lateral positive electric conductive member (109) are then respectively and conductive electrically connected to the electric conductive terminal for inputting/outputting electric energy (1011) and the electric conductive terminal for inputting/outputting electric energy (1012) having positive polarity, and the electric conductive strip respectively extended from the top and the bottom ends of the lateral negative electric conductive member (110) are then respectively and conductive electrically connected to the electric conductive terminal for inputting/outputting electric energy (1021) and the electric conductive terminal for inputting/outputting electric energy (1022) having negative polarity.

FIG. 12 is a schematic structural view showing the input/output electric conductive terminals having positive and negative polarities at one side of the electrode plate pair and the strip-like lateral positive electric conductive member (109) and the lateral negative electric conductive member (110) at two lateral sides are structured as the multiple input/output electric conductive interface according to one embodiment of the present invention.

The lateral cross sectional view of FIG. 12 taken along A-A is the same as FIG. 10.

The lateral cross sectional view of FIG. 12 taken along B-B is the same as FIG. 11.

As shown in FIG. 12, FIG. 10 and FIG. 11, the input/output electric conductive terminals having positive and negative polarities at one side of the electrode plate pair and the strip-like lateral positive electric conductive member (109) and the lateral negative electric conductive member (110) at two lateral sides are structured as the multiple input/output electric conductive interface.

FIG. 13 is a schematic structural view showing the input/output electric conductive terminals having positive and negative polarities at one side of the electrode plate pair and the circular sheet-like lateral positive electric conductive member (109) and the lateral negative electric conductive member (110) at two lateral sides are structured as the multiple input/output electric conductive interface according to one embodiment of the present invention.

The lateral cross sectional view of FIG. 13 taken along A-A is the same as FIG. 10.

The lateral cross sectional view of FIG. 13 taken along B-B is the same as FIG. 11.

As shown in FIG. 13, FIG. 10 and FIG. 11, the input/output electric conductive terminals having positive and negative polarities at one side of the electrode plate pair and the circular sheet-like lateral positive electric conductive member (109) and the lateral negative electric conductive member (110) at two lateral sides are structured as the multiple input/output electric conductive interface according to one embodiment of the present invention.

FIG. 14 is a schematic structural view showing the positive electrode plate (101) and the lateral positive electric conductive member (109), and the negative electrode plate (102) and the lateral negative electric conductive member (110) being integrally formed, and the input/output electric conductive terminals having positive and negative polarities at one side of the electrode plate pair and the quadrilateral sheet-like lateral positive electric conductive member (109) and the lateral negative electric conductive member (110) at two lateral sides being structured as the multiple input/output electric conductive interface according to one embodiment of the present invention.

FIG. 15 is a lateral cross sectional view of FIG. 14 taken along A-A.

FIG. 16 is a lateral cross sectional view of FIG. 14 taken along B-B.

As shown in FIG. 14, FIG. 15 and FIG. 16, the positive electrode plate (101) and the lateral positive electric conductive member (109), and the negative electrode plate (102) and the lateral negative electric conductive member (110) are integrally formed, and the input/output electric conductive terminals having positive and negative polarities at one side of the electrode plate pair and the quadrilateral sheet-like lateral positive electric conductive member (109) and the lateral negative electric conductive member (110) at two lateral sides are structured as the multiple input/output electric conductive interface.

FIG. 17 is a schematic structural view showing the positive electrode plate (101) and the lateral positive electric conductive member (109), and the negative electrode plate (102) and the lateral negative electric conductive member (110) being integrally formed, and the input/output electric conductive terminals having positive and negative polarities at one side of the electrode plate pair and the strip-like lateral positive electric conductive member (109) and the lateral negative electric conductive member (110) at two lateral sides being structured as the multiple input/output electric conductive interface according to one embodiment of the present invention.

The lateral cross sectional view of FIG. 17 taken along A-A is the same as FIG. 15.

The lateral cross sectional view of FIG. 17 taken along B-B is the same as FIG. 16.

As shown in FIG. 17, FIG. 15 and FIG. 16, the positive electrode plate (101) and the lateral positive electric conductive member (109), and the negative electrode plate (102) and the lateral negative electric conductive member (110) are integrally formed, and the input/output electric conductive terminals having positive and negative polarities at one side of the electrode plate pair and the strip-like lateral positive electric conductive member (109) and the lateral negative electric conductive member (110) at two lateral sides are structured as the multiple input/output electric conductive interface.

FIG. 18 is a schematic structural view showing the positive electrode plate (101) and the lateral positive electric conductive member (109), and the negative electrode plate (102) and the lateral negative electric conductive member (110) being integrally formed, and the input/output electric conductive terminals having positive and negative polarities at one side of the electrode plate pair and the circular sheet-like lateral positive electric conductive member (109) and the lateral negative electric conductive member (110) at two lateral sides being structured as the multiple input/output electric conductive interface according to one embodiment of the present invention.

The lateral cross sectional view of FIG. 18 taken along A-A is the same as FIG. 15.

The lateral cross sectional view of FIG. 18 taken along B-B is the same as FIG. 16.

As shown in FIG. 18, FIG. 15 and FIG. 16, the positive electrode plate (101) and the lateral positive electric conductive member (109), and the negative electrode plate (102) and the lateral negative electric conductive member (110) are integrally formed, and the input/output electric conductive terminals having positive and negative polarities at one side of the electrode plate pair and the circular sheet-like lateral positive electric conductive member (109) and the lateral negative electric conductive member (110) at two lateral sides are structured as the multiple input/output electric conductive interface.

FIG. 19 is a schematic structural view showing the positive electrode plate (101) and the lateral positive electric conductive member (109), and the negative electrode plate (102) and the lateral negative electric conductive member (110) being integrally formed, and the input/output electric conductive terminals having at least one positive polarity input/output electric conductive terminal and at least one negative polarity input/output electric conductive terminal at two sides of the electrode plate pair and the quadrilateral sheet-like lateral positive electric conductive member (109) and the lateral negative electric conductive member (110) at two lateral sides being structured as the multiple input/output electric conductive interface according to one embodiment of the present invention.

FIG. 20 is a lateral cross sectional view of FIG. 19 taken along A-A.

FIG. 21 is a lateral cross sectional view of FIG. 19 taken along B-B.

As shown in FIG. 19, FIG. 20 and FIG. 21, the positive electrode plate (101) and the lateral positive electric conductive member (109), and the negative electrode plate (102) and the lateral negative electric conductive member (110) are integrally formed, and the input/output electric conductive terminals having at least one positive polarity input/output electric conductive terminal and at least one negative polarity input/output electric conductive at two sides of the electrode plate pair and the quadrilateral sheet-like lateral positive electric conductive member (109) and the lateral negative electric conductive member (110) at two lateral sides are structured as the multiple input/output electric conductive interface.

FIG. 22 is a schematic structural view showing the positive electrode plate (101) and the lateral positive electric conductive member (109), and the negative electrode plate (102) and the lateral negative electric conductive member (110) being integrally formed, and the input/output electric conductive terminals having at least one positive polarity input/output electric conductive terminal and at least one negative polarity input/output electric conductive terminal at two sides of the electrode plate pair and the strip-like lateral positive electric conductive member (109) and the lateral negative electric conductive member (110) at two lateral sides being structured as the multiple input/output electric conductive interface according to one embodiment of the present invention.

The lateral cross sectional view of FIG. 22 taken along A-A is the same as FIG. 20.

The lateral cross sectional view of FIG. 22 taken along B-B is the same as FIG. 21.

As shown in FIG. 22, FIG. 20 and FIG. 21, the positive electrode plate (101) and the lateral positive electric conductive member (109), and the negative electrode plate (102) and the lateral negative electric conductive member (110) are integrally formed, and the input/output electric conductive terminals having at least one positive polarity input/output electric conductive terminal and at least one negative polarity input/output electric conductive terminal at two sides of the electrode plate pair and the strip-like lateral positive electric conductive member (109) and the lateral negative electric conductive member (110) at two lateral sides are structured as the multiple input/output electric conductive interface.

FIG. 23 is a schematic structural view showing the positive electrode plate (101) and the lateral positive electric conductive member (109), and the negative electrode plate (102) and the lateral negative electric conductive member (110) being integrally formed, and the input/output electric conductive terminals having at least one positive polarity input/output electric conductive terminal and at least one negative polarity input/output electric conductive terminal at two sides of the electrode plate pair and the circular sheet-like lateral positive electric conductive member (109) and the lateral negative electric conductive member (110) at two lateral sides being structured as the multiple input/output electric conductive interface according to one embodiment of the present invention.

The lateral cross sectional view of FIG. 23 taken along A-A is the same as FIG. 20.

The lateral cross sectional view of FIG. 23 taken along B-B is the same as FIG. 21.

As shown in FIG. 23, FIG. 20 and FIG. 21, the positive electrode plate (101) and the lateral positive electric conductive member (109), and the negative electrode plate (102) and the lateral negative electric conductive member (110) are integrally formed, and the input/output electric conductive terminals having at least one positive polarity input/output electric conductive terminal and at least one negative polarity input/output electric conductive terminal at two sides of the electrode plate pair and the circular sheet-like lateral positive electric conductive member (109) and the lateral negative electric conductive member (110) at two lateral sides are structured as the multiple input/output electric conductive interface.

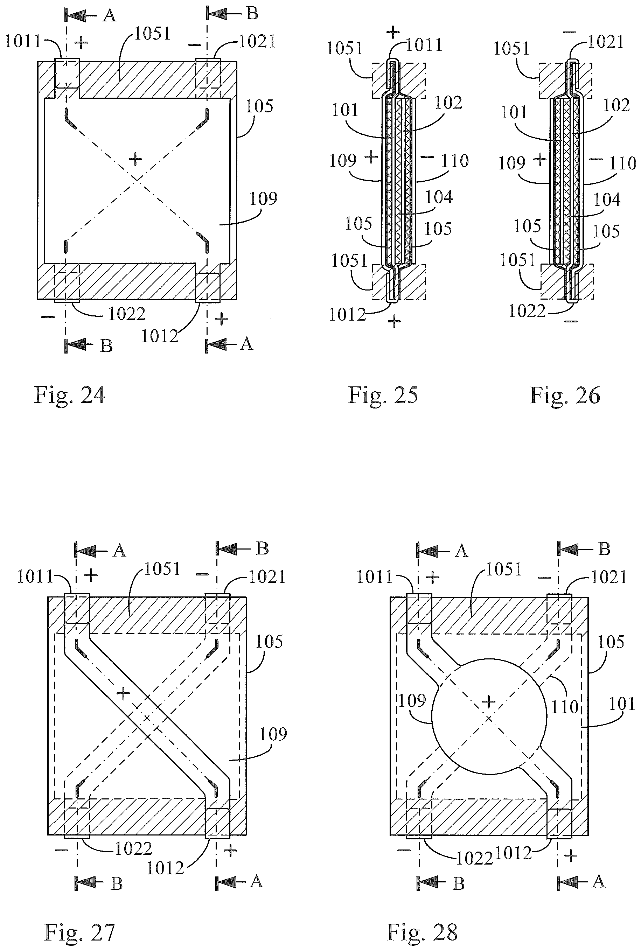

FIG. 24 is a schematic structural view showing the input/output electric conductive terminals having positive and negative polarities and respectively formed by a folded structure at two sides of the electrode plate pair and the quadrilateral sheet-like lateral positive electric conductive member (109) and the lateral negative electric conductive member (110) at two lateral sides being structured as the multiple input/output electric conductive interface according to one embodiment of the present invention.

FIG. 25 is a lateral cross sectional view of FIG. 24 taken along A-A.

FIG. 26 is a lateral cross sectional view of FIG. 24 taken along B-B.

As shown in FIG. 24, FIG. 25 and FIG. 26, the input/output electric conductive terminals having positive and negative polarities and respectively formed by a folded structure at two sides of the electrode plate pair and the quadrilateral sheet-like lateral positive electric conductive member (109) and the lateral negative electric conductive member (110) at two lateral sides are structured as the multiple input/output electric conductive interface.

FIG. 27 is a schematic structural view showing the input/output electric conductive terminals having positive and negative polarities respectively formed by a folded structure at two sides of the electrode plate pair and the strip-like lateral positive electric conductive member (109) and the lateral negative electric conductive member (110) at two lateral sides being structured as the multiple input/output electric conductive interface according to one embodiment of the present invention.

The lateral cross sectional view of FIG. 27 taken along A-A is the same as FIG. 25.

The lateral cross sectional view of FIG. 27 taken along B-B is the same as FIG. 26.

As shown in FIG. 27, FIG. 25 and FIG. 26, the input/output electric conductive terminals having positive and negative polarities respectively formed by a folded structure at two sides of the electrode plate pair and the strip-like lateral positive electric conductive member (109) and the lateral negative electric conductive member (110) at two lateral sides are structured as the multiple input/output electric conductive interface.

FIG. 28 is a schematic structural view showing the input/output electric conductive terminals having positive and negative polarities respectively formed by a folded structure at two sides of the electrode plate pair and the circular sheet-like lateral positive electric conductive member (109) and the lateral negative electric conductive member (110) at two lateral sides being structured as the multiple input/output electric conductive interface according to one embodiment of the present invention.

The lateral cross sectional view of FIG. 28 taken along A-A is the same as FIG. 25.

The lateral cross sectional view of FIG. 28 taken along B-B is the same as FIG. 26.

As shown in FIG. 28, FIG. 25 and FIG. 26, the input/output electric conductive terminals having positive and negative polarities respectively formed by a folded structure at two sides of the electrode plate pair and the circular sheet-like lateral positive electric conductive member (109) and the lateral negative electric conductive member (110) at two lateral sides are structured as the multiple input/output electric conductive interface.

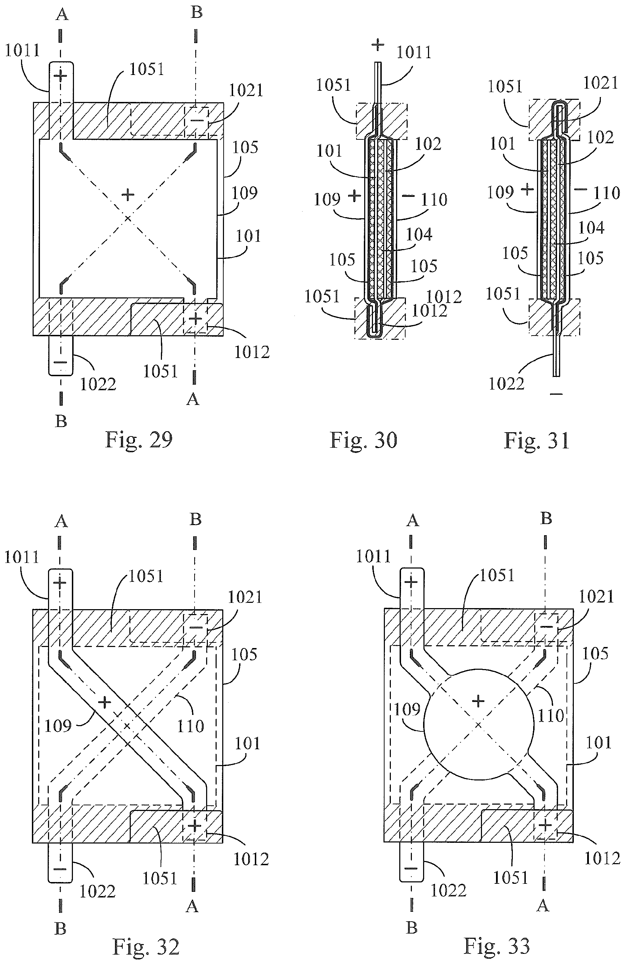

FIG. 29 is a schematic structural view showing an input/output electric conductive terminal having different polarity and respectively provided at two ends defined at the same side of the electrode plate pair and the quadrilateral sheet-like lateral positive electric conductive member (109) and the lateral negative electric conductive member (110) at two lateral sides of the electrode plate pair being structured as the multiple input/output electric conductive interface according to one embodiment of the present invention.

FIG. 30 is a lateral cross sectional view of FIG. 29 taken along A-A.

FIG. 31 is a lateral cross sectional view of FIG. 29 taken along B-B.

As shown in FIG. 29, FIG. 30 and FIG. 31, an input/output electric conductive terminal having different polarity and respectively provided at two ends defined at the same side of the electrode plate pair and the quadrilateral sheet-like lateral positive electric conductive member (109) and the lateral negative electric conductive member (110) at two lateral sides of the electrode plate pair are structured as the multiple input/output electric conductive interface.

FIG. 32 is a schematic structural view showing an input/output electric conductive terminal having different polarity and respectively provided at two ends defined at the same side of the electrode plate pair and the strip-like lateral positive electric conductive member (109) and the lateral negative electric conductive member (110) at two lateral sides of the electrode plate pair being structured as the multiple input/output electric conductive interface according to one embodiment of the present invention.

The lateral cross sectional view of FIG. 32 taken along A-A is the same as FIG. 30.

The lateral cross sectional view of FIG. 32 taken along B-B is the same as FIG. 31.

As shown in FIG. 32, FIG. 30 and FIG. 31, an input/output electric conductive terminal having different polarity and respectively provided at two ends defined at the same side of the electrode plate pair and the strip-like lateral positive electric conductive member (109) and the lateral negative electric conductive member (110) at two lateral sides of the electrode plate pair are structured as the multiple input/output electric conductive interface.

FIG. 33 is a schematic structural view showing an input/output electric conductive terminal having different polarity and respectively provided at two ends defined at the same side of the electrode plate pair and the circular sheet-like lateral positive electric conductive member (109) and the lateral negative electric conductive member (110) at two lateral sides of the electrode plate pair being structured as the multiple input/output electric conductive interface according to one embodiment of the present invention.

The lateral cross sectional view of FIG. 33 taken along A-A is the same as FIG. 30.

The lateral cross sectional view of FIG. 33 taken along B-B is the same as FIG. 31.

As shown in FIG. 33, FIG. 20 and FIG. 31, an input/output electric conductive terminal having different polarity and respectively provided at two ends defined at the same side of the electrode plate pair and the circular sheet-like lateral positive electric conductive member (109) and the lateral negative electric conductive member (110) at two lateral sides of the electrode plate pair are structured as the multiple input/output electric conductive interface.

According to the above-mentioned embodiments, the lateral positive electric conductive member (109) and the lateral negative electric conductive member (110) at two sides of the electricity charging/discharging device with insulation package enclose member having electrode plate pair with multiple-sided electric conductive terminals can be further served as an input/output electric conductive interface for being individually used, or connected in series, in parallel or in series and parallel, the configuration includes:
-- exposed electric conductive surfaces of one lateral positive electric conductive member (109) and one opposite lateral negative electric conductive member (110) are directly formed as the input/output electric conductive interface for being individually used, or connected in series, in parallel or in series and parallel; or
-- the exposed surface of the lateral positive electric conductive member (109) is provided with a lateral positive auxiliary electric conductive member (1091), and the exposed surface of the lateral negative electric conductive member (110) is provided with a lateral negative auxiliary electric conductive member (1101) for structuring the input/output electric conductive interface for being individually used, or connected in series, in parallel or in series and parallel; or
-- one or more locations defined at the mid portion of the lateral positive electric conductive member (109) are formed with an outwardly-protruded structure and one or more locations defined at the mid portion of the lateral negative electric conductive member (110) are formed with an outwardly-protruded structure, thereby structuring the input/output electric conductive interface for being individually used, or connected in series, in parallel or in series and parallel.

After the plural electricity charging/discharging cells are structured, the electricity charging/discharging cells can be individually operated and combined through electric conductive members, at least one or more of the electricity charging/discharging cells are disposed in the interior of one or more of the housings so as to be collected for forming as a modularized structure which is connected through the electric conductive members or the input/output electric conductive interface of each electricity charging/discharging device for transferring electric energy.

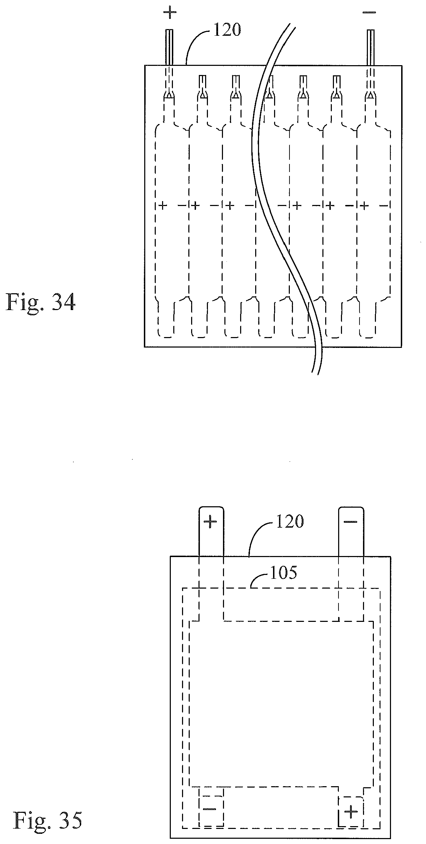

FIG. 34 is a schematic structural view showing the electricity charging/discharging cells being disposed inside the housing (120) for forming as a module according to the present invention.

FIG. 35 is a lateral structural view of FIG. 34.

As shown in FIG. 34 and FIG. 35, at least one or more of the electricity charging/discharging cells are disposed inside the housing (120), wherein:
-- housing (120): made of a soft flexible material or a rigid material such as stainless steel.

According to the present invention, the electricity charging/discharging device with insulation package enclose member having electrode plate pair with multiple-sided electric conductive terminals can be further formed as a rolling structure, illustrated as followings:

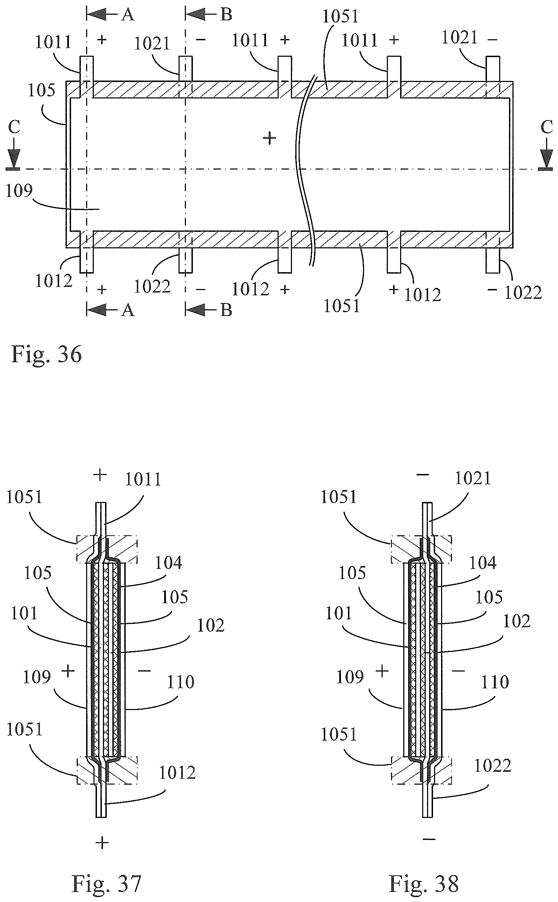

FIG. 36 is a structural develop view showing the multiple input/output electric conductive interface being formed as a rolling structure according to one embodiment of the present invention.

FIG. 37 is a lateral cross sectional view of FIG. 36 taken along A-A.

FIG. 38 is a lateral cross sectional view of FIG. 36 taken along B-B.

As shown in FIG. 36, FIG. 37 and FIG. 38, the positive electrode plate (101) and the negative electrode plate (102) of the input/output electric conductive terminal extended towards two sides and the separator (104) are formed as a rolling structure, and the distal terminals and/or the lateral positive electric conductive member (109) and the lateral negative electric conductive member (110) at two lateral sides being structured as the multiple input/output electric conductive interface.

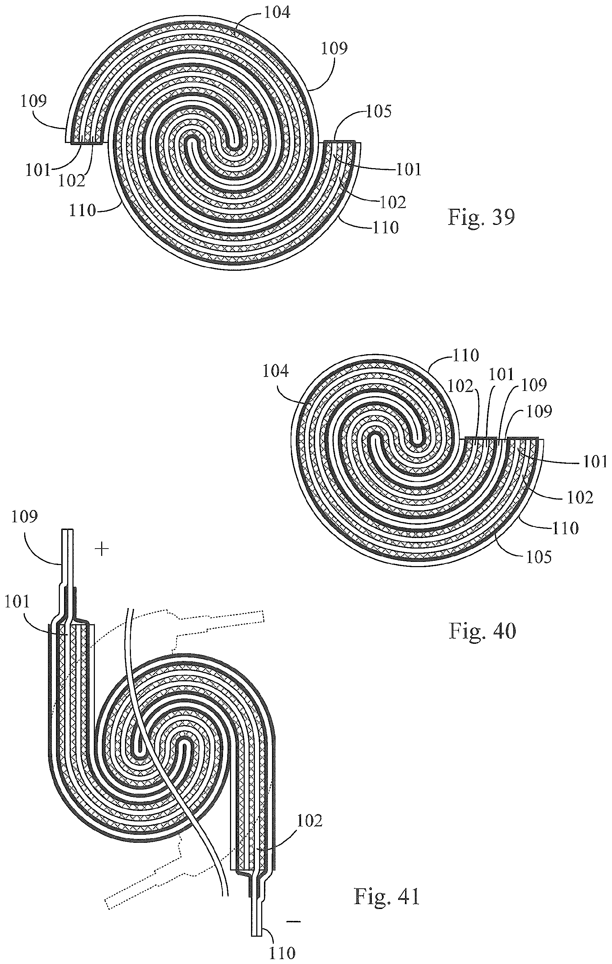

FIG. 39 is the first cross sectional view showing the rolling structure shown in FIG. 36 taken along C-C according to the present invention.

As shown in FIG. 39, at least the lateral positive electric conductive member (109) and the lateral negative electric conductive member (110) at two lateral sides and at least an input/output electric conductive terminal at one distal end defined at one side are individually-arranged for structuring as the multiple input/output electric conductive interface.

FIG. 40 is the second cross sectional view showing the rolling structure shown in FIG. 36 taken along C-C according to the present invention.

As shown in FIG. 40, the single-layer insulation package enclosed member (105) is served for insulation package at two lateral sides and the input/output electric conductive terminals at two sides are adjacently-arranged for structuring as the multiple input/output electric conductive interface.

FIG. 41 is the third cross sectional view showing the rolling structure shown in FIG. 36 taken along C-C according to the present invention.

As shown in FIG. 41, the lateral positive electric conductive member (109) and the lateral negative electric conductive member (110) arranged at two lateral sides and the input/output electric conductive terminals at two sides are structures as the multiple input/output electric conductive interface.
II. The present invention further discloses a structural embodimentwhich folds and then parallel connects the electric conductive terminals at different sides of the electrode plate pair with multiple-sided electric conductive terminals, so the electrode plate pair with multiple-sided electric conductive terminals after being covered and packaged is able to be structured as aninput/output electric conductive interface through single input/output electric conductive terminal having a single positive polarity and a single negative polarity for transferring electric energy to the exterior; because the shapes and types of electrode plates can be varied according to actual needs, a quadrilateral electrode plate is adopted herein for illustration, as followings:

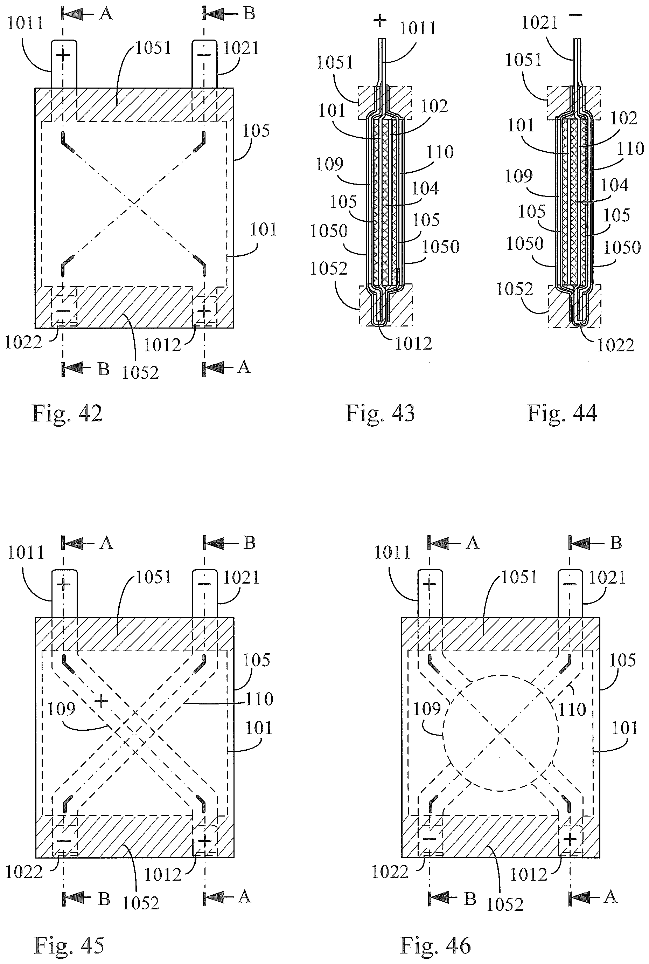

FIG. 42 is a schematic structural view showing one side of the electrode plate pair having a quadrilateral sheet-like lateral positive electric conductive member (109) and a lateral negative electric conductive member (110) being provided with the input/output electric conductive terminal having positive and negative polarity for being structured as a single-sided input/output electric conductive interface according to one embodiment of the present invention.

FIG. 43 is a lateral cross sectional view of FIG. 42 taken along A-A.

FIG. 44 is a lateral cross sectional view of FIG. 42 taken along B-B.

As shown in FIG. 42, FIG. 43 and FIG. 44, mainly consists:
-- positive electrode plate (101): composed of one or more than one of sheet-like or film-like quadrilateral positive electrode plates, opposite sides of the positive electrode plate are respectively formed with at least an electric conductive terminal for inputting/outputting electric energy, and the surface of the positive electrode plate is provided with an electrochemical material;
-- negative electrode plate (102): composed of one or more than one of sheet-like or film-like quadrilateral negative electrode plates, opposite sides of the negative electrode plate are respectively formed with at least an electric conductive terminal for inputting/outputting electric energy, and the surface of the negative electrode plate is provided with an electrochemical material;
-- separator (104): formed by a thin film having micro-porous or porous property and mainly made of PP or PE, disposed between the positive and the negative electrode plates, and the main function thereof is to isolate the positive and the negative electrode plates for preventing the self-discharge of the cell and the short circuit between the two polarities, and installed between electrode plates having different polarities and installed at a lateral side of the electrode plate according to actual needs;

Opposite sides of the quadrilateral electrode plate are respectively and outwardly extended with one or more input/output terminals for transferring electric energy, and the separator is disposed between one or more of the positive electrode plates and one or more of the negative electrode plates having the same or different quantity, and the electrode plates having different polarities are staggeringly stacked for forming as an electrode plate pair; and when a plurality of the electrode plates having the same polarity are provided, the input/output terminals having the same polarity for transferring electric energy and formed at the same side of each of the electrode plates having the same polarity are conductive electrically connected in parallel;
-- insulation package enclosed member (105): made of a soft or rigid package material having insulation property such as an AL packing foil, the periphery of the insulation package enclosed member (105) is formed in a sealed hollow sleeve status, and openings formed at two sides allow the positive electrode plate (101) and the negative electrode plate (102) having the separator (104) clamped in between to be disposed, one opening of the insulation package enclosed member (105) allows the electric conductive terminal for inputting/outputting electric energy (1011) and the electric conductive terminal for inputting/outputting electric energy (1021) to be exposed, and the insulation package enclosed member (105) is processed for forming a sealing zone (1051) so as to seal the portions of the electric conductive terminal for inputting/outputting electric energy (1011) and the electric conductive terminal for inputting/outputting electric energy (1021) defined close to the electrode plate, and the distal ends of the electric conductive terminal for inputting/outputting electric energy (1011) and the electric conductive terminal for inputting/outputting electric energy (1021) are exposed at the same side for being structured as the single-sided input/output electric conductive interface; the interior of the insulation package enclosed member (105) allows an electrolyte solution or an electrolyte material to be filled in; the lateral positive electric conductive member (109) is disposed at one side defined at the exterior of the insulation package enclosed member (105) and electrically connected between the electric conductive terminal for inputting/outputting electric energy (1011) and the electric conductive terminal for inputting/outputting electric energy (1012), the lateral negative electric conductive member (110) is disposed at another side defined at the exterior of the insulation package enclosed member (105) and electrically connected between the electric conductive terminal for inputting/outputting electric energy (1021) and the electric conductive terminal for inputting/outputting electric energy (1022); another end of the insulation package enclosed member (105) is formed with two folding covering and packaging segments (1050) for allowing the electric conductive terminal for inputting/outputting electric energy (1012), the electric conductive terminal for inputting/outputting electric energy (1022) at the other end and the insulation package enclosed member (105) to be processed for forming a sealing zone (1052) so as to seal the electric conductive terminal for inputting/outputting electric energy (1012) and the electric conductive terminal for inputting/outputting electric energy (1022), then the two folding covering and packaging segments (1050) are respectively and upwardly folded along two sides defined at the exterior of the sealing zone (1052) of the insulation package enclosed member (105) for respectively sealing and covering the lateral positive electric conductive member (109) and the lateral negative electric conductive member (110) and further upwardly extended for being sealed in the sealing zone (1051) with the portions of the electric conductive terminal for inputting/outputting electric energy (1011) and the electric conductive terminal for inputting/outputting electric energy (1021) defined close to the electrode plate, wherein the electric conductive terminal for inputting/outputting electric energy (1012) is electrically connected to one end of the lateral positive electric conductive member (109), and then through the other end of the lateral positive electric conductive member (109) electrically connected to the electric conductive terminal for inputting/outputting electric energy (1011) thereby electrical conductively forming a parallel connection with positive polarity; the electric conductive terminal for inputting/outputting electric energy (1022) is electrically connected to one end of the lateral negative electric conductive member (110), and then through the other end of the lateral negative electric conductive member (110) electrically connected to the electric conductive terminal for inputting/outputting electric energy (1021) thereby electrical conductively forming a parallel connection with negative polarity, so the electricity charging/discharging device with insulation package enclose member having electrode plate pair with multiple-sided electric conductive terminals is structured, and the exposed distal portions of the electric conductive terminal for inputting/outputting electric energy (1011) and the electric conductive terminal for inputting/outputting electric energy (1021) are structured as the single-sided input/output electric conductive interface;
-- lateral positive electric conductive member (109): made of an electric conductive material and disposed at one side of the insulation package enclosed member (105);
-- lateral negative electric conductive member (110): made of an electric conductive material and disposed at another side of the insulation package enclosed member (105);

The above-mentioned lateral positive electric conductive member (109) and the lateral negative electric conductive member (110) include being composed of an electric conductive member formed in a quadrilateral sheet-like, or strip-like or circular sheet-like status, and the top and the bottom ends thereof are respectively extended with an electric conductive strip, the electric conductive strips respectively extended from the top and the bottom ends of the lateral positive electric conductive member (109) are then respectively and electrically connected in parallel with the electric conductive terminal for inputting/outputting electric energy (1011) and the electric conductive terminal for inputting/outputting electric energy (1012) having positive polarity, and the electric conductive strips respectively extended from the top and the bottom ends of the lateral negative electric conductive member (110) are then respectively and electrically connected in parallel with the electric conductive terminal for inputting/outputting electric energy (1021) and the electric conductive terminal for inputting/outputting electric energy (1022) having negative polarity, and the exposed portions of the electric conductive terminal for inputting/outputting electric energy (1011) and the electric conductive terminal for inputting/outputting electric energy (1021) are structured as the single-sided input/output electric conductive interface;

FIG. 45 is a schematic structural view showing one side of the electrode plate pair having the strip-like lateral positive electric conductive member (109) and the lateral negative electric conductive member (110) being provided with the input/output electric conductive terminals having positive and negative polarity for being structured as the single-sided input/output electric conductive interface according to one embodiment of the present invention.

The lateral cross sectional view of FIG. 45 taken along A-A is the same as FIG. 43.

The lateral cross sectional view of FIG. 45 taken along B-B is the same as FIG. 44.

As shown in FIG. 45, FIG. 43 and FIG. 44, one side of the electrode plate pair having the strip-like lateral positive electric conductive member (109) and the lateral negative electric conductive member (110) are provided with the input/output electric conductive terminals having positive and negative polarity for being structured as the single-sided input/output electric conductive interface.

FIG. 46 is a schematic structural view showing one side of the electrode plate pair having the circular sheet-like lateral positive electric conductive member (109) and the lateral negative electric conductive member (110) being provided with the input/output electric conductive terminals having positive and negative polarity for being structured as the single-sided input/output electric conductive interface according to one embodiment of the present invention.

The lateral cross sectional view of FIG. 46 taken along A-A is the same as FIG. 43.

The lateral cross sectional view of FIG. 46 taken along B-B is the same as FIG. 44.

As shown in FIG. 46, FIG. 43 and FIG. 44, one side of the electrode plate pair having the circular sheet-like lateral positive electric conductive member (109) and the lateral negative electric conductive member (110) are provided with the input/output electric conductive terminals having positive and negative polarity for being structured as the single-sided input/output electric conductive interface.

According to the above-mentioned embodiments, the lateral positive electric conductive member (109) and the lateral negative electric conductive member (110) at two sides of the electricity charging/discharging device with insulation package enclose member having electrode plate pair with multiple-sided electric conductive terminals can be further served as an input/output electric conductive interface for being individually used, or connected in series, in parallel or in series and parallel, the configuration includes:
-- exposed electric conductive surfaces of a lateral positive electric conductive member (109) and an opposite lateral negative electric conductive member (110) are directly formed as the input/output electric conductive interface for being individually used, or connected in series, in parallel or in series and parallel; or
-- the exposed surface of the lateral positive electric conductive member (109) is provided with a lateral positive auxiliary electric conductive member (1091), and the exposed surface of the lateral negative electric conductive member (110) is provided with a lateral negative auxiliary electric conductive member (1101), thereby structuring the input/output electric conductive interface for being individually used, or connected in series, in parallel or in series and parallel; or
-- one or more locations defined at the mid portion of the lateral positive electric conductive member (109) are formed with an outwardly-protruded structure and one or more locations defined at the mid portion of the lateral negative electric conductive member (110) are formed with an outwardly-protruded structure, thereby structuring the input/output electric conductive interface for being individually used, or connected in series, in parallel or in series and parallel.

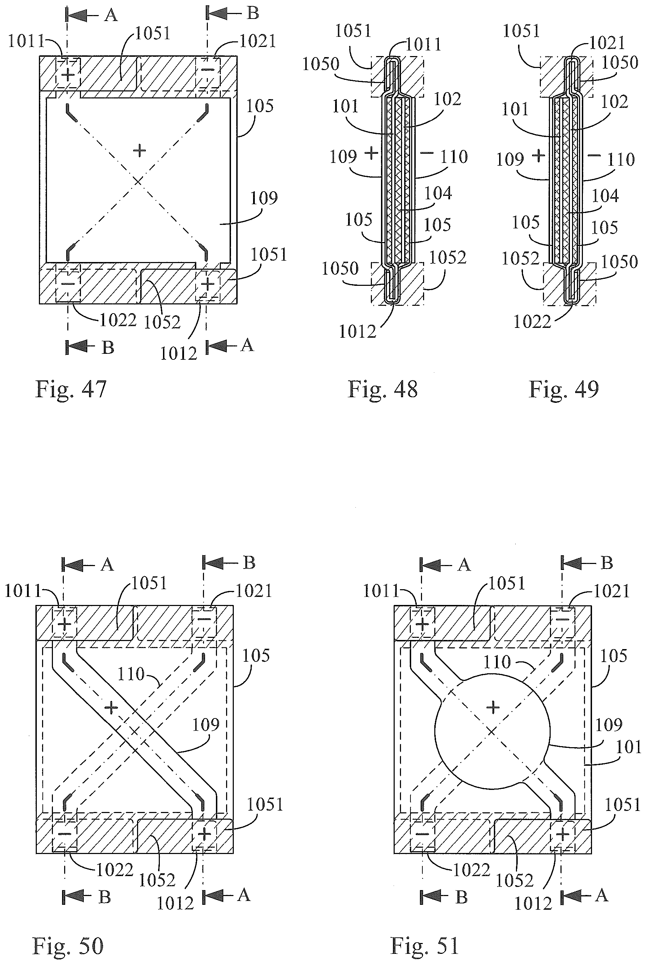

FIG. 47 is a schematic structural view showing one side of the electrode plate pair having the quadrilateral sheet-like lateral positive electric conductive member (109) and the lateral negative electric conductive member (110) being served as the input/output electric conductive terminal having positive polarity, and the other side thereof being served as the input/output electric conductive terminal having negative polarity thereby structuring the single-sided input/output electric conductive interface according to one embodiment of the present invention.

FIG. 48 is a lateral cross sectional view of FIG. 47 taken along A-A.

FIG. 49 is a lateral cross sectional view of FIG. 47 taken along B-B.

As shown in FIG. 47, FIG. 48 and FIG. 49, one side of the electrode plate pair having the quadrilateral sheet-like lateral positive electric conductive member (109) and the lateral negative electric conductive member (110) is served as the input/output electric conductive terminal having positive polarity, and the other side thereof is served as the input/output electric conductive terminal having negative polarity thereby structuring the single-sided input/output electric conductive interface; mainly consists:
-- positive electrode plate (101): composed of one or more than one of sheet-like or film-like quadrilateral positive electrode plates, each of the opposite sides of the positive electrode plate is respectively formed with at least an electric conductive terminal for inputting/outputting electric energy, and the surface of the positive electrode plate is provided with an electrochemical material;
-- negative electrode plate (102): composed of one or more than one of sheet-like or film-like quadrilateral negative electrode plates, each of the opposite sides of the negative electrode plate is respectively formed with at least an electric conductive terminal for inputting/outputting electric energy, and the surface of the negative electrode plate is provided with an electrochemical material;
-- separator (104): formed by a thin film having micro-porous or porous property and mainly made of PP or PE, disposed between the positive and the negative electrode plates, and the main function thereof is to isolate the positive and the negative electrode plates for preventing the self-discharge of the cell and the short circuit between two polarities, and installed between electrode plates having different polarities and installed at a lateral side of the electrode plate according to actual needs;

Opposite sides of the quadrilateral electrode plate are respectively and outwardly extended with one or more input/output terminals for transferring electric energy, and the separator is disposed between one or more of the positive electrode plates and one or more of the negative electrode plates having the same or different quantity, and the electrode plates having different polarities are staggeringly stacked for forming as an electrode plate pair; and when a plurality of the electrode plates having the same polarity are provided, the input/output terminals having the same polarity for transferring electric energy and formed at the same side of each of the electrode plates having the same polarity are electrically connected in parallel;
-- insulation package enclosed member (105): made of a soft or rigid package material having insulation property such as an AL packing foil, the periphery of the insulation package enclosed member (105) is formed in a sealed hollow sleeve status, and openings formed at two sides allow the positive electrode plate (101) and the negative electrode plate (102) having the separator (104) clamped in between to be disposed, one distal end of the insulation package enclosed member (105) is formed with a folding covering and packing segment (1050); through the folding covering and packaging segment (1050) upwardly protruded from the insulation package enclosed member (105) which serves as the inner insulation for the lateral negative electric conductive member (110), and the upward extending segment of the insulation package enclosed member (105) which covers the inner insulation of the lateral positive electric conductive member (109) are processed for forming the sealing zone (1051), the electric conducting connection portion of the electric conductive terminal for inputting/outputting electric energy (1011) and the upward extending segment of the lateral positive electric conductive member (109) is enabled to be sealed; and through the folding covering and packaging segment (1050) upwardly protruded from the insulation package enclosed member (105) which serves as the inner insulation for the lateral positive electric conductive member (109), and the upward extending segment of the insulation package enclosed member (105) which covers the inner insulation of the lateral negative electric conductive member (110) are processed for forming the sealing zone (1051), the electric conducting connection portion of the electric conductive terminal for inputting/outputting electric energy (1021) and the upward extending segment of the lateral negative electric conductive member (110) is enabled to be sealed; the interior of the insulation package enclosed member (105) allows an electrolyte solution or an electrolyte material to be filled in; and through the folding covering and packaging segment (1050) downwardly protruded from the insulation package enclosed member (105) which serves as the inner insulation for the lateral negative electric conductive member (110), and the downward extending segment of the insulation package enclosed member (105) which covers the inner insulation of the lateral positive electric conductive member (109) are processed for forming the sealing zone (1052), the electric conducting connection portion of the electric conductive terminal for inputting/outputting electric energy (1012) and the downward extending segment of the lateral positive electric conductive member (109) is enabled to be sealed; and through the folding covering and packaging segment (1050) downwardly protruded from the insulation package enclose member (105) which serves as the inner insulation for the lateral positive electric conductive member (109), and the downward extending segment of the insulation package enclose member (105) which covers the inner insulation of the lateral negative electric conductive member (110) are processed for forming the sealing zone (1052), the electric conducting connection portion of the electric conductive terminal for inputting/outputting electric energy (1022) and the downward extending segment of the lateral negative electric conductive member (110) is enabled to be sealed, wherein the electric conductive terminal for inputting/outputting electric energy (1012) is electrically connected to one end of the lateral positive electric conductive member (109), and then through the other end of the lateral positive electric conductive member (109) electrically connected to the electric conductive terminal for inputting/outputting electric energy (1011), thereby electrical conductively forming a parallel connection with positive polarity; the electric conductive terminal for inputting/outputting electric energy (1022) is electrically connected to one end of the lateral negative electric conductive member (110), and then through the other end of the lateral negative electric conductive member (110) electrically connected to the electric conductive terminal for inputting/outputting electric energy (1021), thereby electrical conductively forming a parallel connection with negative polarity, and the exposed electric conductive surface of the lateral positive electric conductive member (109) and the exposed electric conductive surface of the lateral negative electric conductive member (110) are structured for forming as the single-sided input/output electric conductive interface;
-- lateral positive electric conductive member (109): made of an electric conductive material and served as the input/output electric conductive terminal having positive polarity;
-- lateral negative electric conductive member (110): made of an electric conductive material and served as the input/output electric conductive terminal having negative polarity;

The above-mentioned lateral positive electric conductive member (109) and the lateral negative electric conductive member (110) include being composed of an electric conductive member formed in a quadrilateral sheet-like, or strip-like or circular sheet-like status, and the top and the bottom ends thereof are respectively extended with an electric conductive strip, and the electric conductive strips respectively extended from the top and the bottom ends of the lateral positive electric conductive member (109) are then respectively and electrically connected in parallel with the electric conductive terminal for inputting/outputting electric energy (1011) and the electric conductive terminal for inputting/outputting electric energy (1012) having positive polarity, and the electric conductive strips respectively extended from the top and the bottom ends of the lateral negative electric conductive member (110) are then respectively and electrically connected to the electric conductive terminal for inputting/outputting electric energy (1021) and the electric conductive terminal for inputting/outputting electric energy (1022) having negative polarity, and the exposed electric conductive surface of the lateral positive electric conductive member (109) and the exposed electric conductive surface of the lateral negative electric conductive member (110) are structured for forming as the single-sided input/output electric conductive interface.

FIG 50 is a schematic structural view showing one side of the electrode plate pair having the strip-like lateral positive electric conductive member (109) and the lateral negative electric conductive member (110) being served as the input/output electric conductive terminal having positive polarity, and the other end thereof being served as the input/output electric conductive terminal having negative polarity thereby structuring the single-sided input/output electric conductive interface according to one embodiment of the present invention.

The lateral cross sectional view of FIG 50 taken along A-A is the same as FIG 48.

The lateral cross sectional view of FIG 50 taken along B-B is the same as FIG 49.

As shown in FIG 50, FIG 48 and FIG 49, one side of the electrode plate pair having the strip-like lateral positive electric conductive member (109) and the lateral negative electric conductive member (110) is served as the input/output electric conductive terminal having positive polarity, and the other end thereof is served as the input/output electric conductive terminal having negative polarity thereby structuring the single-sided input/output electric conductive interface.

FIG 51 is a schematic structural view showing one side of the electrode plate pair having the circular sheet-like lateral positive electric conductive member (109) and the lateral negative electric conductive member (110) being served as the input/output electric conductive terminal having positive polarity, and the other end thereof being served as the input/output electric conductive terminal having negative polarity thereby structuring the single-sided input/output electric conductive interface according to one embodiment of the present invention.

The lateral cross sectional view of FIG 51 taken along A-A is the same as FIG 48.

The lateral cross sectional view of FIG 51 taken along B-B is the same as FIG 49.

As shown in FIG 51, FIG 48 and FIG 49, one side of the electrode plate pair having the circular sheet-like lateral positive electric conductive member (109) and the lateral negative electric conductive member (110) is served as the input/output electric conductive terminal having positive polarity, and the other end thereof is served as the input/output electric conductive terminal having negative polarity thereby structuring the single-sided input/output electric conductive interface according to one embodiment of the present invention.

After the plural electricity charging/discharging cells are structured, the electricity charging/discharging cells can be individually operated and combined through electric conductive members, at least one or more of the electricity charging/discharging cells are disposed in the interior of one or more of the housings so as to be collected for forming as a modularized structure which is connected through the electric conductive members or the input/output electric conductive interface of each electricity charging/discharging device for transferring electric energy;

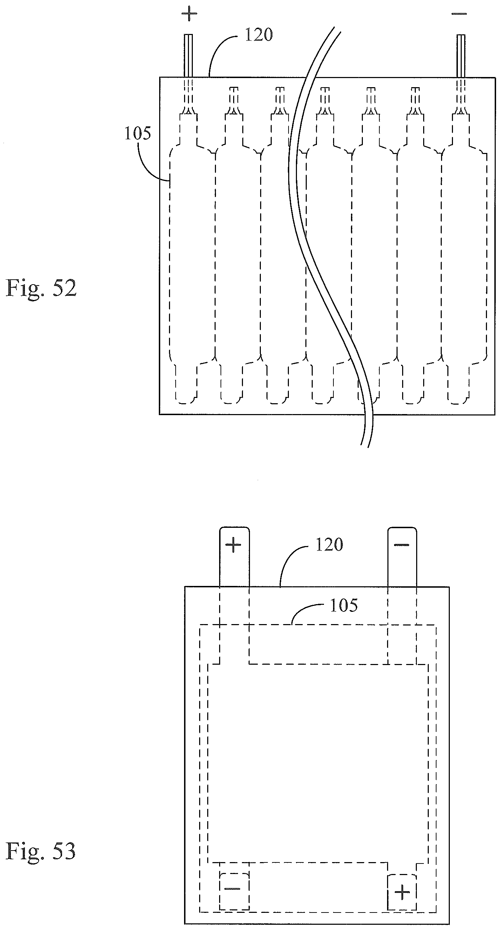

FIG. 52 is a schematic structural view showing the electricity charging/discharging cells being disposed inside the housing (120) for forming as a module according to the present invention.

FIG. 53 is a lateral structural view of FIG. 52.

As shown in FIG. 52 and FIG. 53, at least one or more of the electricity charging/discharging cells are disposed inside the housing (120), wherein:
-- housing (120): made of a soft flexible material or a rigid material such as stainless steel.

According to the present invention, the electricity charging/discharging device with insulation package enclose member having electrode plate pair with multiple-sided electric conductive terminals can be further formed as a rolling structure, illustrated as followings:

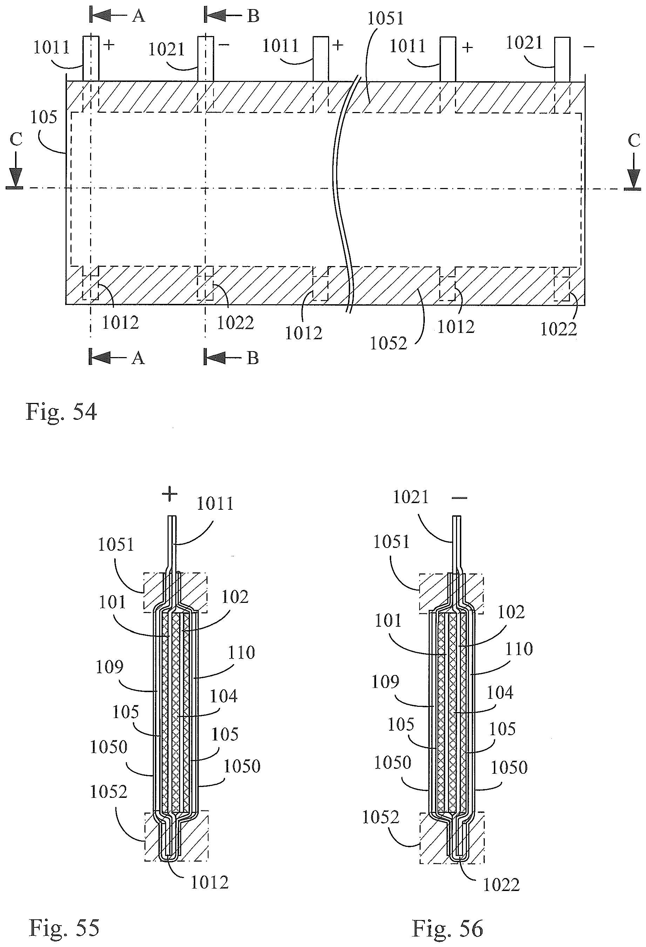

FIG. 54 is a structural unfold view of the electrode plate formed in rolling structure showing the single-sided input/output electric conductive terminal and the lateral positive electric conductive member (109) and the lateral negative electric conductive member (110) of the electrode plate pair being sealed in a single-layer insulation status for forming as the rolling structure, wherein the input/output electric conductive terminal at one side being served as the single-sided input/output electric conductive interface according one embodiment of the present invention.

FIG. 55 is a lateral cross sectional view of FIG. 54 taken along A-A.

FIG. 56 is a lateral cross sectional view of FIG. 54 taken along B-B.

As shown in FIG. 54, FIG. 55 and FIG. 56, the single-sided input/output electric conductive terminal and the lateral positive electric conductive member (109) and the lateral negative electric conductive member (110) of the electrode plate pair of the electricity charging/discharging device with insulation package enclose member having electrode plate pair with multiple-sided electric conductive terminals is sealed in a single-layer insulation status for forming as the rolling structure, and the input/output electric conductive terminal at one side is served as the single-sided input/output electric conductive interface.

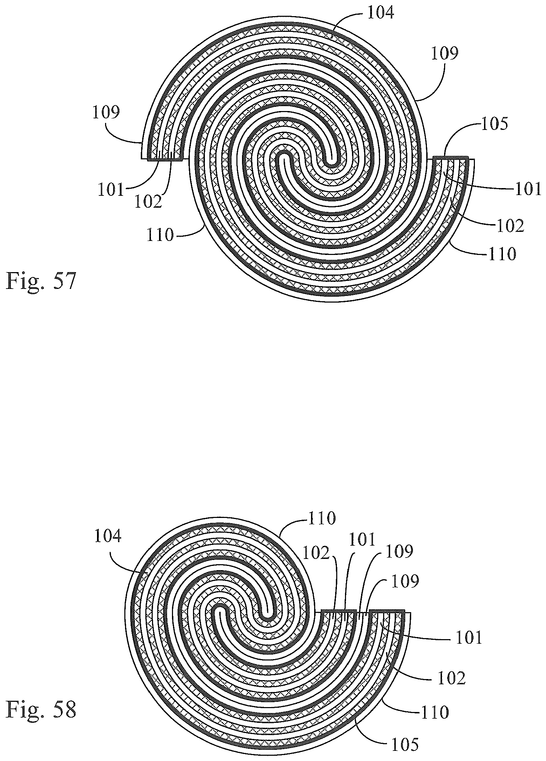

FIG. 57 is a cross sectional view showing the rolling structure shown in FIG. 54 taken along C-C according to the present invention.

As shown in FIG. 57, for allowing the lateral positive electric conductive member (109), the lateral negative electric conducive member (110) and the input/output electric conductive terminal at one side to be sealed in a single-layer insulation status, the positive electrode plate (101), the negative electrode plate (102), the separator (104), the lateral positive electric conductive member (109) and the lateral negative electric conductive member (110) are formed as the rolling structure, and one or more of the single-sided individually-arranged input/output electric conductive terminals having positive polarity and one or more of the input/output electric conductive terminals having negative polarity are individually-arranged for structuring as the single-sided input/output electric conductive interface.

FIG. 58 is another cross sectional view showing the rolling structure shown in FIG. 54 taken along C-C according to the present invention.

As shown in FIG. 58, for allowing the lateral positive electric conductive member (109), the lateral negative electric conducive member (110) and the input/output electric conductive terminal at one side to be sealed in a single-layer insulation status, the positive electrode plate (101), the negative electrode plate (102), the insulation member (104), the lateral positive electric conductive member (109) and the lateral negative electric conducive member (110) are formed as the rolling structure, and one or more of the single-sided adjacently-arranged positive input/output electric conductive terminals and one or more of the negative input/output electric conductive terminals are adjacently-arranged and homo-polarity connected in parallel for structuring as the single-sided input/output electric conductive interface.

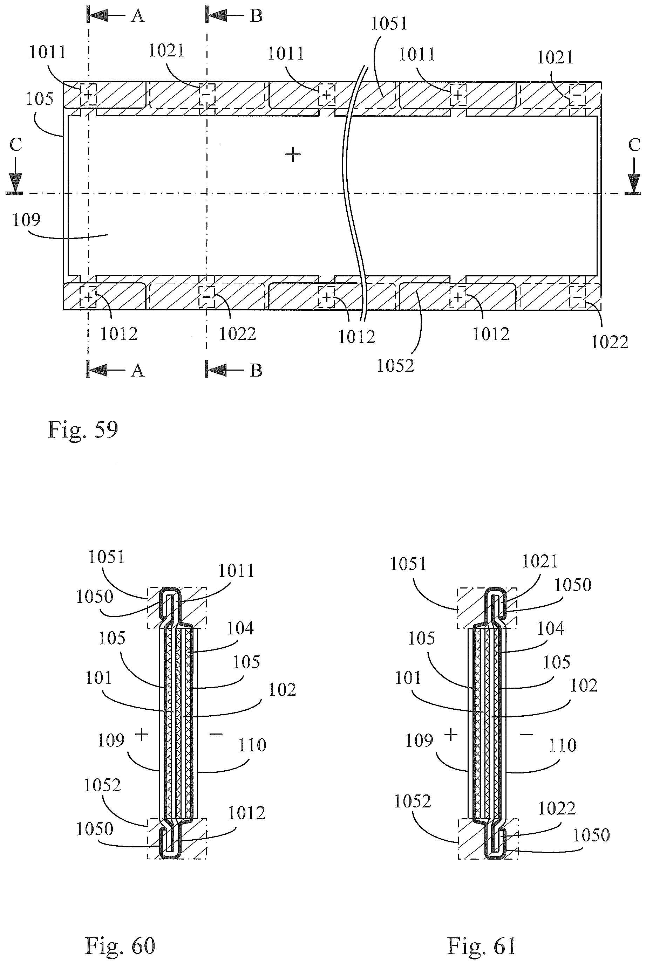

FIG. 59 is a structural unfold view of the electrode plate formed in the rolling structure showing the input/output electric conductive terminals at two sides of the electrode plate pair being sealed in a single-layer insulation status, and the lateral positive electric conductive member (109) and the lateral negative electric conductive member (110) being structured as the single-sided input/output electric conductive interface according one embodiment of the present invention.

FIG. 60 is a lateral cross sectional view of FIG. 59 taken along A-A.

FIG. 61 is a lateral cross sectional view of FIG. 59 taken along B-B.

As shown in FIG. 59, FIG. 60 and FIG. 61, the input/output electric conductive terminals at two sides of the electrode plate pair of the electricity charging/discharging device with insulation package enclose member having electrode plate pair with multiple-sided electric conductive terminals are sealed in a single-layer insulation status, and the lateral positive electric conductive member (109) and the lateral negative electric conductive member (110) are structured as the single-sided input/output electric conductive interface for forming the rolling structure.

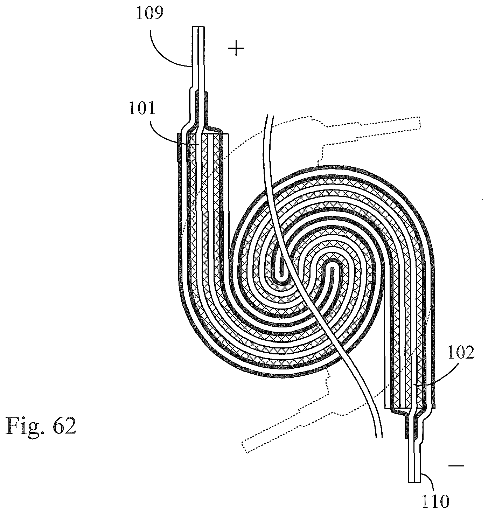

FIG. 62 is a cross sectional view showing the rolling structure shown in FIG. 59 taken along C-C according to the present invention.

As shown in FIG. 62, for allowing the input/output electric conductive terminals at two sides of the electrode plate pair to be sealed in a single-layer insulation status, the lateral positive electric conductive member (109) and the lateral negative electric conducive member (110) at two sides are structured as the single-sided input/output electric conductive interface.
III. The present invention provides a structural embodiment which is further installed an outer auxiliary insulation package enclosed member (106) to an electricity charging/discharging device structured by the electrode plate pair with multiple-sided electric conductive terminals having insulation package enclose member, and is converted into a multiple-layered package structure with single-sided input/output electric conductive interface, thereby allowing the electrode plate pair with multiple-sided electric conductive terminals to be structured as an input/output electric conductive interface through single-sided input/output electric conductive terminals having positive and negative polarities for the purpose of transferring electric energy to the exterior; because the shapes and types of electrode plates can be varied according to actual needs, a quadrilateral electrode plate is adopted herein for illustration, as followings:

FIG. 63 is a schematic structural view showing the electricity charging/discharging device with insulation package enclose member having electrode plate pair with multiple-sided electric conductive terminals being provided with a quadrilateral sheet-like lateral positive electric conductive member (109) and a lateral negative electric conductive member (110).

FIG. 64 is a lateral cross sectional view of FIG. 63 taken along A-A.

FIG. 65 is a lateral cross sectional view of FIG. 63 taken along B-B.

As shown in FIG. 63, FIG. 64 and FIG. 65, mainly consists:
-- positive electrode plate (101): composed of one or more than one of sheet-like or film-like quadrilateral positive electrode plates, opposite sides of the positive electrode plate are respectively formed with at least an electric conductive terminal for inputting/outputting electric energy, and the surface of the positive electrode plate is provided with an electrochemical material;
-- negative electrode plate (102): composed of one or more than one of sheet-like or film-like quadrilateral negative electrode plates, opposite sides of the negative electrode plate are respectively formed with at least an electric conductive terminal for inputting/outputting electric energy, and the surface of the negative electrode plate is provided with an electrochemical material;
-- separator (104): formed by a thin film having micro-porous or porous property and mainly made of PP or PE, disposed between the positive and the negative electrode plates, and the main function thereof is to isolate the positive and the negative electrode plates for preventing the self-discharge of the cell and the short circuit between the two polarities, and installed between electrode plates having different polarities and installed at a lateral side of the electrode plate according to actual needs;

Opposite sides of the quadrilateral electrode plate are respectively and outwardly extended with one or more input/output terminals for transferring electric energy, and the separator is disposed between one or more of the positive electrode plates and one or more of the negative electrode plates having the same or different quantity, and the electrode plates having different polarities are staggeringly stacked for forming as an electrode plate pair; and when a plurality of the electrode plates having the same polarity are provided, the input/output terminals having the same polarity for transferring electric energy and formed at the same side of each of the electrode plates having the same polarity are conductive electrically connected in parallel;
-- insulation package enclosed member (105): made of a soft or rigid package material having insulation property such as an AL packing foil, the periphery of the insulation package enclosed member (105) is formed in a sealed hollow sleeve status, and openings formed at two sides allow the positive electrode plate (101) and the negative electrode plate (102) having the separator (104) clamped in between to be disposed, one opening of the insulation package enclosed member (105) allows the electric conductive terminal for inputting/outputting electric energy (1011) and the electric conductive terminal for inputting/outputting electric energy (1021) to be exposed, and the insulation package enclosed member (105) is processed for forming a sealing zone (1051) so as to seal the portions of the electric conductive terminal for inputting/outputting electric energy (1011) and the electric conductive terminal for inputting/outputting electric energy (1021) defined close to the electrode plate, and the distal ends of the electric conductive terminal for inputting/outputting electric energy (1011) and the electric conductive terminal for inputting/outputting electric energy (1021) are exposed at the same side, an electrolyte solution or an electrolyte material is filled in the insulation package enclosed member (105), the other opening allows the electric conductive terminal for inputting/outputting electric energy (1012) and the electric conductive terminal for inputting/outputting electric energy (1022) to be exposed, and the insulation package enclosed member (105) is processed for forming a sealing zone (1052) so as to seal the portions of the electric conductive terminal for inputting/outputting electric energy (1012) and the electric conductive terminal for inputting/outputting electric energy (1022) defined close to the electrode plate, and the distal ends of the electric conductive terminal for inputting/outputting electric energy (1012) and the electric conductive terminal for inputting/outputting electric energy (1022) are exposed and inwardly bent along the exterior of the sealing zone (1052) of the insulation package enclosed member (105) thereby being respectively connected with the lateral positive electric conductive member (109) and the lateral negative electric conductive member (110), wherein the electric conductive terminal for inputting/outputting electric energy (1012) is conductive electrically connected to one end of the lateral positive electric conductive member (109), and the other end of the lateral positive electric conductive member (109) is conductive electrically connected to the electric conductive terminal for inputting/outputting electric energy (1011) thereby forming a parallel conductive electrical connection with positive polarity; the electric conductive terminal for inputting/outputting electric energy (1022) is conductive electrically connected to one end of the lateral negative electric conductive member (110), and the other end of the lateral negative electric conductive member (110) is conductive electrically connected to the electric conductive terminal for inputting/outputting electric energy (1021) thereby forming a parallel conductive electrical connection with negative polarity, so an electricity charging/discharging cell is structured;
-- lateral positive electric conductive member (109): made of an electric conductive material and disposed at one side of the insulation package enclosed member (105);
-- lateral negative electric conductive member (110): made of an electric conductive material and disposed at another side of the insulation package enclosed member (105);

The above-mentioned lateral positive electric conductive member (109) and the lateral negative electric conductive member (110) include being composed of an electric conductive member formed in a quadrilateral sheet-like, or strip-like or circular sheet-like status, and the top and the bottom ends thereof are respectively extended with an electric conductive strip, the electric conductive strip respectively extended from the top and the bottom ends of the lateral positive electric conductive member (109) are then respectively and conductive electrically connected to the electric conductive terminal for inputting/outputting electric energy (1011) and the electric conductive terminal for inputting/outputting electric energy (1012) having positive polarity, and the electric conductive strip respectively extended from the top and the bottom ends of the lateral negative electric conductive member (110) are then respectively and conductive electrically connected to the electric conductive terminal for inputting/outputting electric energy (1021) and the electric conductive terminal for inputting/outputting electric energy (1022) having negative polarity;
-- outer auxiliary insulation package enclosed member (106): made of a soft or rigid package material having insulation property such as an AL packing foil and formed in a bag-like status having three sides being sealed and allowing the electricity charging/discharging cell packaged by the insulation package enclosed member (105) to be disposed, and the electric conductive terminal for inputting/outputting electric energy (1011) and the electric conductive terminal for inputting/outputting electric energy (1021) of the electricity charging/discharging cell are exposed through openings formed in the outer auxiliary insulation package enclosed member (106), and through the outer auxiliary insulation package enclosed member (106) being processed for forming an outer sealing zone (1061) and the insulation package enclosed member (105) being processed for forming the sealing zone (1051), the mid portions of the electric conductive terminal for inputting/outputting electric energy (1011) and the electric conductive terminal for inputting/outputting electric energy (1021) are sealed, and the distal portions of the electric conductive terminal for inputting/outputting electric energy (1011) and the electric conductive terminal for inputting/outputting electric energy (1021) are exposed at the same side for forming as electric conductive terminals for inputting/outputting electric energy to the exterior, thereby structuring the multiple-layer package structure which is additionally installed the outer auxiliary insulation package enclosed member (106) to the electrode plate pair with multiple-sided electric conductive terminals of the present application and converted into single-sided input/output electric conductive interface.

FIG. 66 is a schematic structural view showing the electricity charging/discharging device with insulation package enclose member having electrode plate pair with multiple-sided electric conductive terminals being installed with the strip-like lateral positive electric conductive member (109) and the lateral negative electric conductive member (110).

The lateral cross sectional view of FIG. 66 taken along A-A is the same as FIG.64.

The lateral cross sectional view of FIG. 66 taken along B-B is the same as FIG.65.

As shown in FIG. 66, FIG. 64 and FIG. 65, the multiple-layer package structure having electrode plate pair with multiple-sided electric conductive terminals converted into single-sided input/output electric conductive interface being installed with the strip-like lateral positive electric conductive member (109) and the lateral negative electric conductive member (110).

FIG. 67 is a schematic structural view showing the electricity charging/discharging device with insulation package enclose member having electrode plate pair with multiple-sided electric conductive terminals being installed with the circular sheet-like lateral positive electric conductive member (109) and the lateral negative electric conductive member (110).

The lateral cross sectional view of FIG. 67 taken along A-A is the same as FIG.64.

The lateral cross sectional view of FIG. 67 taken along B-B is the same as FIG.65.

As shown in FIG. 67, FIG. 64 and FIG. 65, the multiple-layer package structure having electrode plate pair with multiple-sided electric conductive terminals converted into single-sided input/output electric conductive interface being installed with the circular sheet-like lateral positive electric conductive member (109) and the lateral negative electric conductive member (110).

According to each embodiment disclosed above, one side of the positive electrode plate (101) can be further integrally extended with the electric conductive terminal for inputting/outputting electric energy (1012) and the lateral positive electric conductive member (109) then combined with the electric conductive terminal for inputting/outputting electric energy (1011), and one side of the negative electrode plate (102) can be further integrally extended with the electric conductive terminal for inputting/outputting electric energy (1022) and the lateral negative electric conductive member (110) then combined with the negative electrode plate (102) thereby reducing the processing points for combination, embodiments are provided as followings:

FIG. 68 is a schematic structural view showing one side of the positive electrode plate (101) shown in FIG. 63 being integrally extended with the electric conductive terminal for inputting/outputting electric energy (1012) and the lateral positive electric conductive member (109) then combined with the electric conductive terminal for inputting/outputting electric energy (1011), and one side of the negative electrode plate (102) being integrally extended with the electric conductive terminal for inputting/outputting electric energy (1022) and the lateral negative electric conductive member (110) then combined with the negative electrode plate (102).

FIG. 69 is a lateral cross sectional view of FIG. 68 taken along A-A.

FIG. 70 is a lateral cross sectional view of FIG. 68 taken along B-B.

As shown in FIG. 68, FIG. 69 and FIG. 70, the main characteristic is that one side of the positive electrode plate (101) is integrally extended with the electric conductive terminal for inputting/outputting electric energy (1012) and the lateral positive electric conductive member (109) then combined with the electric conductive terminal for inputting/outputting electric energy (1011), and one side of the negative electrode plate (102) is integrally extended with the electric conductive terminal for inputting/outputting electric energy (1022) and the lateral negative electric conductive member (110) then combined with the negative electrode plate (102), thereby structuring a single-sided input/output electric conductive interface.

FIG. 71 is a schematic structural view showing one side of the positive electrode plate (101) shown in FIG. 66 being integrally extended with the electric conductive terminal for inputting/outputting electric energy (1012) and the lateral positive electric conductive member (109) then combined with the electric conductive terminal for inputting/outputting electric energy (1011), and one side of the negative electrode plate (102) being integrally extended with the electric conductive terminal for inputting/outputting electric energy (1022) and the lateral negative electric conductive member (110) then combined with the negative electrode plate (102).

The lateral cross sectional view of FIG. 71 taken along A-A is the same as FIG.69.

The lateral cross sectional view of FIG. 71 taken along B-B is the same as FIG.70.

As shown in FIG. 71, FIG. 69 and FIG. 70, the main characteristic is that one side of the positive electrode plate (101) is integrally extended with the electric conductive terminal for inputting/outputting electric energy (1012) and the lateral positive electric conductive member (109) then combined with the electric conductive terminal for inputting/outputting electric energy (1011), and one side of the negative electrode plate (102) is integrally extended with the electric conductive terminal for inputting/outputting electric energy (1022) and the lateral negative electric conductive member (110) then combined with the negative electrode plate (102), thereby structuring a single-sided input/output electric conductive interface.

FIG. 72 is a schematic structural view showing one side of the positive electrode plate (101) shown in FIG. 67 being integrally extended with the electric conductive terminal for inputting/outputting electric energy (1012) and the lateral positive electric conductive member (109) then combined with the electric conductive terminal for inputting/outputting electric energy (1011), and one side of the negative electrode plate (102) being integrally extended with the electric conductive terminal for inputting/outputting electric energy (1022) and the lateral negative electric conductive member (110) then combined with the negative electrode plate (102).

The lateral cross sectional view of FIG. 72 taken along A-A is the same as FIG.69.

The lateral cross sectional view of FIG. 72 taken along B-B is the same as FIG.70.

As shown in FIG. 72, FIG. 69 and FIG. 70, the main characteristic is that one side of the positive electrode plate (101) is integrally extended with the electric conductive terminal for inputting/outputting electric energy (1012) and the lateral positive electric conductive member (109) then combined with the electric conductive terminal for inputting/outputting electric energy (1011), and one side of the negative electrode plate (102) is integrally extended with the electric conductive terminal for inputting/outputting electric energy (1022) and the lateral negative electric conductive member (110) then combined with the negative electrode plate (102), thereby structuring a single-sided input/output electric conductive interface.

According to the above-mentioned embodiments, the lateral positive electric conductive member (109) and the lateral negative electric conductive member (110) at two sides of the electricity charging/discharging device with insulation package enclose member having electrode plate pair with multiple-sided electric conductive terminals can be further served as an input/output electric conductive interface for being individually used, or connected in series, in parallel or in series and parallel, the configuration includes:
-- externally exposed electric conductive surfaces of the lateral positive electric conductive member (109) and the lateral negative electric conductive member (110) are directly formed as the input/output electric conductive interfaces;
-- the externally exposed surface of the lateral positive electric conductive member (109) is provided with a lateral positive auxiliary electric conductive member (1091), and the externally exposed surface of the lateral negative electric conductive member (110) is provided with a lateral negative auxiliary electric conductive member (1101) for structuring the input/output electric conductive interfaces.
-- one or more locations defined at the mid portion of the lateral positive electric conductive member (109) are formed with an outwardly-protruded structure and one or more locations defined at the mid portion of the lateral negative electric conductive member (110) are formed with an outwardly-protruded structure, thereby structuring the input/output electric conductive interfaces.

Embodiments are provided as followings:

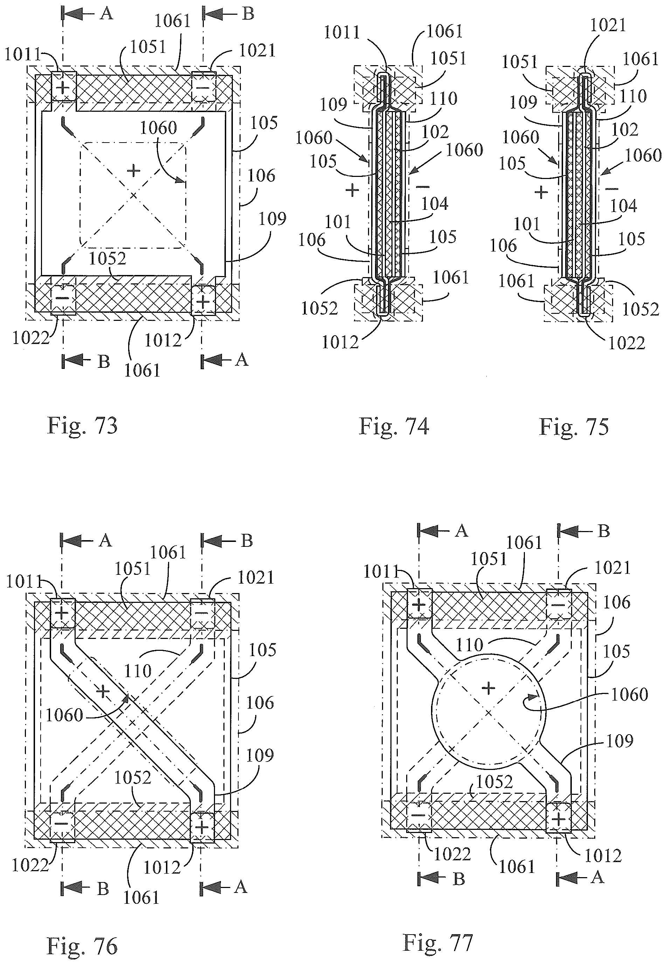

FIG. 73 is a schematic structural view showing the lateral positive electric conductive member (109) and the lateral negative electric conductive member (110) at two sides of the electricity charging/discharging device with insulation package enclose member having electrode plate pair with multiple-sided electric conductive terminals shown in FIG. 63 passing openings (1060) of the outer auxiliary insulation package enclosed member (106) at two sides for respectively being served as an input/output electric conductive interface.

FIG. 74 is a lateral cross sectional view of FIG. 73 taken along A-A.

FIG. 75 is a lateral cross sectional view of FIG. 73 taken along B-B.

As shown in FIG. 73, FIG. 74 and FIG. 75, the main characteristic is that the lateral positive electric conductive member (109) and the lateral negative electric conductive member (110) at two sides of the electricity charging/discharging device with insulation package enclose member having electrode plate pair with multiple-sided electric conductive terminals pass the openings (1060) of the outer auxiliary insulation package enclosed member (106) at two sides for respectively being served as the input/output electric conductive interface.

FIG. 76 is a schematic structural view showing the lateral positive electric conductive member (109) and the lateral negative electric conductive member (110) at two sides of the electricity charging/discharging device with insulation package enclose member having electrode plate pair with multiple-sided electric conductive terminals shown in FIG. 66 passing openings (1060) of the outer auxiliary insulation package enclosed member (106) at two sides for respectively being served as an input/output electric conductive interface.

The lateral cross sectional view of FIG. 76 taken along A-A is the same as FIG.74.

The lateral cross sectional view of FIG. 76 taken along B-B is the same as FIG.75.

As shown in FIG. 76, FIG. 74 and FIG. 75, the main characteristic is that the lateral positive electric conductive member (109) and the lateral negative electric conductive member (110) at two sides of the electricity charging/discharging device with insulation package enclose member having electrode plate pair with multiple-sided electric conductive terminals pass the openings (1060) of the outer auxiliary insulation package enclosed member (106) at two sides for respectively being served as the input/output electric conductive interface.

FIG. 77 is a schematic structural view showing the lateral positive electric conductive member (109) and the lateral negative electric conductive member (110) at two sides of the electricity charging/discharging device with insulation package enclose member having electrode plate pair with multiple-sided electric conductive terminals shown in FIG. 67 passing openings (1060) of the outer auxiliary insulation package enclosed member (106) at two sides for respectively being served as an input/output electric conductive interface.

The lateral cross sectional view of FIG. 77 taken along A-A is the same as FIG.74.

The lateral cross sectional view of FIG. 77 taken along B-B is the same as FIG.75.

As shown in FIG. 77, FIG. 74 and FIG. 75, the main characteristic is that the lateral positive electric conductive member (109) and the lateral negative electric conductive member (110) at two sides of the electricity charging/discharging device with insulation package enclose member having electrode plate pair with multiple-sided electric conductive terminals pass the openings (1060) of the outer auxiliary insulation package enclosed member (106) at two sides for respectively being served as the input/output electric conductive interface.

FIG. 78 is a schematic structural view showing the lateral positive electric conductive member (109) being installed with the lateral positive auxiliary electric conductive member (1091) and the lateral negative electric conductive member (110) being installed with the lateral negative auxiliary electric conductive member (1101) at two sides of the electricity charging/discharging device with insulation package enclose member having electrode plate pair with multiple-sided electric conductive terminals shown in FIG. 63 passing openings (1060) of the outer auxiliary insulation package enclosed member (106) at two sides for respectively being served as an input/output electric conductive interface.

FIG. 79 is a lateral cross sectional view of FIG. 78 taken along A-A.

FIG. 80 is a lateral cross sectional view of FIG. 78 taken along B-B.

As shown in FIG. 78, FIG. 79 and FIG. 80, the main characteristic is that the lateral positive electric conductive member (109) being installed with the lateral positive auxiliary electric conductive member (1091) and the lateral negative electric conductive member (110) being installed with the lateral negative auxiliary electric conductive member (1101) at two sides of the electricity charging/discharging device with insulation package enclose member having electrode plate pair with multiple-sided electric conductive terminals pass the openings (1060) of the outer auxiliary insulation package enclosed member (106) at two sides for respectively being served as the input/output electric conductive interface.

FIG. 81 is a schematic structural view showing the lateral positive electric conductive member (109) being installed with the lateral positive auxiliary electric conductive member (1091) and the lateral negative electric conductive member (110) being installed with the lateral negative auxiliary electric conductive member (1101) at two sides of the electricity charging/discharging device with insulation package enclose member having electrode plate pair with multiple-sided electric conductive terminals shown in FIG. 66 passing openings (1060) of the outer auxiliary insulation package enclosed member (106) at two sides for respectively being served as an input/output electric conductive interface.

The lateral cross sectional view of FIG. 81 taken along A-A is the same as FIG.79.

The lateral cross sectional view of FIG. 81 taken along B-B is the same as FIG.80.

As shown in FIG. 81, FIG. 79 and FIG. 80, the main characteristic is that the lateral positive electric conductive member (109) being installed with the lateral positive auxiliary electric conductive member (1091) and the lateral negative electric conductive member (110) being installed with the lateral negative auxiliary electric conductive member (1101) at two sides of the electricity charging/discharging device with insulation package enclose member having electrode plate pair with multiple-sided electric conductive terminals pass the openings (1060) of the outer auxiliary insulation package enclosed member (106) at two sides for respectively being served as the input/output electric conductive interface.

FIG. 82 is a schematic structural view showing the lateral positive electric conductive member (109) being installed with the lateral positive auxiliary electric conductive member (1091) and the lateral negative electric conductive member (110) being installed with the lateral negative auxiliary electric conductive member (1101) at two sides of the electricity charging/discharging device with insulation package enclose member having electrode plate pair with multiple-sided electric conductive terminals shown in FIG. 67 passing openings (1060) of the outer auxiliary insulation package enclosed member (106) at two sides for respectively being served as an input/output electric conductive interface.

The lateral cross sectional view of FIG. 82 taken along A-A is the same as FIG.79.

The lateral cross sectional view of FIG. 82 taken along B-B is the same as FIG.80.

As shown in FIG. 82, FIG. 79 and FIG. 80, the main characteristic is that the lateral positive electric conductive member (109) being installed with the lateral positive auxiliary electric conductive member (1091) and the lateral negative electric conductive member (110) being installed with the lateral negative auxiliary electric conductive member (1101) at two sides of the electricity charging/discharging device with insulation package enclose member having electrode plate pair with multiple-sided electric conductive terminals pass the openings (1060) of the outer auxiliary insulation package enclosed member (106) at two sides for respectively being served as the input/output electric conductive interface.

FIG. 83 is a schematic structural view showing the lateral positive electric conductive member (109) having the mid portion being formed with an outwardly-protruded structure and the lateral negative electric conductive member (110) having the mid portion being formed with an outwardly-protruded structure at two sides of the electricity charging/discharging device with insulation package enclose member having electrode plate pair with multiple-sided electric conductive terminals shown in FIG. 63 passing openings (1060) of the outer auxiliary insulation package enclosed member (106) at two sides for respectively being served as an input/output electric conductive interface.

FIG. 84 is a lateral cross sectional view of FIG. 83 taken along A-A.

FIG. 85 is a lateral cross sectional view of FIG. 83 taken along B-B.

As shown in FIG. 83, FIG. 84 and FIG. 85, the main characteristic is that the lateral positive electric conductive member (109) having the mid portion being formed with an outwardly-protruded structure and the lateral negative electric conductive member (110) having the mid portion being formed with an outwardly-protruded structure at two sides of the electricity charging/discharging device with insulation package enclose member having electrode plate pair with multiple-sided electric conductive terminals pass the openings (1060) of the outer auxiliary insulation package enclosed member (106) at two sides for respectively being served as the input/output electric conductive interface.

FIG. 86 is a schematic structural view showing the lateral positive electric conductive member (109) having the mid portion being formed with an outwardly-protruded structure and the lateral negative electric conductive member (110) having the mid portion being formed with an outwardly-protruded structure at two sides of the electricity charging/discharging device with insulation package enclose member having electrode plate pair with multiple-sided electric conductive terminals shown in FIG. 66 passing openings (1060) of the outer auxiliary insulation package enclosed member (106) at two sides for respectively being served as an input/output electric conductive interface.

The lateral cross sectional view of FIG. 86 taken along A-A is the same as FIG.84.

The lateral cross sectional view of FIG. 86 taken along B-B is the same as FIG.85.

As shown in FIG. 86, FIG. 84 and FIG. 85, the main characteristic is that the lateral positive electric conductive member (109) having the mid portion being formed with an outwardly-protruded structure and the lateral negative electric conductive member (110) having the mid portion being formed with an outwardly-protruded structure at two sides of the electricity charging/discharging device with insulation package enclose member having electrode plate pair with multiple-sided electric conductive terminals pass the openings (1060) of the outer auxiliary insulation package enclosed member (106) at two sides for respectively being served as the input/output electric conductive interface.

FIG. 87 is a schematic structural view showing the lateral positive electric conductive member (109) having the mid portion being formed with an outwardly-protruded structure and the lateral negative electric conductive member (110) having the mid portion being formed with an outwardly-protruded structure at two sides of the electricity charging/discharging device with insulation package enclose member having electrode plate pair with multiple-sided electric conductive terminals shown in FIG. 67 passing openings (1060) of the outer auxiliary insulation package enclosed member (106) at two sides for respectively being served as an input/output electric conductive interface.

The lateral cross sectional view of FIG. 87 taken along A-A is the same as FIG.84.

The lateral cross sectional view of FIG. 87 taken along B-B is the same as FIG.85.

As shown in FIG. 87, FIG. 84 and FIG. 85, the main characteristic is that the lateral positive electric conductive member (109) having the mid portion being formed with an outwardly-protruded structure and the lateral negative electric conductive member (110) having the mid portion being formed with an outwardly-protruded structure at two sides of the electricity charging/discharging device with insulation package enclose member having electrode plate pair with multiple-sided electric conductive terminals pass the openings (1060) of the outer auxiliary insulation package enclosed member (106) at two sides for respectively being served as the input/output electric conductive interface.

After the plural electricity charging/discharging cells are structured, the electricity charging/discharging cells can be individually operated and combined through electric conductive members, at least one or more of the electricity charging/discharging cells are disposed in the interior of one or more of the housings so as to be collected for forming as a modularized structure which is connected through the electric conductive members or the input/output electric conductive interface of each electricity charging/discharging device for transferring electric energy;

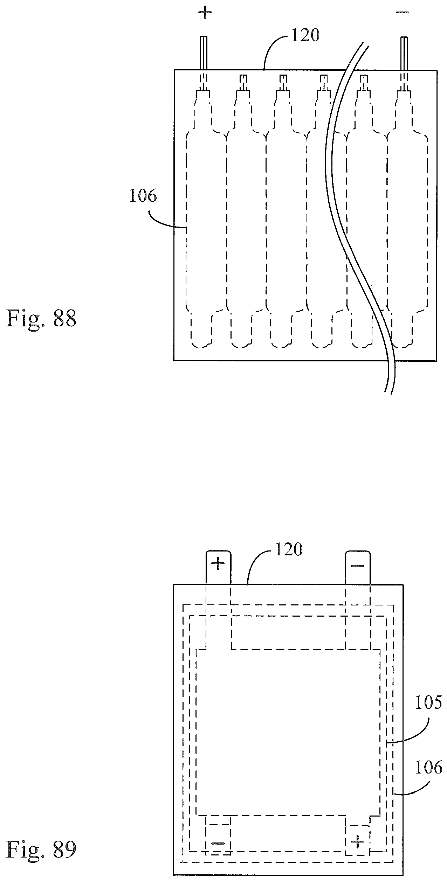

FIG. 88 is a schematic structural view showing the electricity charging/discharging cells being disposed inside the housing (120) for forming as a module according to the present invention.

FIG. 89 is a lateral structural view of FIG. 88.

As shown in FIG. 88 and FIG. 89, at least one or more of the electricity charging/discharging cells are disposed inside the housing (120), wherein:
-- housing (120): made of a soft flexible material or a rigid material such as stainless steel.

According to the present invention, the electricity charging/discharging device with insulation package enclose member having electrode plate pair with multiple-sided electric conductive terminals can be further formed as a rolling structure, illustrated as followings:

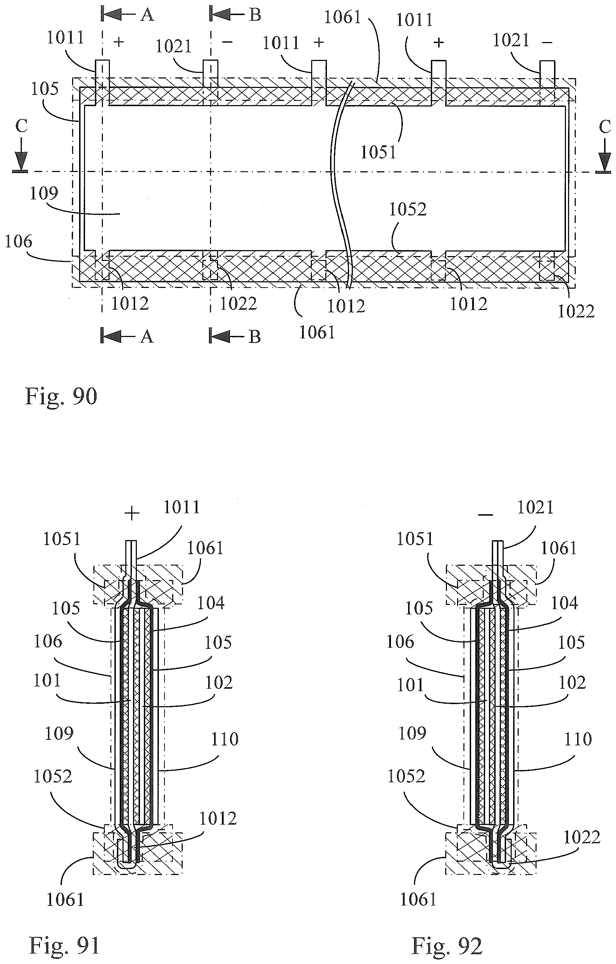

FIG. 90 is a structural develop view showing the single-sided input/output electric conductive terminal and the lateral positive electric conductive member (109) and the lateral negative electric conductive member (110) of the electrode plate pair being sealed as a multi-layer insulation package enclosed member, wherein the input/output electric conductive terminal at one side being served as the single-sided input/output electric conductive interface according to the present invention.

FIG. 91 is a lateral cross sectional view of FIG. 90 taken along A-A.

FIG. 92 is a lateral cross sectional view of FIG. 90 taken along B-B.

As shown in FIG. 90, FIG. 91 and FIG. 92, the single-sided input/output electric conductive terminal and the lateral positive electric conductive member (109) and the lateral negative electric conductive member (110) of the electrode plate pair are sealed as a multi-layer insulation package enclosed member for forming as the rolling structure, wherein the input/output electric conductive terminal at one side is served as the single-sided input/output electric conductive interface.

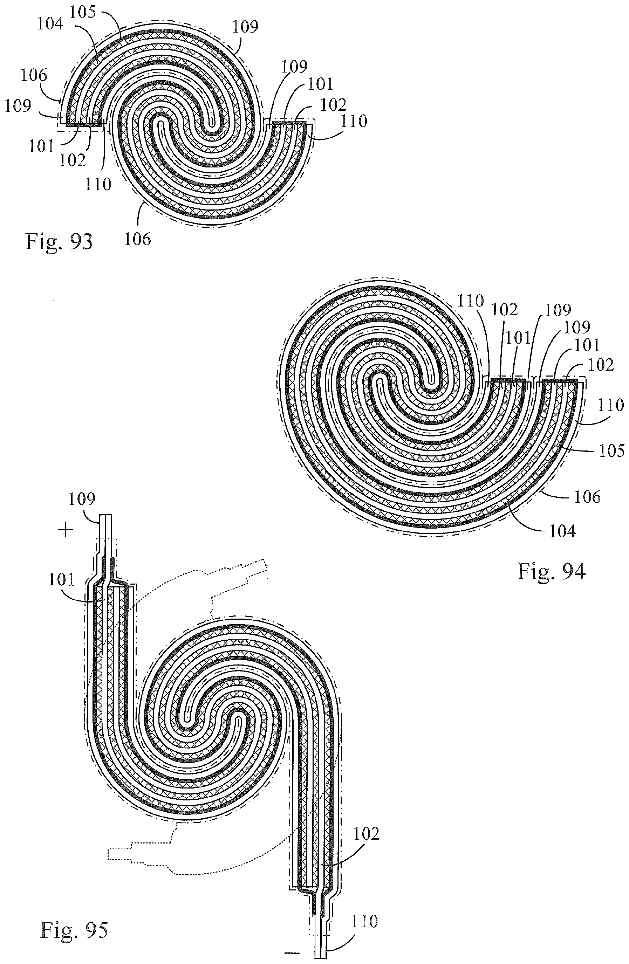

FIG. 93 is the first cross sectional view showing the rolling structure shown in FIG. 90 taken along C-C according to the present invention.

As shown in FIG. 93, for enabling the multi-layer insulation package enclosed member to be used for sealing, one or more of the single-sided individually-arranged positive input/output electric conductive terminals and one or more of the negative input/output electric conductive terminals are individually-arranged for forming as the single-sided input/output electric conductive interface.

FIG. 94 is the second cross sectional view showing the rolling structure shown in FIG. 90 taken along C-C according to the present invention.

As shown in FIG. 94, for enabling the multi-layer insulation package enclosed member to be used for sealing, one or more of the single-sided adjacently-arranged positive input/output electric conductive terminals and one or more of the negative input/output electric conductive terminals are adjacently-arranged and homo-polarity connected in parallel for forming as the single-sided input/output electric conductive interface.

FIG. 95 is the third cross sectional view showing the rolling structure shown in FIG. 90 taken along C-C according to the present invention.

As shown in FIG. 95, for enabling the multi-layer insulation package enclosed member to be used for sealing, only the lateral positive electric conductive member (109) and the lateral negative electric conductive member (110) are served to be structured as the single-sided input/output electric conductive interface.

When the electricity charging/discharging device with insulation package enclose member having electrode plate pair with multiple-sided electric conductive terminals is implemented, the number and the dimension of the electrode plate pair, the positive electrode plate (101) and/or the negative electrode plate (102), of the same insulation package enclose member (105) can be further applicable selected, including following one or more than one selection:
1) increasing the number of the positive electrode plate (101) and/or the negative electrode plate (102) at the same time, while the number of the positive electrode plate (101) and the negative electrode plate (102) being the same;
2) increasing the number of the positive electrode plate (101) and/or the negative electrode plate (102) at the same time, while the number of the positive electrode plate (101) and the negative electrode plate (102) being not the same;

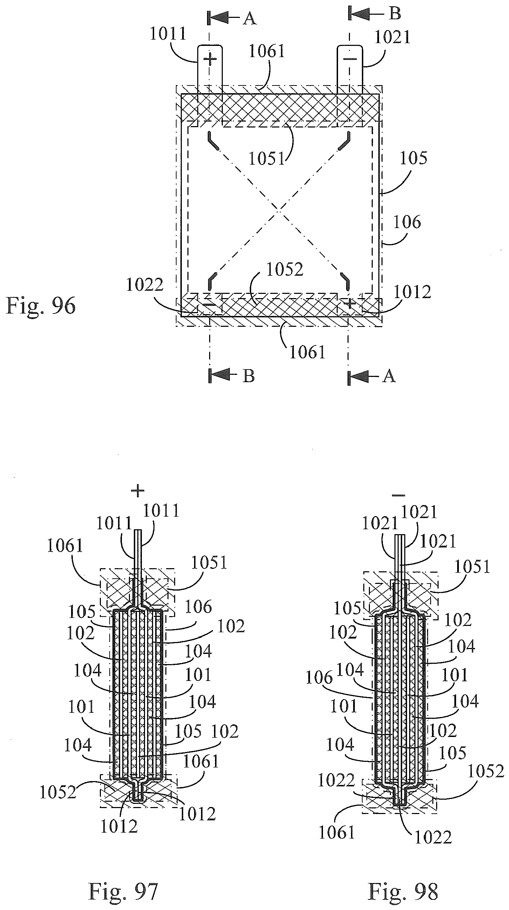

   FIG 96 is a schematic structural view showing an embodiment of increasing the number of the positive electrode plate (101) and/or the negative electrode plate (102) at the same time applied to a multiple-layer package structure with specific single-sided input/output and having electrode plate pair with multiple-sided input/output terminals;
   FIG. 97 is a lateral cross sectional view of FIG. 96 taken along A-A;
   FIG. 98 is a lateral cross sectional view of FIG. 96 taken along B-B;
3) the thickness of part of the electrode plates, the positive electrode plate (101) and/or the negative electrode plate (102), being different; and

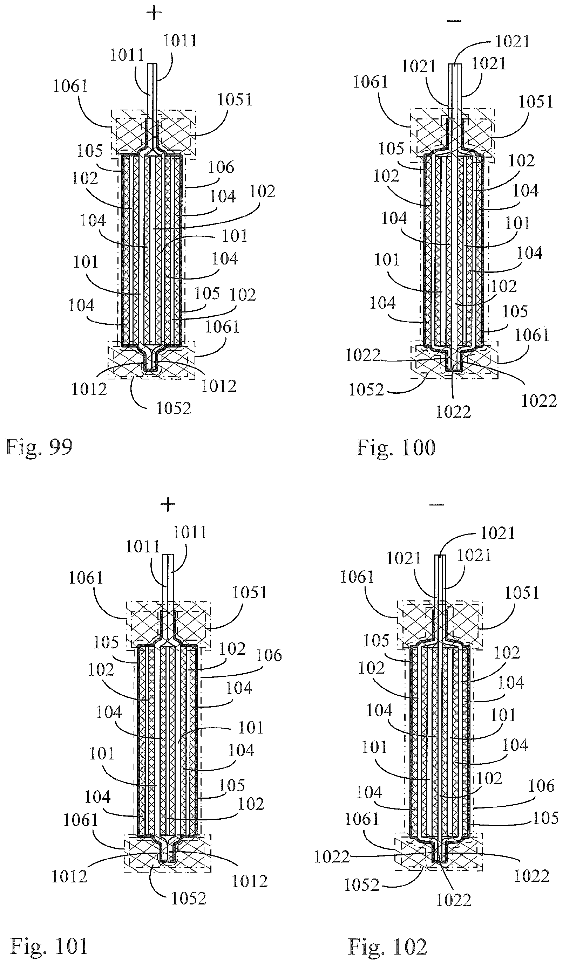

   FIG. 99 is a lateral cross sectional view of FIG. 96 taken along A-A showing the first embodiment of the thickness of part of the electrode plates, the positive electrode plate (101) and/or the negative electrode plate (102), being different;
   FIG. 100 is a lateral cross sectional view of FIG. 96 taken along B-B showing the first embodiment of the thickness of part of the electrode plates, the positive electrode plate (101) and/or the negative electrode plate (102), being different;
   FIG. 101 is a lateral cross sectional view of FIG. 96 taken along A-A showing the second embodiment of the thickness of part of the electrode plates, the positive electrode plate (101) and/or the negative electrode plate (102), being different;
   FIG. 102 is a lateral cross sectional view of FIG. 96 taken along B-B showing the second embodiment of the thickness of part of the electrode plates, the positive electrode plate (101) and/or the negative electrode plate (102), being different;
4)two or more than two sides of the positive electrode plate (101) and/or the negative electrode plate (102) being respectively installed with electric conductive terminals for inputting/outputting electric energy, while at least one side having more than one electric conductive terminal for inputting/outputting electric energy;

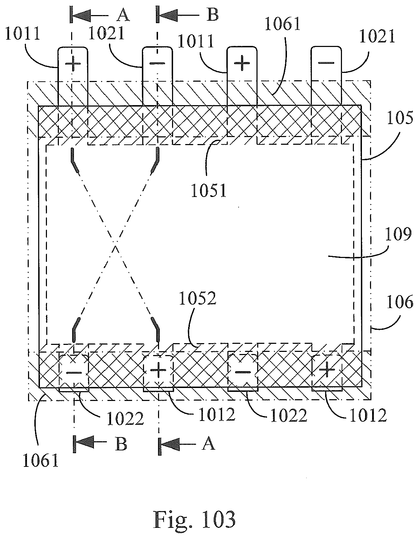

   FIG 103 is a schematic structural view showing an embodiment of two sides of the positive electrode plate (101) and/or the negative electrode plate (102) being respectively installed with two electric conductive terminals for inputting/outputting electric energy applied to a multiple-layer package structure with specific single-sided input/output and having electrode plate pair with multiple-sided input/output terminals.

The applications of the electricity charging/discharging device with insulation package enclose member having electrode plate pair with multiple-sided electric conductive terminals are as followings:
-- individually used; or
-- homo-polarity connected in parallel; or
-- homo-polarity connected in series; or
-- reverse-polarity connected in series; or
-- homo-polarity connected in parallel, then two ends formed through the parallel connection being connected in series by polarity order for boosting voltage; or
-- connected in series by polarity order for boosting voltage, then two ends having the same rated voltage formed through the serial connection being homo-polarity connected in parallel.

According to the electricity charging/discharging device with insulation package enclose member having electrode plate pair with multiple-sided electric conductive terminals, the geometric shape of the electrode plate can be formed in various geometric shapes such as polygonal, circular or elliptical according to actual needs.

According to the electricity charging/discharging device with insulation package enclose member having electrode plate pair with multiple-sided electric conductive terminals, two or more sides of each electrode plate are formed with the input/output electric conductive interface, and the two sides can be opposite sides or adjacent sides or three sides or more sides or the periphery thereof can be formed in the circular or elliptical shape.

According to the electricity charging/discharging device with insulation package enclose member having electrode plate pair with multiple-sided electric conductive terminals, the input/output electric conductive terminal formed on the side of the electrode plate can be one or more than one.

## Claims

1. An electricity charging/discharging device with insulation package enclose member having electrode plate pair with multiple-sided electric conductive terminals, comprises:
-- a positive electrode plate (101): composed of at least one of sheet-like or film-like polygon positive electrode plates, opposite sides of the positive electrode plate are respectively formed with an electric conductive terminal for inputting/outputting electric energy, and the surface of the positive electrode plate is provided with an electrochemical material;
-- a negative electrode plate (102): composed of at least one of sheet-like or film-like polygon negative electrode plates, opposite sides of the negative electrode plate are respectively formed with an electric conductive terminal for inputting/outputting electric energy, and the surface of the negative electrode plate is provided with an electrochemical material;
-- a separator (104): formed by a thin film having micro-porous or porous property disposed between the positive and the negative electrode plates to isolate the positive and the negative electrode plates from each other and installed at a lateral side of the electrode plate according to actual needs;
wherein the electrode plates having different polarities are staggeringly stacked for forming as an electrode plate pair; and when a plurality of the electrode plates having the same polarity are provided, the input/output terminals having the same polarity for transferring electric energy and formed at the same side of each of the electrode plates having the same polarity are conductive electrically connected in parallel;
-- insulation package enclosed member (105): made of a material having insulation property, the electric conductive terminal adjacent to the connected electrode plate extending from at least two sides thereof to the external for inputting/outputting electric energy are sealed covered by the insulation package enclosed member (105) to form a full-closed type electricity charging/discharging device with insulation package enclose member, so the electrode plate pair is able to output or input electric energy to the exterior through an electric conductive interface formed by at least two-sided electric conductive terminal.
-- a lateral positive electric conductive member (109): made of an electric conductive material and disposed at one side of the insulation package enclosed member (105); and
-- a lateral negative electric conductive member (110): made of an electric conductive material and disposed at another side of the insulation package enclosed member (105);
wherein the lateral positive electric conductive member (109) and the lateral negative electric conductive member (110) are composed of an electric conductive member formed in a quadrilateral sheet-like, or strip-like or circular sheet-like status, and the top and the bottom ends thereof are respectively extended with an electric conductive strip which extends to the electric conductive terminals at opposite sides of the positive or negative electrode plates.

2. An electricity charging/discharging device as claimed in claim 1, wherein at least one or more of the electricity charging/discharging cells are disposed in the interior of one or more of the housings so as to be collected for forming as a modularized structure which is connected through the electric conductive members or the input/output electric conductive interface of each electricity charging/discharging device for transferring electric energy; the made of a soft flexible material or a rigid material wherein at least one of the electricity charging/discharging cells are disposed inside the housing (120).

3. An electricity charging/discharging device as claimed in claim 1 or claim 2, which is further applied in an electricity charging/discharging device with insulation package enclose member having electrode plate pair with multiple-sided electric conductive terminals, thereby allowing the electrode plate pair with multiple-sided electric conductive terminals to be structured as an input/output electric conductive interface through single-sided input/output electric conductive terminals having positive and negative polarities for the purpose of transferring electric energy to the exterior, or further to be connected in series, in parallel or in series and parallel for forming as a module, wherein
the periphery of the insulation package enclosed member (105) is formed in a sealed hollow sleeve status, and openings formed at two sides allow the positive electrode plate (101) and the negative electrode plate (102) having the separator (104) clamped in between to be disposed, one opening of the insulation package enclosed member (105) allows the electric conductive terminal for inputting/outputting electric energy (1011) and the electric conductive terminal for inputting/outputting electric energy (1021) to be exposed, and the insulation package enclosed member (105) is processed for forming a sealing zone (1051) so as to seal the portions of the electric conductive terminal for inputting/outputting electric energy (1011) and the electric conductive terminal for inputting/outputting electric energy (1021) defined close to the electrode plate, and the distal ends of the electric conductive terminal for inputting/outputting electric energy (1011) and the electric conductive terminal for inputting/outputting electric energy (1021) are exposed at the same side, an electrolyte solution or an electrolyte material is filled in the insulation package enclosed member (105), the other opening allows the electric conductive terminal for inputting/outputting electric energy (1012) and the electric conductive terminal for inputting/outputting electric energy (1022) to be exposed, and the insulation package enclose member (105) is processed for forming a sealing zone (1052) so as to seal the portions of the electric conductive terminal for inputting/outputting electric energy (1012) and the electric conductive terminal for inputting/outputting electric energy (1022) defined close to the electrode plate, and the distal ends of the electric conductive terminal for inputting/outputting electric energy (1012) and the electric conductive terminal for inputting/outputting electric energy (1022) are exposed and inwardly bent along the exterior of the sealing zone (1052) of the insulation package enclosed member (105) thereby being respectively connected with the lateral positive electric conductive member (109) and the lateral negative electric conductive member (110), wherein the electric conductive terminal for inputting/outputting electric energy (1012) is conductive electrically connected to one end of the lateral positive electric conductive member (109), and the other end of the lateral positive electric conductive member (109) is conductive electrically connected to the electric conductive terminal for inputting/outputting electric energy (1011) thereby forming a parallel connection with positive polarity; the electric conductive terminal for inputting/outputting electric energy (1022) is electrically connected to one end of the lateral negative electric conductive member (110), and the other end of the lateral negative electric conductive member (110) is conductive electrically connected to the electric conductive terminal for inputting/outputting electric energy (1021) thereby forming a parallel conductive electrical connection with negative polarity, so an electricity charging/discharging cell is structured;
wherein the electric conductive strip respectively extended from the top and the bottom ends of the lateral positive electric conductive member (109) are then respectively and conductive electrically connected to the electric conductive terminal for inputting/outputting electric energy (1011) and the electric conductive terminal for inputting/outputting electric energy (1012) having positive polarity, and the electric conductive strip respectively extended from the top and the bottom ends of the lateral negative electric conductive member (110) are then respectively and conductive electrically connected to the electric conductive terminal for inputting/outputting electric energy (1021) and the electric conductive terminal for inputting/outputting electric energy (1022) having negative polarity.

4. An electricity charging/discharging device as claimed in claim 3, wherein the positive electrode plate (101) and the lateral positive electric conductive member (109), and the negative electrode plate (102) and the lateral negative electric conductive member (110) are further integrally formed.

5. An electricity charging/discharging device as claimed in claim 3, wherein the positive electrode plate (101) and the lateral positive electric conductive member (109), and the negative electrode plate (102) and the lateral negative electric conductive member (110) are further integrally formed, and the input/output electric conductive terminals having at least one positive polarity input/output electric conductive terminal and at least one negative polarity input/output electric conductive terminal at two sides of the electrode plate pair and the sheet-like lateral positive electric conductive member (109) and the lateral negative electric conductive member (110) at two lateral sides are structured as the multiple input/output electric conductive interface.

6. An electricity charging/discharging device as claimed in claim 3, wherein the input/output electric conductive terminals having positive and negative polarities and respectively formed by a folded structure at two sides of the electrode plate pair and the sheet-like lateral positive electric conductive member (109) and the lateral negative electric conductive member (110) at two lateral sides are structured as the multiple input/output electric conductive interface.

7. An electricity charging/discharging device as claimed in claim 3, wherein an input/output electric conductive terminal having different polarity and respectively provided at two ends defined at the same side of the electrode plate pair and the sheet-like lateral positive electric conductive member (109) and the lateral negative electric conductive member (110) at two lateral sides of the electrode plate pair are structured as the multiple input/output electric conductive interface.

8. An electricity charging/discharging device as claimed in claim 3, wherein the lateral positive electric conductive member (109) and the lateral negative electric conductive member (110) at two sides of the electricity charging/discharging device with insulation package enclose member having electrode plate pair with multiple-sided electric conductive terminals can be served as an input/output electric conductive interface for being individually used, or connected in series, in parallel or in series and parallel, the configuration includes:
-- exposed electric conductive surfaces of one lateral positive electric conductive member (109) and one opposite lateral negative electric conductive member (110) are directly formed as the input/output electric conductive interface for being individually used, or connected in series, in parallel or in series and parallel; or
-- the exposed surface of the lateral positive electric conductive member (109) is provided with a lateral positive auxiliary electric conductive member (1091), and the exposed surface of the lateral negative electric conductive member (110) is provided with a lateral negative auxiliary electric conductive member (1101) for structuring the input/output electric conductive interface for being individually used, or connected in series, in parallel or in series and parallel; or
-- one or more locations defined at the mid portion of the lateral positive electric conductive member (109) are formed with an outwardly-protruded structure and one or more locations defined at the mid portion of the lateral negative electric conductive member (110) are formed with an outwardly-protruded structure, thereby structuring the input/output electric conductive interface for being individually used, or connected in series, in parallel or in series and parallel.

9. An electricity charging/discharging device as claimed in claim 3, wherein the positive electrode plate (101) and the negative electrode plate (102) of the input/output electric conductive terminal extended towards two sides and the separator (104) are formed as a rolling structure, and the distal terminals and/or the lateral positive electric conductive member (109) and the lateral negative electric conductive member (110) at two lateral sides being structured as the multiple input/output electric conductive interface.

10. An electricity charging/discharging device as claimed in claim 9, wherein at least the lateral positive electric conductive member (109) and the lateral negative electric conductive member (110) at two lateral sides and at least an input/output electric conductive terminal at one distal end defined at one side are individually-arranged for structuring as the multiple input/output electric conductive interface.

11. An electricity charging/discharging device as claimed in claim 9, wherein the single-layer insulation package enclosed member (105) is served for insulation package at two lateral sides and the input/output electric conductive terminals at two sides are adjacently-arranged for structuring as the multiple input/output electric conductive interface.

12. An electricity charging/discharging device as claimed in claim 9, wherein the lateral positive electric conductive member (109) and the lateral negative electric conductive member (110) arranged at two lateral sides and the input/output electric conductive terminals at two sides are structures as the multiple input/output electric conductive interface.

13. An electricity charging/discharging device as claimed in claim 1 or claim 2, which is further applied in an electricity charging/discharging device with insulation package enclose member having electrode plate pair with multiple-sided electric conductive terminals, so the electrode plate pair with multiple-sided electric conductive terminals after being covered and packaged is able to be structured as aninput/output electric conductive interface through single input/output electric conductive terminal having positive and negative polarity for transferring electric energy to the exterior, or further to be connected in series, in parallel or in series and parallel, wherein mainly consists:
the periphery of the insulation package enclosed member (105) is formed in a sealed hollow sleeve status, and openings formed at two sides allow the positive electrode plate (101) and the negative electrode plate (102) having the separator (104) clamped in between to be disposed, one opening of the insulation package enclosed member (105) allows the electric conductive terminal for inputting/outputting electric energy (1011) and the electric conductive terminal for inputting/outputting electric energy (1021) to be exposed, and the insulation package enclosed member (105) is processed for forming a sealing zone (1051) so as to seal the portions of the electric conductive terminal for inputting/outputting electric energy (1011) and the electric conductive terminal for inputting/outputting electric energy (1021) defined close to the electrode plate, and the distal ends of the electric conductive terminal for inputting/outputting electric energy (1011) and the electric conductive terminal for inputting/outputting electric energy (1021) are exposed at the same side for being structured as the single-sided input/output electric conductive interface; the interior of the insulation package enclosed member (105) allows an electrolyte solution or an electrolyte material to be filled in; the lateral positive electric conductive member (109) is disposed at one side defined at the exterior of the insulation package enclosed member (105) and electrically connected between the electric conductive terminal for inputting/outputting electric energy (1011) and the electric conductive terminal for inputting/outputting electric energy (1012), the lateral negative electric conductive member (110) is disposed at another side defined at the exterior of the insulation package enclosed member (105) and electrically connected between the electric conductive terminal for inputting/outputting electric energy (1021) and the electric conductive terminal for inputting/outputting electric energy (1022); another end of the insulation package enclosed member (105) is formed with two folding covering and packaging segments (1050) for allowing the electric conductive terminal for inputting/outputting electric energy (1012), the electric conductive terminal for inputting/outputting electric energy (1022) at the other end and the insulation package enclosed member (105) to be processed for forming a sealing zone (1052) so as to seal the electric conductive terminal for inputting/outputting electric energy (1012) and the electric conductive terminal for inputting/outputting electric energy (1022), then the two folding covering and packaging segments (1050) are respectively and upwardly folded along two sides defined at the exterior of the sealing zone (1052) of the insulation package enclosed member (105) for respectively sealing and covering the lateral positive electric conductive member (109) and the lateral negative electric conductive member (110) and further upwardly extended for being sealed in the sealing zone (1051) with the portions of the electric conductive terminal for inputting/outputting electric energy (1011) and the electric conductive terminal for inputting/outputting electric energy (1021) defined close to the electrode plate, wherein the electric conductive terminal for inputting/outputting electric energy (1012) is electrically connected to one end of the lateral positive electric conductive member (109), and then through the other end of the lateral positive electric conductive member (109) electrically connected to the electric conductive terminal for inputting/outputting electric energy (1011) thereby electrical conductively forming a parallel connection with positive polarity; the electric conductive terminal for inputting/outputting electric energy (1022) is electrically connected to one end of the lateral negative electric conductive member (110), and then through the other end of the lateral negative electric conductive member (110) electrically connected to the electric conductive terminal for inputting/outputting electric energy (1021) thereby electrical conductively forming a parallel connection with negative polarity, so the electricity charging/discharging device with insulation package enclose member having electrode plate pair with multiple-sided electric conductive terminals is structured, and the exposed distal portions of the electric conductive terminal for inputting/outputting electric energy (1011) and the electric conductive terminal for inputting/outputting electric energy (1021) are structured as the single-sided input/output electric conductive interface;
wherein the electric conductive strips respectively extended from the top and the bottom ends of the lateral positive electric conductive member (109) are then respectively and electrically connected in parallel with the electric conductive terminal for inputting/outputting electric energy (1011) and the electric conductive terminal for inputting/outputting electric energy (1012) having positive polarity, and the electric conductive strips respectively extended from the top and the bottom ends of the lateral negative electric conductive member (110) are then respectively and electrically connected in parallel with the electric conductive terminal for inputting/outputting electric energy (1021) and the electric conductive terminal for inputting/outputting electric energy (1022) having negative polarity, and the exposed portions of the electric conductive terminal for inputting/outputting electric energy (1011) and the electric conductive terminal for inputting/outputting electric energy (1021) are structured as the single-sided input/output electric conductive interface.

14. An electricity charging/discharging device claimed in claim 13, wherein the lateral positive electric conductive member (109) and the lateral negative electric conductive member (110) at two sides of the electricity charging/discharging device with insulation package enclose member having electrode plate pair with multiple-sided electric conductive terminals can be further served as an input/output electric conductive interface for being individually used, or connected in series, in parallel or in series and parallel, the configuration includes:
-- exposed electric conductive surfaces of a lateral positive electric conductive member (109) and an opposite lateral negative electric conductive member (110) are directly formed as the input/output electric conductive interface for being individually used, or connected in series, in parallel or in series and parallel; or
-- the exposed surface of the lateral positive electric conductive member (109) is provided with a lateral positive auxiliary electric conductive member (1091), and the exposed surface of the lateral negative electric conductive member (110) is provided with a lateral negative auxiliary electric conductive member (1101), thereby structuring the input/output electric conductive interface for being individually used, or connected in series, in parallel or in series and parallel; or
-- one or more locations defined at the mid portion of the lateral positive electric conductive member (109) are formed with an outwardly-protruded structure and one or more locations defined at the mid portion of the lateral negative electric conductive member (110) are formed with an outwardly-protruded structure, thereby structuring the input/output electric conductive interface for being individually used, or connected in series, in parallel or in series and parallel.

15. An electricity charging/discharging device claimed in claim 13, wherein one side of the electrode plate pair having the sheet-like lateral positive electric conductive member (109) and the lateral negative electric conductive member (110) is served as the input/output electric conductive terminal having positive polarity, and the other side thereof is served as the input/output electric conductive terminal having negative polarity thereby structuring the single-sided input/output electric conductive interface, wherein mainly consists:
the periphery of the insulation package enclosed member (105) is formed in a sealed hollow sleeve status, and openings formed at two sides allow the positive electrode plate (101) and the negative electrode plate (102) having the separator (104) clamped in between to be disposed, one distal end of the insulation package enclosed member (105) is formed with a folding covering and packing segment (1050); through the folding covering and packaging segment (1050) upwardly protruded from the insulation package enclosed member (105) which serves as the inner insulation for the lateral negative electric conductive member (110), and the upward extending segment of the insulation package enclosed member (105) which covers the inner insulation of the lateral positive electric conductive member (109) are processed for forming the sealing zone (1051), the electric conducting connection portion of the electric conductive terminal for inputting/outputting electric energy (1011) and the upward extending segment of the lateral positive electric conductive member (109) is enabled to be sealed; and through the folding covering and packaging segment (1050) upwardly protruded from the insulation package enclosed member (105) which serves as the inner insulation for the lateral positive electric conductive member (109), and the upward extending segment of the insulation package enclosed member (105) which covers the inner insulation of the lateral negative electric conductive member (110) are processed for forming the sealing zone (1051), the electric conducting connection portion of the electric conductive terminal for inputting/outputting electric energy (1021) and the upward extending segment of the lateral negative electric conductive member (110) is enabled to be sealed; the interior of the insulation package enclosed member (105) allows an electrolyte solution or an electrolyte material to be filled in; and through the folding covering and packaging segment (1050) downwardly protruded from the insulation package enclosed member (105) which serves as the inner insulation for the lateral negative electric conductive member (110), and the downward extending segment of the insulation package enclosed member (105) which covers the inner insulation of the lateral positive electric conductive member (109) are processed for forming the sealing zone (1052), the electric conducting connection portion of the electric conductive terminal for inputting/outputting electric energy (1012) and the downward extending segment of the lateral positive electric conductive member (109) is enabled to be sealed; and through the folding covering and packaging segment (1050) downwardly protruded from the insulation package enclose member (105) which serves as the inner insulation for the lateral positive electric conductive member (109), and the downward extending segment of the insulation package enclose member (105) which covers the inner insulation of the lateral negative electric conductive member (110) are processed for forming the sealing zone (1052), the electric conducting connection portion of the electric conductive terminal for inputting/outputting electric energy (1022) and the downward extending segment of the lateral negative electric conductive member (110) is enabled to be sealed, wherein the electric conductive terminal for inputting/outputting electric energy (1012) is electrically connected to one end of the lateral positive electric conductive member (109), and then through the other end of the lateral positive electric conductive member (109) electrically connected to the electric conductive terminal for inputting/outputting electric energy (1011), thereby electrical conductively forming a parallel connection with positive polarity; the electric conductive terminal for inputting/outputting electric energy (1022) is electrically connected to one end of the lateral negative electric conductive member (110), and then through the other end of the lateral negative electric conductive member (110) electrically connected to the electric conductive terminal for inputting/outputting electric energy (1021), thereby electrical conductively forming a parallel connection with negative polarity, and the exposed electric conductive surface of the lateral positive electric conductive member (109) and the exposed electric conductive surface of the lateral negative electric conductive member (110) are structured for forming as the single-sided input/output electric conductive interface;
and the electric conductive strips respectively extended from the top and the bottom ends of the lateral positive electric conductive member (109) are then respectively and electrically connected in parallel with the electric conductive terminal for inputting/outputting electric energy (1011) and the electric conductive terminal for inputting/outputting electric energy (1012) having positive polarity, and the electric conductive strips respectively extended from the top and the bottom ends of the lateral negative electric conductive member (110) are then respectively and electrically connected to the electric conductive terminal for inputting/outputting electric energy (1021) and the electric conductive terminal for inputting/outputting electric energy (1022) having negative polarity, and the exposed electric conductive surface of the lateral positive electric conductive member (109) and the exposed electric conductive surface of the lateral negative electric conductive member (110) are structured for forming as the single-sided input/output electric conductive interface.

16. An electricity charging/discharging device as claimed in claim 13, wherein the single-sided input/output electric conductive terminal and the lateral positive electric conductive member (109) and the lateral negative electric conductive member (110) of the electrode plate pair of the electricity charging/discharging device with insulation package enclose member having electrode plate pair with multiple-sided electric conductive terminals is sealed in a single-layer insulation status for forming as the rolling structure, and the input/output electric conductive terminal at one side is served as the single-sided input/output electric conductive interface.

17. An electricity charging/discharging device as claimed in claim 16, wherein for allowing the lateral positive electric conductive member (109), the lateral negative electric conducive member (110) and the input/output electric conductive terminal at one side to be sealed in a single-layer insulation status, the positive electrode plate (101), the negative electrode plate (102), the separator (104), the lateral positive electric conductive member (109) and the lateral negative electric conductive member (110) are formed as the rolling structure, and one or more of the single-sided individually-arranged input/output electric conductive terminals having positive polarity and one or more of the input/output electric conductive terminals having negative polarity are individually-arranged for structuring as the single-sided input/output electric conductive interface.

18. An electricity charging/discharging device claimed in claim 16, for allowing the lateral positive electric conductive member (109), the lateral negative electric conducive member (110) and the input/output electric conductive terminal at one side to be sealed in a single-layer insulation status, the positive electrode plate (101), the negative electrode plate (102), the insulation member (104), the lateral positive electric conductive member (109) and the lateral negative electric conducive member (110) are formed as the rolling structure, and one or more of the single-sided adjacently-arranged positive input/output electric conductive terminals and one or more of the negative input/output electric conductive terminals are adjacently-arranged and homo-polarity connected in parallel for structuring as the single-sided input/output electric conductive interface.

19. An electricity charging/discharging device as claimed in claim 13, wherein the input/output electric conductive terminals at two sides of the electrode plate pair of the electricity charging/discharging device with insulation package enclose member having electrode plate pair with multiple-sided electric conductive terminals are sealed in a single-layer insulation status, and the lateral positive electric conductive member (109) and the lateral negative electric conductive member (110) are structured as the single-sided input/output electric conductive interface for forming the rolling structure.

20. An electricity charging/discharging device as claimed in claim 19, wherein for allowing the input/output electric conductive terminals at two sides of the electrode plate pair to be sealed in a single-layer insulation status, the lateral positive electric conductive member (109) and the lateral negative electric conducive member (110) at two sides are structured as the single-sided input/output electric conductive interface.

21. An electricity charging/discharging device as claimed in claim 1 or claim 2, which is applied in an electricity charging/discharging device with insulation package enclose member having electrode plate pair with multiple-sided electric conductive terminals, thereby allowing the electrode plate pair with multiple-sided electric conductive terminals to be converted to an input/output electric conductive interface through single-sided input/output electric conductive terminals having positive and negative polarities for the purpose of transferring electric energy to the exterior, or further to be connected in series, in parallel or in series and parallel for forming as a module, wherein mainly consists:
the periphery of the insulation package enclosed member (105) is formed in a sealed hollow sleeve status, and openings formed at two sides allow the positive electrode plate (101) and the negative electrode plate (102) having the separator (104) clamped in between to be disposed, one opening of the insulation package enclosed member (105) allows the electric conductive terminal for inputting/outputting electric energy (1011) and the electric conductive terminal for inputting/outputting electric energy (1021) to be exposed, and the insulation package enclosed member (105) is processed for forming a sealing zone (1051) so as to seal the portions of the electric conductive terminal for inputting/outputting electric energy (1011) and the electric conductive terminal for inputting/outputting electric energy (1021) defined close to the electrode plate, and the distal ends of the electric conductive terminal for inputting/outputting electric energy (1011) and the electric conductive terminal for inputting/outputting electric energy (1021) are exposed at the same side, an electrolyte solution or an electrolyte material is filled in the insulation package enclosed member (105), the other opening allows the electric conductive terminal for inputting/outputting electric energy (1012) and the electric conductive terminal for inputting/outputting electric energy (1022) to be exposed, and the insulation package enclosed member (105) is processed for forming a sealing zone (1052) so as to seal the portions of the electric conductive terminal for inputting/outputting electric energy (1012) and the electric conductive terminal for inputting/outputting electric energy (1022) defined close to the electrode plate, and the distal ends of the electric conductive terminal for inputting/outputting electric energy (1012) and the electric conductive terminal for inputting/outputting electric energy (1022) are exposed and inwardly bent along the exterior of the sealing zone (1052) of the insulation package enclosed member (105) thereby being respectively connected with the lateral positive electric conductive member (109) and the lateral negative electric conductive member (110), wherein the electric conductive terminal for inputting/outputting electric energy (1012) is conductive electrically connected to one end of the lateral positive electric conductive member (109), and the other end of the lateral positive electric conductive member (109) is conductive electrically connected to the electric conductive terminal for inputting/outputting electric energy (1011) thereby forming a parallel conductive electrical connection with positive polarity; the electric conductive terminal for inputting/outputting electric energy (1022) is conductive electrically connected to one end of the lateral negative electric conductive member (110), and the other end of the lateral negative electric conductive member (110) is conductive electrically connected to the electric conductive terminal for inputting/outputting electric energy (1021) thereby forming a parallel conductive electrical connection with negative polarity, so an electricity charging/discharging cell is structured;
the electric conductive strip respectively extended from the top and the bottom ends of the lateral positive electric conductive member (109) are then respectively and conductive electrically connected to the electric conductive terminal for inputting/outputting electric energy (1011) and the electric conductive terminal for inputting/outputting electric energy (1012) having positive polarity, and the electric conductive strip respectively extended from the top and the bottom ends of the lateral negative electric conductive member (110) are then respectively and conductive electrically connected to the electric conductive terminal for inputting/outputting electric energy (1021) and the electric conductive terminal for inputting/outputting electric energy (1022) having negative polarity;
-- outer auxiliary insulation package enclosed member (106): made of a soft or rigid package material having insulation property such as an AL packing foil and formed in a bag-like status having three sides being sealed and allowing the electricity charging/discharging cell packaged by the insulation package enclosed member (105) to be disposed, and the electric conductive terminal for inputting/outputting electric energy (1011) and the electric conductive terminal for inputting/outputting electric energy (1021) of the electricity charging/discharging cell are exposed through openings formed in the outer auxiliary insulation package enclosed member (106), and through the outer auxiliary insulation package enclosed member (106) being processed for forming an outer sealing zone (1061) and the insulation package enclosed member (105) being processed for forming the sealing zone (1051), the mid portions of the electric conductive terminal for inputting/outputting electric energy (1011) and the electric conductive terminal for inputting/outputting electric energy (1021) are sealed, and the distal portions of the electric conductive terminal for inputting/outputting electric energy (1011) and the electric conductive terminal for inputting/outputting electric energy (1021) are exposed at the same side for forming as electric conductive terminals for inputting/outputting electric energy to the exterior, thereby structuring the electricity charging/discharging device with insulation package enclose member having electrode plate pair with multiple-sided electric conductive terminals.

22. An electricity charging/discharging device as claimed in claim 21, wherein one side of the positive electrode plate (101) is further integrally extended with the electric conductive terminal for inputting/outputting electric energy (1012) and the lateral positive electric conductive member (109) then combined with the electric conductive terminal for inputting/outputting electric energy (1011), and one side of the negative electrode plate (102) is integrally extended with the electric conductive terminal for inputting/outputting electric energy (1022) and the lateral negative electric conductive member (110) then combined with the negative electrode plate (102), thereby structuring a single-sided input/output electric conductive interface.

23. An electricity charging/discharging device as claimed in claim 21, wherein the lateral positive electric conductive member (109) and the lateral negative electric conductive member (110) at two sides of the electricity charging/discharging device with insulation package enclose member having electrode plate pair with multiple-sided electric conductive terminals pass the openings (1060) of the outer auxiliary insulation package enclosed member (106) at two sides for respectively being served as the input/output electric conductive interface.

24. An electricity charging/discharging device as claimed in claim 21, wherein the lateral positive electric conductive member (109) being further installed with the lateral positive auxiliary electric conductive member (1091) and the lateral negative electric conductive member (110) being installed with the lateral negative auxiliary electric conductive member (1101) at two sides of the electricity charging/discharging device with insulation package enclose member having electrode plate pair with multiple-sided electric conductive terminals pass the openings (1060) of the outer auxiliary insulation package enclosed member (106) at two sides for respectively being served as the input/output electric conductive interface.

25. An electricity charging/discharging device as claimed in claim 21, wherein the lateral positive electric conductive member (109) having the mid portion being formed with an outwardly-protruded structure and the lateral negative electric conductive member (110) having the mid portion being formed with an outwardly-protruded structure at two sides of the electricity charging/discharging device with insulation package enclose member having electrode plate pair with multiple-sided electric conductive terminals pass the openings (1060) of the outer auxiliary insulation package enclosed member (106) at two sides for respectively being served as the input/output electric conductive interface.

26. An electricity charging/discharging device as claimed in claim 21, wherein the single-sided input/output electric conductive terminal and the lateral positive electric conductive member (109) and the lateral negative electric conductive member (110) of the electrode plate pair are sealed as a multi-layer insulation package enclosed member for forming as the rolling structure, wherein the input/output electric conductive terminal at one side is served as the single-sided input/output electric conductive interface.

27. An electricity charging/discharging device as claimed in claim 26, wherein for enabling the multi-layer insulation package enclosed member to be used for sealing, one or more of the single-sided individually-arranged positive input/output electric conductive terminals and one or more of the negative input/output electric conductive terminals are individually-arranged for forming as the single-sided input/output electric conductive interface.

28. An electricity charging/discharging device as claimed in claim 26, wherein for enabling the multi-layer insulation package enclosed member to be used for sealing, one or more of the single-sided adjacently-arranged positive input/output electric conductive terminals and one or more of the negative input/output electric conductive terminals are adjacently-arranged and homo-polarity connected in parallel for forming as the single-sided input/output electric conductive interface.

29. An electricity charging/discharging device as claimed in claim 26, wherein for enabling the multi-layer insulation package enclosed member to be used for sealing, only the lateral positive electric conductive member (109) and the lateral negative electric conductive member (110) are served to be structured as the single-sided input/output electric conductive interface.

## Patentansprüche

1. Elektrizitätslade-/-entladevorrichtung mit Isolierpaketgehäuseelement mit Elektrodenplattenpaar mit mehrseitigen elektrisch leitenden Anschlüssen, die Folgendes umfasst:
- eine positive Elektrodenplatte (101): bestehend aus blechähnlichen und/oder folienähnlichen positiven Polygon-Elektrodenplatten, wobei einander gegenüberliegende Seiten der positiven Elektrodenplatte jeweils mit einem elektrisch leitenden Anschluss zum Ein-/Ausgeben von elektrischer Energie gebildet sind und die Oberfläche der positiven Elektrodenplatte mit einem elektrochemischen Material versehen ist;
- eine negative Elektrodenplatte (102): bestehend aus blechähnlichen und/oder folienähnlichen negativen Polygon-Elektrodenplatten, wobei einander gegenüberliegende Seiten der negativen Elektrodenplatte jeweils mit einem elektrisch leitenden Anschluss zum Ein-/Ausgeben von elektrischer Energie ausgebildet sind und die Oberfläche der negativen Elektrodenplatte mit einem elektrochemischen Material versehen ist;
- einen Separator (104): gebildet durch eine dünne Folie mit mikroporöser oder poröser Eigenschaft, angeordnet zwischen der positiven und der negativen Elektrodenplatte, zum Isolieren der positiven und der negativen Elektrodenplatte voneinander und installiert auf einer lateralen Seite der Elektrodenplatte gemäß tatsächlichen Erfordernissen;
wobei die Elektrodenplatten mit unterschiedlichen Polaritäten versetzt gestapelt sind, um ein Elektrodenplattenpaar zu bilden; und wenn mehrere der Elektrodenplatten mit derselben Polarität vorgesehen sind, dann sind die Ein-/Ausgangsanschlüsse mit derselben Polarität zum Übertragen von elektrischer Energie, die auf derselben Seite von jeder der Elektrodenplatten mit derselben Polarität gebildet sind, leitend elektrisch parallelgeschaltet;
- ein Isolierpaketgehäuseelement (105): gefertigt aus einem Material mit Isoliereigenschaft, die elektrisch leitenden Anschlüsse zum Ein-/Ausgeben von elektrischer Energie neben der verbundenen Elektrodenplatte, die von wenigstens zwei Seiten davon nach außen verläuft, sind durch das Isolierpaketgehäuseelement (105) abdichtend bedeckt, um eine völlig geschlossene Elektrizitätslade-/
- entladevorrichtung mit Isolierpaketgehäuseelement zu bilden, so dass das Elektrodenplattenpaar elektrische Energie nach außen durch eine von wenigstens zweiseitigen elektrisch leitenden Anschlüssen gebildete elektrisch leitende Schnittstelle aus- oder eingeben kann;
- ein seitliches, positives elektrisch leitendes Element (109): gefertigt aus einem elektrisch leitenden Material und angeordnet auf einer Seite des Isolierpaketgehäuseelements (105); und
- ein seitliches, negatives elektrisch leitendes Element (110): gefertigt aus einem elektrisch leitenden Material und angeordnet auf einer anderen Seite des Isolierpaketgehäuseelements (105);
wobei das seitliche, positive elektrisch leitende Element (109) und das seitliche, negative elektrisch leitende Element (110) aus einem elektrisch leitenden Element zusammengesetzt sind, gebildet in einem vierseitigen, blechähnlichen oder streifenähnlichen oder kreisförmigen blechähnlichen Zustand, wobei das obere und das untere Ende davon jeweils durch einen elektrisch leitenden Streifen verlängert sind, der sich zu den elektrisch leitenden Anschlüssen auf gegenüberliegenden Seiten der positiven oder negativen Elektrodenplatten erstreckt.

2. Elektrizitätslade-/-entladevorrichtung nach Anspruch 1, wobei wenigstens eine oder mehrere der Elektrizitätslade-/-entladezellen im Innern von einem oder mehreren der Gehäuse angeordnet sind, um gesammelt zu werden, um eine modularisierte Struktur zu bilden, die durch die elektrisch leitenden Elemente oder die elektrisch leitende Ein-/Ausgangsschnittstelle jeder Elektrizitätslade-/-entladevorrichtung zum Übertragen von elektrischer Energie verbunden ist; gefertigt aus einem weichen flexiblen Material oder einem starren Material, wobei wenigstens eine der Elektrizitätslade-/-entladezellen innerhalb des Gehäuses (120) angeordnet ist.

3. Elektrizitätslade-/-entladevorrichtung nach Anspruch 1 oder Anspruch 2, die ferner in einer Elektrizitätslade-/-entladevorrichtung mit Isolierpaketgehäuseelement mit Elektrodenplattenpaar mit mehrseitigen elektrisch leitenden Anschlüssen angewendet wird, um es dadurch zuzulassen, dass das Elektrodenplattenpaar mit mehrseitigen elektrisch leitenden Anschlüssen als elektrisch leitende Ein-/Ausgangsschnittstelle durch einseitige elektrisch leitende Ein-/Ausgangsanschlüsse mit positiver und negativer Polarität zum Zwecke des Übertragens von elektrischer Energie nach außen strukturiert oder ferner in Serie, parallel oder in Serie und parallel geschaltet wird, um ein Modul zu bilden, wobei
die Peripherie des Isolierpaketgehäuseelements (105) in einem abgedichteten, hohlen Hülsenzustand ausgebildet ist und auf zwei Seiten ausgebildete Öffnungen es zulassen, die positive Elektrodenplatte (101) und die negative Elektrodenplatte (102) mit dem dazwischen eingespannten Separator (104) anzuordnen, wobei eine Öffnung des Isolierpaketgehäuseelements (105) das Exponieren des elektrisch leitenden Anschlusses zum Ein-/Ausgeben von elektrischer Energie (1011) und des elektrisch leitenden Anschlusses zum Ein-/Ausgeben von elektrischer Energie (1021) zulässt, und das Isolierpaketgehäuseelement (105) zum Bilden einer Abdichtungsszone (1051) verarbeitet ist, um die nahe an der Elektrodenplatte definierten Teile des elektrisch leitenden Anschlusses zum Ein-/Ausgeben von elektrischer Energie (1011) und des elektrischen leitenden Anschlusses zum Ein-/Ausgeben von elektrischer Energie (1021) abzudichten, und die distalen Enden des elektrisch leitenden Anschlusses zum Ein-/Ausgeben von elektrischer Energie (1011) und des elektrisch leitenden Anschlusses zum Ein-/Ausgeben von elektrischer Energie (1021) auf derselben Seite exponiert sind, eine Elektrolytlösung oder ein Elektrolytmaterial in das Isolierpaketgehäuseelement (105) gefüllt wird, die andere Öffnung das Exponieren des elektrisch leitenden Anschlusses zum Ein-/Ausgeben von elektrischer Energie (1012) und des elektrisch leitenden Anschlusses zum Ein-/Ausgeben von elektrischer Energie (1022) zulässt, und das Isolierpaketgehäuseelement (105) zum Bilden einer Abdichtungszone (1052) verarbeitet wird, um die nahe der Elektrodenplatten definierten Teile des elektrisch leitenden Anschlusses zum Ein-/Ausgeben von elektrischer Energie (1012) und des elektrisch leitenden Anschlusses zum Ein-/Ausgeben von elektrischer Energie (1022) abzudichten, und die distalen Enden des elektrisch leitenden Anschlusses zum Ein-/Ausgeben von elektrischer Energie (1012) und des elektrisch leitenden Anschlusses zum Ein-/Ausgeben von elektrischer Energie (1022) exponiert und einwärts entlang der Außenseite der Abdichtungszone (1052) des Isolierpaketgehäuseelements (105) gebogen und dadurch jeweils mit dem seitlichen, positiven elektrisch leitenden Element (109) und dem seitlichen, negativen elektrisch leitenden Element (110) verbunden sind, wobei der elektrisch leitende Anschluss zum Ein-/Ausgeben von elektrischer Energie (1012) leitend elektrisch mit einem Ende des seitlichen, positiven elektrisch leitenden Elements (109) verbunden ist und das andere Ende des seitlichen, positiven elektrisch leitenden Elements (109) leitend elektrisch mit dem elektrisch leitenden Anschluss zum Ein-/Ausgeben von elektrischer Energie (1011) verbunden ist, um dadurch eine Parallelschaltung mit positiver Polarität zu bilden; der elektrisch leitende Anschluss zum Ein-/Ausgeben von elektrischer Energie (1022) ist elektrisch mit einem Ende des seitlichen, negativen elektrisch leitenden Elements (110) verbunden und das andere Ende des seitlichen, negativen elektrisch leitenden Elements (110) ist leitend elektrisch mit dem elektrisch leitenden Anschluss zum Ein-/Ausgeben von elektrischer Energie (1021) verbunden, um dadurch eine leitende elektrische Parallelschaltung mit negativer Polarität zu bilden, so dass eine Elektrizitätslade-/-entladezelle strukturiert wird;
wobei die elektrisch leitenden Streifen, die sich jeweils vom oberen und unteren Ende des seitlichen, positiven elektrisch leitenden Elements (109) erstrecken, dann jeweils und leitend elektrisch mit dem elektrisch leitenden Anschluss zum Ein-/Ausgeben von elektrischer Energie (1011) und dem elektrisch leitenden Anschluss zum Ein-/Ausgeben von elektrischer Energie (1012) mit positiver Polarität verbunden sind, und die elektrisch leitenden Streifen, die sich jeweils vom oberen und unteren Ende des seitlichen, negativen elektrisch leitenden Elements (110) erstrecken, werden dann jeweils und leitend elektrisch mit dem elektrisch leitenden Anschluss zum Ein-/Ausgeben von elektrischer Energie (1021) und dem elektrisch leitenden Anschluss zum Ein-/Ausgeben von elektrischer Energie (1022) mit negativer Polarität verbunden.

4. Elektrizitätslade-/-entladevorrichtung nach Anspruch 3, wobei die positive Elektrodenplatte (101) und das seitliche, positive elektrisch leitende Element (109) und die negative Elektrodenplatte (102) und das seitliche, negative elektrisch leitende Element (110) weiter einstückig ausgebildet sind.

5. Elektrizitätslade-/-entladevorrichtung nach Anspruch 3, wobei die positive Elektrodenplatte (101) und das seitliche, positive elektrisch leitende Element (109) und die negative Elektrodenplatte (102) und das seitliche, negative elektrisch leitende Element (110) ferner einstückig ausgebildet sind, und wobei die elektrisch leitenden Ein-/Ausgangsanschlüsse mit wenigstens einem elektrisch leitenden Ein-/Ausgangsanschluss mit positiver Polarität und wenigstens einem elektrisch leitenden Ein-/Ausgangsanschluss mit negativer Polarität auf zwei Seiten des Elektrodenplattenpaares und das blechähnliche, seitliche, positive elektrisch leitende Element (109) und das seitliche, negative elektrisch leitende Element (110) auf zwei lateralen Seiten als elektrisch leitende Mehrfach-Ein-/Ausgangsschnittstelle strukturiert sind.

6. Elektrizitätslade-/-entladevorrichtung nach Anspruch 3, wobei die elektrisch leitenden Ein-/Ausgangsanschlüsse mit positiver und negativer Polarität, die jeweils durch eine gefaltete Struktur auf zwei Seiten des Elektrodenplattenpaares ausgebildet sind, und das blechähnliche, seitliche, positive elektrisch leitende Element (109) und das seitliche, negative elektrisch leitende Element (110) auf zwei lateralen Seiten als elektrisch leitende Mehrfach-Ein-/Ausgangsschnittstelle strukturiert sind.

7. Elektrizitätslade-/-entladevorrichtung nach Anspruch 3, wobei ein elektrisch leitender Ein-/Ausgangsanschluss mit unterschiedlicher Polarität und jeweils vorgesehen an zwei Enden definiert auf derselben Seite des Elektrodenplattenpaares, und das blechähnliche, seitliche, positive elektrisch leitende Element (109) und das seitliche, negative elektrisch leitende Element (110) auf zwei lateralen Seiten des Elektrodenplattenpaares als elektrisch leitende Mehrfach-Ein-/Ausgabeschnittstelle strukturiert sind.

8. Elektrizitätslade-/-entladevorrichtung nach Anspruch 3, wobei das seitliche, positive elektrisch leitende Element (109) und das seitliche, negative elektrisch leitende Element (110) auf zwei Seiten der Elektrizitätslade-/-entladevorrichtung mit Isolierpaketgehäuseelement mit Elektrodenplattenpaar mit mehrseitigen elektrisch leitenden Anschlüssen als elektrisch leitende Ein-/Ausgangsschnittstelle zur individuellen Benutzung oder in Serie, parallel oder in Serie und parallelgeschaltet dienen kann, wobei die Konfiguration Folgendes beinhaltet:
- exponierte elektrisch leitende Oberflächen von einem seitlichen, positiven elektrisch leitenden Element (109) und einem gegenüberliegenden seitlichen, negativen elektrisch leitenden Element (110) sind direkt als elektrisch leitende Ein-/Ausgangsschnittstelle zur individuellen Benutzung, oder in Serie, parallel oder in Serie und parallel geschaltet ausgebildet; oder
- die exponierte Oberfläche des seitlichen, positiven elektrisch leitenden Elements (109) ist mit einem seitlichen, positiven, zusätzlichen elektrisch leitenden Element (1091) versehen und die exponierte Oberfläche des seitlichen, negativen elektrisch leitenden Elements (110) ist mit einem seitlichen, negativen, zusätzlichen elektrisch leitenden Element (1101) versehen, um die elektrisch leitende Ein-/Ausgangsschnittstelle zur individuellen Benutzung oder in Serie, parallel oder in Serie und parallel geschaltet zu strukturieren; oder
- eine oder mehrere Stellen, definiert im mittleren Teil des seitlichen, positiven elektrisch leitenden Elements (109), sind mit einer nach außen vorstehenden Struktur ausgebildet und eine oder mehrere Stellen, definiert im mittleren Teil des seitlichen, negativen elektrisch leitenden Elements (110), sind mit einer nach außen vorstehenden Struktur ausgebildet, um dadurch die elektrisch leitende Ein-/Ausgangsschnittstelle zur individuellen Benutzung oder in Serie, parallel oder in Serie und parallel geschaltet zu strukturieren.

9. Elektrizitätslade-/-entladevorrichtung nach Anspruch 3, wobei die positive Elektrodenplatte (101) und die negative Elektrodenplatte (102) des elektrisch leitenden Ein-/Ausgangsanschlusses, auf zwei Seiten verlängert, und der Separator (104) als Rollstruktur ausgebildet sind, und die distalen Anschlüsse und/oder das seitliche, positive elektrisch leitende Element (109) und das seitliche, negative elektrisch leitende Element (110) auf zwei lateralen Seiten als elektrisch leitende Mehrfach-Ein/-Ausgangsschnittstelle strukturiert sind.

10. Elektrizitätslade-/-entladevorrichtung nach Anspruch 9, wobei wenigstens das seitliche, positive elektrisch leitende Element (109) und das seitliche, negative elektrisch leitende Element (110) auf zwei lateralen Seiten und wenigstens ein elektrisch leitender Ein-/Ausgangsanschluss an einem distalen Ende, definiert auf einer Seite, individuell zum Strukturieren als elektrisch leitende Mehrfach-Ein-/Ausgangsschnittstelle angeordnet sind.

11. Elektrizitätslade-/-entladevorrichtung nach Anspruch 9, wobei das Einzelschicht-Isolierpaketgehäuseelement (105) als Isolierpaket auf zwei lateralen Seiten dient und die elektrisch leitenden Ein-/Ausgangsanschlüsse auf zwei Seiten benachbart angeordnet sind, zum Strukturieren als elektrisch leitende Mehrfach-Ein-/Ausgangsschnittstelle.

12. Elektrizitätslade-/-entladevorrichtung nach Anspruch 9, wobei das seitliche, positive elektrisch leitende Element (109) und das seitliche, negative elektrisch leitende Element (110) auf zwei lateralen Seiten angeordnet sind und die elektrisch leitenden Ein-/Ausgangsanschlüsse auf zwei Seiten als elektrisch leitende Mehrfach-Ein-/Ausgangsschnittstelle strukturiert sind.

13. Elektrizitätslade-/-entladevorrichtung nach Anspruch 1 oder 2, die ferner in einer Elektrizitätslade-/-entladevorrichtung mit Isolierpaketgehäuseelement mit Elektrodenplattenpaar mit mehrseitigen elektrisch leitenden Anschlüssen angewendet wird, so dass das Elektrodenplattenpaar mit mehrseitigen elektrisch leitenden Anschlüsse nach dem Bedecken und Verpacken als elektrisch leitende Ein-/Ausgangsschnittstelle durch einen einzelnen elektrisch leitenden Ein-/Ausgangsanschluss mit positiver und negativer Polarität zum Übertragen von elektrischer Energie nach außen strukturiert oder ferner in Serie, parallel oder in Serie und parallel geschaltet werden kann, hauptsächlich wie folgt zusammengesetzt:
die Peripherie des Isolierpaketgehäuseelements (105) ist in einem abgedichteten hohlen Hülsenzustand ausgebildet und auf zwei Seiten ausgebildete Öffnungen lassen es zu, die positive Elektrodenplatte (101) und die negative Elektrodenplatte (102) mit dem dazwischen eingespannten Separator (104) anzuordnen, wobei eine Öffnung des Isolierpaketgehäuseelements (105) das Exponieren des elektrisch leitenden Anschlusses zum Ein-/Ausgeben von elektrischer Energie (1011) und des elektrisch leitenden Anschlusses zum Ein-/Ausgeben von elektrischer Energie (1021) zulässt, und das Isolierpaketgehäuseelement (105) wird zum Bilden einer Abdichtungszone (1051) verarbeitet, um die in der Nähe der Elektrodenplatte definierten Teile des elektrisch leitenden Anschlusses zum Ein-/Ausgeben von elektrischer Energie (1011) und des elektrisch leitenden Anschlusses zum Ein-/Ausgeben von elektrischer Energie (1021) abzudichten, und die distalen Enden des elektrisch leitenden Anschlusses zum Ein-/Ausgeben von elektrischer Energie (1011) und des elektrisch leitenden Anschlusses zum Ein-/Ausgeben von elektrischer Energie (1021) sind auf derselben Seite exponiert, zum Strukturieren als einseitige elektrisch leitende Ein-/Ausgangsschnittstelle; das Innere des Isolierpaketgehäuseelements (105) lässt das Einfüllen einer Elektrolytlösung oder eines Elektrolytmaterials zu; das seitliche, positive elektrisch leitende Element (109) ist auf einer Seite angeordnet, definiert auf der Außenseite des Isolierpaketgehäuseelements (105) und elektrisch zwischen dem elektrisch leitenden Anschluss zum Ein-/Ausgeben von elektrischer Energie (1011) und dem elektrisch leitenden Anschluss zum Ein-/Ausgeben von elektrischer Energie (1012) geschaltet, das seitliche, negative elektrisch leitende Element (110) ist auf einer anderen Seite angeordnet, definiert auf der Außenseite des Isolierpaketgehäuseelements (105) und elektrisch zwischen dem elektrisch leitenden Anschluss zum Ein-/Ausgeben von elektrischer Energie (1021) und dem elektrisch leitenden Anschluss zum Ein-/Ausgeben von elektrischer Energie (1022) geschaltet; ein anderes Ende des Isolierpaketgehäuseelements (105) ist mit zwei faltbaren Abdeck- und Verpackungssegmenten (1050) ausgebildet, um es zuzulassen, dass der elektrisch leitende Anschluss zum Ein-/Ausgeben von elektrischer Energie (1012), der elektrisch leitende Anschluss zum Ein-/Ausgeben von elektrischer Energie (1022) am anderen Ende und das Isolierpaketgehäuseelement (105) zum Bilden einer Abdichtungszone (1052) verarbeitet werden, um den elektrisch leitenden Anschluss zum Ein-/Ausgeben von elektrischer Energie (1012) und den elektrisch leitenden Anschluss zum Ein-/Ausgeben von elektrischer Energie (1022) abzudichten, dann werden die zwei faltbaren Abdeck- und Verpackungssegmente (1050) jeweils und aufwärts entlang zwei Seiten gefaltet, definiert auf der Außenseite der Abdichtungszone (1052) des Isolierpaketgehäuseelements (105), zum jeweiligen Abdichten und Bedecken des seitlichen, positiven elektrisch leitenden Elements (109) und des seitlichen, negativen elektrisch leitenden Elements (110), und ferner aufwärts verlängert zum Abdichten in der Abdichtungszone (1051) mit den in der Nähe der Elektrodenplatte definierten Teilen des elektrisch leitenden Anschlusses zum Ein-/Ausgeben von elektrischer Energie (1011) und des elektrisch leitenden Anschlusses zum Ein-/Ausgeben von elektrischer Energie (1021), wobei der elektrisch leitende Anschluss zum Ein-/Ausgeben von elektrischer Energie (1012) elektrisch mit einem Ende des seitlichen, positiven elektrisch leitenden Elements (109) verbunden ist, und dann durch das andere Ende des seitlichen, positiven elektrisch leitenden Elements (109) elektrisch mit dem elektrisch leitenden Anschluss zum Ein-/Ausgeben von elektrischer Energie (1011) verbunden ist, um dadurch elektrisch leitend eine Parallelschaltung mit positiver Polarität zu bilden; der elektrisch leitende Anschluss zum Ein-/Ausgeben von elektrischer Energie (1022) ist elektrisch mit einem Ende des seitlichen, negativen elektrisch leitenden Elements (110) und dann durch das andere Ende des seitlichen, negativen elektrisch leitenden Elements (110) elektrisch mit dem elektrisch leitenden Anschluss zum Ein-/Ausgeben von elektrischer Energie (1021) verbunden, um dadurch elektrisch leitend eine Parallelschaltung mit negativer Polarität zu bilden, so dass die Elektrizitätslade-/ -entladevorrichtung mit Isolierpaketgehäuseelement mit Elektrodenplattenpaar mit mehrseitigen elektrisch leitenden Anschlüssen strukturiert wird, und die exponierten distalen Teile des elektrisch leitenden Anschlusses zum Ein-/Ausgeben von elektrischer Energie (1011) und des elektrisch leitenden Anschlusses zum Ein-/Ausgeben von elektrischer Energie (1021) als einseitige elektrisch leitende Ein-/Ausgangsschnittstelle strukturiert sind;
wobei die elektrisch leitenden Streifen, die sich jeweils vom oberen und unteren Ende des seitlichen, positiven elektrisch leitenden Elements (109) erstrecken, dann jeweils und elektrisch parallel mit dem elektrisch leitenden Anschluss zum Ein-/Ausgeben von elektrischer Energie (1011) und dem elektrisch leitenden Anschluss zum Ein-/Ausgeben von elektrischer Energie (1012) mit positiver Polarität geschaltet sind, und die elektrisch leitenden Streifen, die sich jeweils vom oberen und unteren Ende des seitlichen, negativen elektrisch leitenden Elements (110) erstrecken, dann jeweils und elektrisch parallel mit dem elektrisch leitenden Anschluss zum Ein-/Ausgeben von elektrischer Energie (1021) und dem elektrisch leitenden Anschluss zum Ein-/Ausgeben von elektrischer Energie (1022) mit negativer Polarität geschaltet sind, und die exponierten Teile des elektrisch leitenden Anschlusses zum Ein-/Ausgeben von elektrischer Energie (1011) und des elektrisch leitenden Anschlusses zum Ein-/Ausgeben von elektrischer Energie (1021) als einseitige elektrisch leitende Ein-/Ausgangsschnittstelle strukturiert sind.

14. Elektrizitätslade-/-entladevorrichtung nach Anspruch 13, wobei das seitliche, positive elektrisch leitende Element (109) und das seitliche, negative elektrisch leitende Element (110) auf zwei Seiten der Elektrizitätslade-/-entladevorrichtung mit Isolierpaketgehäuseelement mit Elektrodenplattenpaar mit mehrseitigen elektrisch leitenden Anschlüssen ferner als elektrisch leitende Ein-/Ausgangsschnittstelle zur individuellen Benutzung oder in Serie, parallel oder in Serie und parallel geschaltet dienen kann, wobei die Konfiguration Folgendes beinhaltet:
- exponierte elektrisch leitende Oberflächen eines seitlichen, positiven elektrisch leitenden Elements (109) und eines gegenüberliegenden seitlichen, negativen elektrisch leitenden Elements (110) sind direkt als elektrisch leitende Ein-/Ausgangsschnittstelle zur individuellen Benutzung oder in Serie, parallel oder in Serie und parallel geschaltet ausgebildet; oder
- die exponierte Oberfläche des seitlichen, positiven elektrisch leitenden Elements (109) ist mit einem seitlichen, positiven, zusätzlichen elektrisch leitenden Element (1091) versehen und die exponierte Oberfläche des seitlichen, negativen elektrisch leitenden Elements (110) ist mit einem seitlichen, negativen, zusätzlichen elektrisch leitenden Element (1101) versehen, um dadurch die elektrisch leitende Ein-/Ausgangsschnittstelle zur individuellen Benutzung oder in Serie, parallel oder in Serie und parallel geschaltet zu strukturieren; oder
- eine oder mehrere Stellen, definiert im mittleren Teil des seitlichen, positiven elektrisch leitenden Elements (109), sind mit einer nach außen vorstehenden Struktur gebildet, und eine oder mehrere Stellen, definiert im mittleren Teil des seitlichen, negativen elektrisch leitenden Elements (110), sind mit einer nach außen vorstehenden Struktur ausgebildet, um dadurch die elektrisch leitende Ein-/Ausgangsschnittstelle zur individuellen Benutzung oder in Serie, parallel oder in Serie und parallel geschaltet zu strukturieren.

15. Elektrizitätslade-/-entladevorrichtung nach Anspruch 13, wobei eine Seite des Elektrodenplattenpaars mit dem blechähnlichen, seitlichen, positiven elektrisch leitenden Element (109) und dem seitlichen, negativen elektrisch leitenden Element (110) als elektrisch leitender Ein-/Ausgangsanschluss mit positiver Polarität dient und die andere Seite davon als elektrisch leitender Ein-/Ausgangsanschluss mit negativer Polarität dient, um dadurch die einseitige elektrisch leitende Ein-/Ausgangsschnittstelle zu strukturieren, hauptsächlich wie folgt zusammengesetzt:
die Peripherie des Isolierpaketgehäuseelements (105) ist in einem abgedichteten hohlen Hülsenzustand gebildet und auf zwei Seiten ausgebildete Öffnungen erlauben das Anordnen der positiven Elektrodenplatte (101) und der negativen Elektrodenplatte (102) mit dem dazwischen eingespannten Separator (104), ein distales Ende des Isolierpaketgehäuseelements (105) ist mit einem faltbaren Abdeck- und Verpackungssegment (1050) ausgebildet; durch das Falten werden das Abdeck- und Verpackungssegment (1050), das von dem Isolierpaketgehäuseelement (105) nach oben vorsteht, das als innere Isolierung für das seitliche, negative elektrisch leitende Element (110) dient, und das nach oben verlaufende Segment des Isolierpaketgehäuseelements (105), das die innere Isolierung des seitlichen, positiven elektrisch leitenden Elements (109) abdeckt, zum Bilden der Abdichtungszone (1051) verarbeitet, der elektrisch leitende Verbindungsteil des elektrisch leitenden Anschlusses zum Ein-/Ausgeben von elektrischer Energie (1011) und das nach oben verlaufende Segment des seitlichen, positiven elektrisch leitenden Elements (109) können abgedichtet werden; und durch das Falten werden das Abdeck- und Verpackungssegment (1050), das von dem Isolierpaketgehäuseelement (105) nach oben vorsteht, das als innere Isolierung für das seitliche, positive elektrisch leitende Element (109) dient, und das nach oben verlaufende Segment des Isolierpaketgehäuseelements (105), das die innere Isolierung des seitlichen, negativen elektrisch leitenden Elements (110) bedeckt, zum Bilden der Abdichtungszone (1051) verarbeitet, der elektrisch leitende Verbindungsteil des elektrisch leitenden Anschlusses zum Ein-/Ausgeben von elektrischer Energie (1021) und das nach oben verlaufende Segment des seitlichen, negativen elektrisch leitenden Elements (110) können abgedichtet werden; das Innere des Isolierpaketgehäuseelements (105) erlaubt das Einfüllen einer Elektrolytlösung oder eines Elektrolytmaterials; und durch das Falten werden das Abdeck- und Verpackungssegment (1050), das von dem Isolierpaketgehäuseelement (105) nach unten vorsteht, das als innere Isolierung für das seitliche, negative elektrisch leitende Element (110) dient, und das nach unten verlaufende Segment des Isolierpaketgehäuseelements (105), das die innere Isolierung des seitlichen, positiven elektrisch leitenden Elements (109) bedeckt, zum Bilden der Abdichtungszone (1052) verarbeitet, der elektrisch leitende Verbindungsteil des elektrisch leitenden Anschlusses zum Ein-/Ausgeben von elektrischer Energie (1012) und das nach unten verlaufende Segment des seitlichen, positiven elektrisch leitenden Elements (109) können abgedichtet werden; und durch das Falten werden das Abdeck- und Verpackungssegment (1050), das von dem Isolierpaketgehäuseelement (105) nach unten vorsteht, das als innere Isolierung für das seitliche, positive elektrisch leitende Element (109) dient, und das nach unten verlaufende Segment des Isolierpaketgehäuseelements (105), das die innere Isolierung des seitlichen, negativen elektrisch leitenden Elements (110) bedeckt, zum Bilden der Abdichtungszone (1052) verarbeitet, der elektrisch leitende Verbindungsteil des elektrisch leitenden Anschlusses zum Ein-/Ausgeben von elektrischer Energie (1022) und das nach unten verlaufende Segment des seitlichen, negativen elektrisch leitenden Elements (110) können abgedichtet werden, wobei der elektrisch leitende Anschluss zum Ein-/Ausgeben von elektrischer Energie (1012) elektrisch mit einem Ende des seitlichen, positiven elektrisch leitenden Elements (109) verbunden ist und dann durch das andere Ende des seitlichen, positiven elektrisch leitenden Elements (109) elektrisch mit dem elektrisch leitenden Anschluss zum Ein-/Ausgeben von elektrischer Energie (1011) verbunden ist, um dadurch elektrisch leitend eine Parallelschaltung mit positiver Polarität zu bilden; der elektrisch leitende Anschluss zum Ein-/Ausgeben von elektrischer Energie (1022) ist elektrisch mit einem Ende des seitlichen, negativen elektrisch leitenden Elements (110) verbunden und dann durch das andere Ende des seitlichen, negativen elektrisch leitenden Elements (110) elektrisch mit dem elektrisch leitenden Anschluss zum Ein-/Ausgeben von elektrischer Energie (1021) verbunden, um dadurch elektrisch leitend eine Parallelschaltung mit negativer Polarität zu bilden, und die exponierte elektrisch leitende Oberfläche des seitlichen, positiven elektrisch leitenden Elements (109) und die exponierte elektrisch leitende Oberfläche des seitlichen, negativen elektrisch leitenden Elements (110) sind zum Bilden der einseitigen elektrisch leitenden Ein-/Ausgangsschnittstelle strukturiert;
und die elektrisch leitenden Streifen, die sich jeweils vom oberen und unteren Ende des seitlichen, positiven elektrisch leitenden Elements (109) erstrecken, werden dann jeweils und elektrisch parallel mit dem elektrisch leitenden Anschluss zum Ein-/Ausgeben von elektrischer Energie (1011) und dem elektrisch leitenden Anschluss zum Ein-/Ausgeben von elektrischer Energie (1012) mit positiver Polarität geschaltet, und die elektrisch leitenden Streifen, die sich vom oberen und unteren Ende des seitlichen, negativen elektrisch leitenden Elements (110) erstrecken, werden dann jeweils und elektrisch mit dem elektrisch leitenden Anschluss zum Ein-/Ausgeben von elektrischer Energie (1021) und dem elektrisch leitenden Anschluss zum Ein-/Ausgeben von elektrischer Energie (1022) mit negativer Polarität geschaltet, und die exponierte elektrisch leitende Oberfläche des seitlichen, positiven elektrisch leitenden Elements (109) und die exponierte elektrisch leitende Oberfläche des seitlichen, negativen elektrisch leitenden Elements (110) sind zum Bilden als einseitige elektrisch leitende Ein-/Ausgangsschnittstelle strukturiert.

16. Elektrizitätslade-/-entladevorrichtung nach Anspruch 13, wobei der einseitige elektrisch leitende Ein-/Ausgangsanschluss und das seitliche, positive elektrisch leitende Element (109) und das seitliche, negative elektrisch leitende Element (110) des Elektrodenplattenpaares der Elektrizitätslade-/-entladevorrichtung mit Isolierpaketgehäuseelement mit Elektrodenplattenpaar mit mehrseitigen elektrisch leitenden Anschlüssen in einem Einzelschicht-Isolierzustand abgedichtet sind, zum Bilden einer Rollstruktur, und der elektrisch leitende Ein-/Ausgangsanschluss auf einer Seite als elektrisch leitende Ein-/Ausgangsschnittstelle dient.

17. Elektrizitätslade-/-entladevorrichtung nach Anspruch 16, wobei zum Zulassen, dass das seitliche, positive elektrisch leitende Element (109), das seitliche, negative elektrisch leitende Element (110) und der elektrisch leitende Ein-/Ausgangsanschluss auf einer Seite in einem Einzelschicht-Isolierzustand abgedichtet werden, die positive Elektrodenplatte (101), die negative Elektrodenplatte (102), der Separator (104), das seitliche, positive elektrisch leitende Element (109) und das seitliche, negative elektrisch leitende Element (110) als Rollstruktur ausgebildet sind, und ein oder mehrere der einseitigen, individuell angeordneten elektrisch leitenden Ein-/Ausgangsanschlüsse mit positiver Polarität und ein oder mehrere der elektrisch leitenden Ein-/Ausgangsanschlüsse mit negativer Polarität individuell angeordnet sind, zum Strukturieren als einseitige elektrisch leitende Ein-/Ausgangsschnittstelle.

18. Elektrizitätslade-/-entladevorrichtung nach Anspruch 16, wobei zum Zulassen, dass das seitliche, positive elektrisch leitende Element (109), das seitliche, negative elektrisch leitende Element (110) und der elektrisch leitende Ein-/Ausgangsanschluss auf einer Seite in einem Einzelschicht-Isolierzustand abgedichtet werden, die positive Elektrodenplatte (101), die negative Elektrodenplatte (102), das Isolierelement (104), das seitliche, positive elektrisch leitende Element (109) und das seitliche, negative elektrisch leitende Element (110) als Rollstruktur ausgebildet sind, und ein oder mehrere der einseitigen, benachbart angeordneten positiven elektrisch leitenden Ein-/Ausgangsanschlüsse und ein oder mehrere der negativen elektrisch leitenden Ein-/Ausgangsanschlüsse benachbart angeordnet und parallel homopolaritätsgeschaltet sind, zum Strukturieren als einseitige elektrisch leitende Ein-/Ausgangsschnittstelle.

19. Elektrizitätslade-/-entladevorrichtung nach Anspruch 13, wobei die elektrisch leitenden Ein-/Ausgangsanschlüsse auf zwei Seiten des Elektrodenplattenpaares der Elektrizitätslade-/-entladevorrichtung mit Isolierpaketgehäuseelement mit Elektrodenplattenpaar mit mehrseitigen elektrisch leitenden Anschlüssen in einem Einzelschicht-Isolierzustand abgedichtet sind, und das seitliche, positive elektrisch leitende Element (109) und das seitliche, negative elektrisch leitende Element (110) als einseitige elektrisch leitende Ein-/Ausgangsschnittstelle zum Bilden der Rollstruktur strukturiert sind.

20. Elektrizitätslade-/-entladevorrichtung nach Anspruch 19, wobei zum Zulassen, dass die elektrisch leitenden Ein-/Ausgangsanschlüsse auf zwei Seiten des Elektrodenplattenpaares in einem Einzelschicht-Isolierzustand abgedichtet werden, das seitliche, positive elektrisch leitende Element (109) und das seitliche, negative elektrisch leitende Element (110) auf zwei Seiten als einseitige elektrisch leitende Ein-/Ausgangsschnittstelle strukturiert sind.

21. Elektrizitätslade-/-entladevorrichtung nach Anspruch 1 oder Anspruch 2, die in einer Elektrizitätslade-/-entladevorrichtung mit Isolierpaketgehäuseelement mit Elektrodenplattenpaar mit mehrseitigen elektrisch leitenden Anschlüssen angewendet wird, um es dadurch zuzulassen, das Elektrodenplattenpaar mit mehrseitigen elektrisch leitenden Anschlüssen in eine elektrisch leitende Ein-/Ausgangsschnittstelle durch einseitige elektrisch leitende Ein-/Ausgangsanschlüsse mit positiver und negativer Polarität für die Zwecke des Übertragens von elektrischer Energie nach außen oder ferner zum Schalten in Serie, parallel oder in Serie und parallel zum Ausbilden als Modul umzuwandeln, hauptsächlich wie folgt zusammengesetzt:
die Peripherie des Isolierpaketgehäuseelements (105) ist in einem abgedichteten hohlen Hülsenzustand ausgebildet und auf zwei Seiten ausgebildete Öffnungen lassen das Anordnen der positiven Elektrodenplatte (101) und der negativen Elektrodenplatte (102) mit dem dazwischen eingespannten Separator (104) zu, wobei eine Öffnung des Isolierpaketgehäuseelements (105) das Exponieren des elektrisch leitenden Anschlusses zum Ein-/Ausgeben von elektrischer Energie (1011) und des elektrisch leitenden Anschlusses zum Ein-/Ausgeben von elektrischer Energie (1021) zulässt, und das Isolierpaketgehäuseelement (105) wird zum Bilden einer Abdichtungszone (1051) verarbeitet, um die in der Nähe der Elektrodenplatte definierten Teile des elektrisch leitenden Anschlusses zum Ein-/Ausgeben von elektrischer Energie (1011) und des elektrisch leitenden Anschlusses zum Ein-/Ausgeben von elektrischer Energie (1021) abzudichten, und die distalen Enden des elektrisch leitenden Anschlusses zum Ein-/Ausgeben von elektrischer Energie (1011) und des elektrisch leitenden Anschlusses zum Ein-/Ausgeben von elektrischer Energie (1021) sind auf derselben Seite exponiert, eine Elektrolytlösung oder ein Elektrolytmaterial wird in das Isolierpaketgehäuseelement (105) gefüllt, die andere Öffnung erlaubt das Exponieren des elektrisch leitenden Anschlusses zum Ein-/Ausgeben von elektrischer Energie (1012) und des elektrisch leitenden Anschlusses zum Ein-/Ausgeben von elektrischer Energie (1022), und das Isolierpaketgehäuseelement (105) wird zum Bilden einer Abdichtungszone (1052) verarbeitet, um die in der Nähe der Elektrodenplatte definierten Teile des elektrisch leitenden Anschlusses zum Ein-/Ausgeben von elektrischer Energie (1012) und des elektrisch leitenden Anschlusses zum Ein-/Ausgeben von elektrischer Energie (1022) abzudichten, und die distalen Enden des elektrisch leitenden Anschlusses zum Ein-/Ausgeben von elektrischer Energie (1012) und des elektrisch leitenden Anschlusses zum Ein-/Ausgeben von elektrischer Energie (1022) sind exponiert und einwärts entlang der Außenseite der Abdichtungszone (1052) des Isolierpaketgehäuseelements (105) gebogen, um dadurch jeweils mit dem seitlichen, positiven elektrisch leitenden Element (109) und dem seitlichen, negativen elektrisch leitenden Element (110) verbunden zu werden, wobei der elektrisch leitende Anschluss zum Ein-/Ausgeben von elektrischer Energie (1012) leitend elektrisch mit einem Ende des seitlichen, positiven elektrisch leitenden Elements (109) verbunden ist und das andere Ende des seitlichen, positiven elektrisch leitenden Elements (109) leitend elektrisch mit dem elektrisch leitenden Anschluss zum Ein-/Ausgeben von elektrischer Energie (1011) verbunden ist, um dadurch eine leitende elektrische Parallelschaltung mit positiver Polarität zu bilden; der elektrisch leitende Anschluss zum Ein-/Ausgeben von elektrischer Energie (1022) ist leitend elektrisch mit einem Ende des seitlichen, negativen elektrisch leitenden Elements (110) verbunden und das andere Ende des seitlichen, negativen elektrisch leitenden Elements (110) ist leitend elektrisch mit dem elektrisch leitenden Anschluss zum Ein-/Ausgeben von elektrischer Energie (1021) verbunden, um dadurch eine leitende elektrische Parallelschaltung mit negativer Polarität zu bilden, um eine Elektrizitätslade-/ -entladezelle zu strukturieren;
die elektrisch leitenden Streifen, die sich jeweils vom oberen und unteren Ende des seitlichen, positiven elektrisch leitenden Elements (109) erstrecken, werden dann jeweils und leitend elektrisch mit dem elektrisch leitenden Anschluss zum Ein-/Ausgeben von elektrischer Energie (1011) und dem elektrisch leitenden Anschluss zum Ein-/Ausgeben von elektrischer Energie (1012) mit positiver Polarität verbunden, und die elektrisch leitenden Streifen, die sich jeweils vom oberen und unteren Ende des seitlichen, negativen elektrisch leitenden Elements (110) erstrecken, werden dann jeweils und leitend elektrisch mit dem elektrisch leitenden Anschluss zum Ein-/Ausgeben von elektrischer Energie (1021) und dem elektrisch leitenden Anschluss zum Ein-/Ausgeben von elektrischer Energie (1022) mit negativer Polarität verbunden;
- ein äußeres zusätzliches Isolierpaketgehäuseelement (106): gefertigt aus einem weichen oder starren Paketmaterial mit Isoliereigenschaft wie einer AL-Verpackungsfolie, und gebildet in einem beutelähnlichen Zustand mit drei versiegelten Seiten, und zulassend, dass die vom Isolierpaketgehäuseelement (105) verpackte Elektrizitätslade-/-entladezelle angeordnet wird, und der elektrisch leitende Anschluss zum Ein-/Ausgeben von elektrischer Energie (1011) und der elektrisch leitende Anschluss zum Ein-/Ausgeben von elektrischer Energie (1021) der Elektrizitätslade-/-entladezelle werden exponiert durch Öffnungen, ausgebildet in dem äußeren zusätzlichen Isolierpaketgehäuseelement (106), und durch das äußere zusätzliche Isolierpaketgehäuseelement (106), verarbeitet zum Bilden einer äußeren Abdichtungszone (1061), und das Isolierpaketgehäuseelement (105), verarbeitet zum Bilden der Abdichtungszone (1051), die mittleren Teile des elektrisch leitenden Anschlusses zum Ein-/Ausgeben von elektrischer Energie (1011) und des elektrisch leitenden Anschlusses zum Ein-/Ausgeben von elektrischer Energie (1021) werden abgedichtet, und die distalen Teile des elektrisch leitenden Anschlusses zum Ein-/Ausgeben von elektrischer Energie (1011) und des elektrisch leitenden Anschlusses zum Ein-/Ausgeben von elektrischer Energie (1021) werden auf derselben Seite exponiert, zum Ausbilden als elektrisch leitende Anschlüsse zum Ein-/Ausgeben von elektrischer Energie nach außen, um dadurch die Elektrizitätslade-/ -entladevorrichtung mit Isolierpaketgehäuseelement mit Elektrodenplattenpaar mit mehrseitigen elektrisch leitenden Anschlüssen zu strukturieren.

22. Elektrizitätslade-/-entladevorrichtung nach Anspruch 21, wobei eine Seite der positiven Elektrodenplatte (101) ferner einstückig mit dem elektrisch leitenden Anschluss zum Ein-/Ausgeben von elektrischer Energie (1012) und dem seitlichen, positiven elektrisch leitenden Element (109) verläuft, dann kombiniert mit dem elektrisch leitenden Anschluss zum Ein-/Ausgeben von elektrischer Energie (1011), und eine Seite der negativen Elektrodenplatte (102) einstückig mit dem elektrisch leitenden Anschluss zum Ein-/Ausgeben von elektrischer Energie (1022) und dem seitlichen, negativen elektrisch leitenden Element (110) verläuft, dann kombiniert mit der negativen Elektrodenplatte (102), um dadurch eine einseitige elektrisch leitende Ein-/Ausgangsschnittstelle zu strukturieren.

23. Elektrizitätslade-/-entladevorrichtung nach Anspruch 21, wobei das seitliche, positive elektrisch leitende Element (109) und das seitliche, negative elektrisch leitende Element (110) auf zwei Seiten der Elektrizitätslade-/-entladevorrichtung mit Isolierpaketgehäuseelement mit Elektrodenplattenpaar mit mehrseitigen elektrisch leitenden Anschlüssen durch die Öffnungen (1060) des äußeren zusätzlichen Isolierpaketgehäuseelements (106) auf zwei Seiten passieren, um jeweils als elektrisch leitende Ein-/Ausgangsschnittstelle zu dienen.

24. Elektrizitätslade-/-entladevorrichtung nach Anspruch 21, wobei das seitliche, positive elektrisch leitende Element (109), ferner installiert mit dem seitlichen, positiven zusätzlichen elektrisch leitenden Element (1091), und das seitliche, negative elektrisch leitende Element (110), installiert mit dem seitlichen, negativen, zusätzlichen elektrisch leitenden Element (1101), auf zwei Seiten der Elektrizitätslade-/-entladevorrichtung mit Isolierpaketgehäuseelement mit Elektrodenplattenpaar mit mehrseitigen elektrisch leitenden Elementen durch die Öffnungen (1060) des äußeren zusätzlichen Isolierpaketgehäuseelements (106) auf zwei Seiten passieren, um jeweils als elektrisch leitende Ein-/Ausgangsschnittstelle zu dienen.

25. Elektrizitätslade-/-entladevorrichtung nach Anspruch 21, wobei das seitliche, positive elektrisch leitende Element (109) mit dem mittleren Teil mit einer nach außen vorstehenden Struktur ausgebildet und das seitliche, negative elektrisch leitende Element (110) mit dem mittleren Abschnitt mit einer nach außen vorstehenden Struktur ausgebildet, auf zwei Seiten der Elektrizitätslade-/-entladevorrichtung mit Isolierpaketgehäuseelement mit Elektrodenplattenpaar mit mehrseitigen elektrisch leitenden Elementen durch die Öffnungen (1060) des äußeren zusätzlichen Isolierpaketgehäuseelements (106) auf zwei Seiten passieren, um jeweils als elektrisch leitende Ein-/Ausgangsschnittstelle zu dienen.

26. Elektrizitätslade-/-entladevorrichtung nach Anspruch 21, wobei der einseitige elektrisch leitende Ein-/Ausgangsanschluss und das seitliche, positive elektrisch leitende Element (109) und das seitliche, negative elektrisch leitende Element (110) des Elektrodenplattenpaares als Mehrschicht-Isolierpaketgehäuseelement zum Ausbilden als Rollstruktur abgedichtet sind, wobei der elektrisch leitende Ein-/Ausgangsanschluss auf einer Seite als einseitige elektrisch leitende Ein-/Ausgangsschnittstelle dient.

27. Elektrizitätslade-/-entladevorrichtung nach Anspruch 26, wobei zum Ermöglichen der Benutzung des Mehrschicht-Isolierpaketgehäuseelements zum Abdichten ein oder mehrere der einseitigen, individuell angeordneten, positiven elektrisch leitenden Ein-/Ausgangsanschlüsse und ein oder mehrere der negativen elektrisch leitenden Ein-/Ausgangsanschlüsse individuell angeordnet sind, um als einseitige elektrisch leitende Ein-/Ausgangsschnittstelle zu dienen.

28. Elektrizitätslade-/-entladevorrichtung nach Anspruch 26, wobei zum Ermöglichen der Benutzung des Mehrschicht-Isolierpaketgehäuseelements zum Abdichten ein oder mehrere der einseitigen, nebeneinander angeordneten positiven elektrisch leitenden Ein-/Ausgangsanschlüsse und ein oder mehrere der negativen elektrisch leitenden Ein-/Ausgangsanschlüsse nebeneinander angeordnet und parallel homopolaritätsgeschaltet sind, um als einseitige elektrisch leitende Ein-/Ausgangsschnittstelle zu dienen.

29. Elektrizitätslade-/-entladevorrichtung nach Anspruch 26, wobei zum Ermöglichen der Benutzung des Mehrschicht-Isolierpaketgehäuseelements zum Abdichten nur das seitliche, positive elektrisch leitende Element (109) und das seitliche, negative elektrisch leitende Element (110) zum Strukturieren als einseitige elektrisch leitende Ein-/Ausgangsschnittstelle dienen.

## Revendications

1. Dispositif de charge/décharge d'électricité doté d'un élément clos d'ensemble isolant comportant une paire de plaques d'électrode avec des bornes électroconductrices à plusieurs côtés, comprenant :
- une plaque d'électrode positive (101) : composée d'au moins l'une parmi des plaques d'électrode positive polygonales de type feuille ou de type film, les côtés opposés de la plaque d'électrode positive sont respectivement formés d'une borne électroconductrice pour délivrer en entrée/sortie de l'énergie électrique, et la surface de la plaque d'électrode positive est pourvue d'un matériau électrochimique ;
- une plaque d'électrode négative (102) : composée d'au moins l'une parmi des plaques d'électrode négative polygonales de type feuille ou de type film, les côtés opposés de la plaque d'électrode négative sont respectivement formés d'une borne électroconductrice pour délivrer en entrée/sortie de l'énergie électrique, et la surface de la plaque d'électrode négative est pourvue d'un matériau électrochimique ;
- un séparateur (104) : formé par un film mince possédant une propriété microporeuse ou poreuse, disposé entre les plaques d'électrode positive et négative afin d'isoler les plaques d'électrode positive et négative l'une de l'autre et installé au niveau d'un côté latéral de la plaque d'électrode selon les besoins réels ;
dans lequel les plaques d'électrode possédant des polarités différentes sont empilées de manière décalée pour une formation en tant que paire de plaques d'électrode ; et lorsqu'une pluralité de plaques d'électrode possédant la même polarité est fournie, les bornes d'entrée/sortie possédant la même polarité pour transférer l'énergie électrique et formées au niveau du même côté de chacune des plaques d'électrode possédant la même polarité sont connectées par conduction électrique en parallèle ;
- un élément clos d'ensemble isolant (105) : constitué d'un matériau possédant une propriété isolante, la borne électroconductrice adjacente à la plaque d'électrode connectée s'étendant à partir d'au moins deux côtés de celui-ci vers l'extérieur pour l'entrée/sortie d'énergie électrique qui sont scellés couverts par l'élément clos d'ensemble isolant (105) pour former un dispositif de charge/décharge d'électricité de type entièrement fermé avec un élément clos d'ensemble isolant, de sorte que la paire de plaques d'électrode est capable de délivrer en sortie ou en entrée de l'énergie électrique vers l'extérieur par le biais d'une interface électroconductrice formée par une borne électroconductrice ayant au moins deux côtés.
- un élément électroconducteur positif latéral (109) : constitué d'un matériau électroconducteur et disposé au niveau d'un côté de l'élément clos d'ensemble isolant (105) ; et
- un élément électroconducteur négatif latéral (110) : constitué d'un matériau électroconducteur et disposé au niveau d'un autre côté de l'élément clos d'ensemble isolant (105) ;
dans lequel l'élément électroconducteur positif latéral (109) et l'élément électroconducteur négatif latéral (110) sont composés d'un élément électroconducteur formé dans un état de type feuille quadrilatérale, ou de type bande ou de type feuille circulaire, et les extrémités supérieure et inférieure de celui-ci sont respectivement étendues avec une bande électroconductrice qui s'étend jusqu'aux bornes électroconductrices au niveau de côtés opposés des plaques d'électrode positive ou négative.

2. Dispositif de charge/décharge d'électricité selon la revendication 1, dans lequel au moins une ou plusieurs des cellules de charge/décharge d'électricité sont disposées à l'intérieur d'un ou plusieurs des logements de façon à être collectées pour une formation en tant que structure modularisée qui est connectée par le biais des éléments électroconducteurs ou de l'interface électroconductrice d'entrée/sortie de chaque dispositif de charge/décharge d'électricité pour transférer l'énergie électrique ; le logement est constitué d'un matériau flexible souple ou d'un matériau rigide dans lequel au moins l'une des cellules de charge/décharge d'électricité est disposée à l'intérieur du logement (120).

3. Dispositif de charge/décharge d'électricité selon la revendication 1 ou la revendication 2, qui est en outre appliqué dans un dispositif de charge/décharge d'électricité avec un élément clos d'ensemble isolant possédant une paire de plaques d'électrode avec des bornes électroconductrices à plusieurs côtés, ce qui permet à la paire de plaques d'électrode avec des bornes électroconductrices à plusieurs côtés d'être structurée en tant qu'interface électroconductrice d'entrée/sortie par le biais de bornes électroconductrices d'entrée/sortie à un seul côté possédant des polarités positive et négative dans le but de transférer l'énergie électrique vers l'extérieur, ou en outre pour être connectées en série, en parallèle ou en série et en parallèle pour une formation en tant que module, dans lequel
la périphérie de l'élément clos d'ensemble isolant (105) est formée dans un état de manchon creux scellé, et des ouvertures formées au niveau de deux côtés permettant à la plaque d'électrode positive (101) et à la plaque d'électrode négative (102) ayant le séparateur (104) serré entre elles d'être disposée, une ouverture de l'élément clos d'ensemble isolant (105) permet à la borne électroconductrice pour l'entrée/sortie d'énergie électrique (1011) et à la borne électroconductrice pour l'entrée/sortie d'énergie électrique (1021) d'être exposées, et l'élément clos d'ensemble isolant (105) est traité pour former une zone de scellement (1051) de façon à sceller les parties de la borne électroconductrice pour l'entrée/sortie d'énergie électrique (1011) et la borne électroconductrice pour l'entrée/sortie d'énergie électrique (1021) définies près de la plaque d'électrode, et les extrémités distales de la borne électroconductrice pour l'entrée/sortie d'énergie électrique (1011) et de la borne électroconductrice pour l'entrée/sortie d'énergie électrique (1021) sont exposées au niveau du même côté, une solution d'électrolyte ou un matériau électrolyte est rempli dans l'élément clos d'ensemble isolant (105), l'autre ouverture permet à la borne électroconductrice pour l'entrée/sortie d'énergie électrique (1012) et à la borne électroconductrice pour l'entrée/sortie d'énergie électrique (1022) d'être exposées, et l'élément clos d'ensemble isolant (105) est traité pour former une zone de scellement (1052) de façon à sceller les parties de la borne électroconductrice pour l'entrée/sortie d'énergie électrique (1012) et la borne électroconductrice pour l'entrée/sortie d'énergie électrique (1022) définies près de la plaque d'électrode, et les extrémités distales de la borne électroconductrice pour l'entrée/sortie d'énergie électrique (1012) et de la borne électroconductrice pour l'entrée/sortie d'énergie électrique (1022) sont exposées et pliées vers l'intérieur le long de l'extérieur de la zone de scellement (1052) de l'élément clos d'ensemble isolant (105) en étant de ce fait respectivement connectées à l'élément électroconducteur positif latéral (109) et à l'élément électroconducteur négatif latéral (110), dans lequel la borne électroconductrice pour l'entrée/sortie d'énergie électrique (1012) est connectée par conduction électrique à une extrémité de l'élément électroconducteur positif latéral (109), et l'autre extrémité de l'élément électroconducteur positif latéral (109) est connectée par conduction électrique à la borne électroconductrice pour l'entrée/sortie d'énergie électrique (1011) en formant de ce fait une connexion parallèle avec une polarité positive ; la borne électroconductrice pour l'entrée/sortie d'énergie électrique (1022) est électriquement connectée à une extrémité de l'élément électroconducteur négatif latéral (110), et l'autre extrémité de l'élément électroconducteur négatif latéral (110) est connectée par conduction électrique à la borne électroconductrice pour l'entrée/sortie d'énergie électrique (1021) en formant de ce fait une connexion électrique conductrice parallèle avec une polarité négative, de sorte qu'une cellule de charge/décharge d'électricité est structurée ;
dans lequel les bandes électroconductrices s'étendant respectivement à partir des extrémités supérieure et inférieure de l'élément électroconducteur positif latéral (109) sont alors connectées respectivement et par conduction électrique à la borne électroconductrice pour l'entrée/sortie d'énergie électrique (1011) et à la borne électroconductrice pour l'entrée/sortie d'énergie électrique (1012) possédant une polarité positive, et les bandes électroconductrices s'étendant respectivement à partir des extrémités supérieure et inférieure de l'élément électroconducteur négatif latéral (110) sont alors connectées respectivement et par conduction électrique à la borne électroconductrice pour l'entrée/sortie d'énergie électrique (1021) et à la borne électroconductrice pour l'entrée/sortie d'énergie électrique (1022) possédant une polarité négative.

4. Dispositif de charge/décharge d'électricité selon la revendication 3, dans lequel la plaque d'électrode positive (101) et l'élément électroconducteur positif latéral (109), et la plaque d'électrode négative (102) et l'élément électroconducteur négatif latéral (110) sont en outre formés en une seule pièce.

5. Dispositif de charge/décharge d'électricité selon la revendication 3, dans lequel la plaque d'électrode positive (101) et l'élément électroconducteur positif latéral (109), et la plaque d'électrode négative (102) et l'élément électroconducteur négatif latéral (110) sont en outre formés en une seule pièce, et les bornes électroconductrices d'entrée/sortie possédant au moins une borne électroconductrice d'entrée/sortie de polarité positive et au moins une borne électroconductrice d'entrée/sortie de polarité négative au niveau de deux côtés de la paire de plaques d'électrode et l'élément électroconducteur positif latéral de type feuille (109) et l'élément électroconducteur négatif latéral (110) au niveau de deux côtés latéraux sont structurés en tant qu'interface électroconductrice à plusieurs entrées/sorties.

6. Dispositif de charge/décharge d'électricité selon la revendication 3, dans lequel les bornes électroconductrices d'entrée/sortie possédant des polarités positive et négative et formées respectivement par une structure pliée au niveau de deux côtés de la paire de plaques d'électrode et l'élément électroconducteur positif latéral de type feuille (109) et l'élément électroconducteur négatif latéral (110) au niveau de deux côtés latéraux sont structurés en tant qu'interface électroconductrice à plusieurs entrées/sorties.

7. Dispositif de charge/décharge d'électricité selon la revendication 3, dans lequel une borne électroconductrice d'entrée/sortie possédant une polarité différente et fournie respectivement au niveau de deux extrémités définies au niveau du même côté de la paire de plaques d'électrode et l'élément électroconducteur positif latéral de type feuille (109) et l'élément électroconducteur négatif latéral (110) au niveau de deux côtés latéraux de la paire de plaques d'électrode sont structurés en tant qu'interface électroconductrice à plusieurs entrées/sorties.

8. Dispositif de charge/décharge d'électricité selon la revendication 3, dans lequel l'élément électroconducteur positif latéral (109) et l'élément électroconducteur négatif latéral (110) au niveau de deux côtés du dispositif de charge/décharge d'électricité avec élément clos d'ensemble isolant possédant une paire de plaques d'électrode avec des bornes électroconductrices à plusieurs côtés peuvent servir d'interface électroconductrice d'entrée/sortie pour être utilisés individuellement, ou connectés en série, en parallèle ou en série et en parallèle, la configuration comprenant :
- les surfaces électroconductrices exposées d'un élément électroconducteur positif latéral (109) et d'un élément électroconducteur négatif latéral opposé (110) sont directement formées en tant qu'interface électroconductrice d'entrée/sortie pour être utilisées individuellement, ou connectées en série, en parallèle ou en série et en parallèle ; ou
- la surface exposée de l'élément électroconducteur positif latéral (109) est pourvue d'un élément électroconducteur auxiliaire positif latéral (1091), et la surface exposée de l'élément électroconducteur négatif latéral (110) est pourvue d'un élément électroconducteur auxiliaire négatif latéral (1101) pour structurer l'interface électroconductrice d'entrée/sortie pour être utilisée individuellement, ou connectée en série, en parallèle ou en série et en parallèle ; ou
- un ou plusieurs emplacements définis au niveau de la partie médiane de l'élément électroconducteur positif latéral (109) sont formés avec une structure faisant saillie vers l'extérieur et un ou plusieurs emplacements définis au niveau de la partie médiane de l'élément électroconducteur négatif latéral (110) sont formés avec une structure faisant saillie vers l'extérieur, structurant de ce fait l'interface électroconductrice d'entrée/sortie pour être utilisée individuellement, ou connectée en série, en parallèle ou en série et en parallèle.

9. Dispositif de charge/décharge d'électricité selon la revendication 3, dans lequel la plaque d'électrode positive (101) et la plaque d'électrode négative (102) de la borne électroconductrice d'entrée/sortie s'étendant vers deux côtés et le séparateur (104) sont formées en tant que structure de roulement, et les bornes distales et/ou l'élément électroconducteur positif latéral (109) et de l'élément électroconducteur négatif latéral (110) au niveau de deux côtés latéraux sont structurées en tant qu'interface électroconductrice à plusieurs entrées/sorties.

10. Dispositif de charge/décharge d'électricité selon la revendication 9, dans lequel au moins l'élément électroconducteur positif latéral (109) et l'élément électroconducteur négatif latéral (110) au niveau de deux côtés latéraux et au moins une borne électroconductrice d'entrée/sortie au niveau d'une extrémité distale définie au niveau d'un côté sont disposés individuellement pour structuration en tant qu'interface électroconductrice à plusieurs entrées/sorties.

11. Dispositif de charge/décharge d'électricité selon la revendication 9, dans lequel l'élément clos d'ensemble isolant à une seule couche (105) sert d'ensemble isolant au niveau de deux côtés latéraux et les bornes électroconductrices d'entrée/sortie au niveau de deux côtés sont disposées de manière adjacente pour structuration en tant qu'interface électroconductrice à plusieurs entrées/sorties.

12. Dispositif de charge/décharge d'électricité selon la revendication 9, dans lequel l'élément électroconducteur positif latéral (109) et l'élément électroconducteur négatif latéral (110) disposés au niveau de deux côtés latéraux et les bornes électroconductrices d'entrée/sortie au niveau de deux côtés sont structurés en tant qu'interface électroconductrice à plusieurs entrées/sorties.

13. Dispositif de charge/décharge d'électricité selon la revendication 1 ou la revendication 2, qui est en outre appliqué dans un dispositif de charge/décharge d'électricité avec élément clos d'ensemble isolant possédant une paire de plaques d'électrode avec des bornes électroconductrices à plusieurs côtés, de sorte que la paire de plaques d'électrode avec bornes électroconductrices à plusieurs côtés après être couverte et conditionnée est capable d'être structurée en tant qu'interface électroconductrice d'entrée/sortie par le biais d'une borne électroconductrice d'entrée/sortie unique possédant une polarité positive et négative pour transférer l'énergie électrique vers l'extérieur, ou également pour être connectée en série, en parallèle ou en série et en parallèle, dans lequel les caractéristiques principales sont les suivantes :
la périphérie de l'élément clos d'ensemble isolant (105) est formée dans un état de manchon creux scellé, et des ouvertures formées au niveau de deux côtés permettent à la plaque d'électrode positive (101) et à la plaque d'électrode négative (102) ayant le séparateur (104) serré entre elles d'être disposées, une ouverture de l'élément clos d'ensemble isolant (105) permet à la borne électroconductrice pour l'entrée/sortie d'énergie électrique (1011) et à la borne électroconductrice pour l'entrée/sortie d'énergie électrique (1021) d'être exposées, et l'élément clos d'ensemble isolant (105) est traité pour former une zone de scellement (1051) de façon à sceller les parties de la borne électroconductrice pour l'entrée/sortie d'énergie électrique (1011) et de la borne électroconductrice pour l'entrée/sortie d'énergie électrique (1021) définies près de la plaque d'électrode, et les extrémités distales de la borne électroconductrice pour l'entrée/sortie d'énergie électrique (1011) et de la borne électroconductrice pour l'entrée/sortie d'énergie électrique (1021) sont exposées au niveau du même côté pour être structurées en tant qu'interface électroconductrice d'entrée/sortie à un seul côté ; l'intérieur de l'élément clos d'ensemble isolant (105) permet à une solution d'électrolyte ou à un matériau électrolyte d'être rempli ; l'élément électroconducteur positif latéral (109) est disposé au niveau d'un côté défini au niveau de l'extérieur de l'élément clos d'ensemble isolant (105) et électriquement connecté entre la borne électroconductrice pour l'entrée/sortie d'énergie électrique (1011) et la borne électroconductrice pour l'entrée/sortie d'énergie électrique (1012), l'élément électroconducteur négatif latéral (110) est disposé au niveau d'un autre côté défini au niveau de l'extérieur de l'élément clos d'ensemble isolant (105) et électriquement connecté entre la borne électroconductrice pour l'entrée/sortie d'énergie électrique (1021) et la borne électroconductrice pour l'entrée/sortie d'énergie électrique (1022) ; une autre extrémité de l'élément clos d'ensemble isolant (105) est formée avec deux segments pliants de couverture et de conditionnement (1050) pour permettre à la borne électroconductrice pour l'entrée/sortie d'énergie électrique (1012), à la borne électroconductrice pour l'entrée/sortie d'énergie électrique (1022) au niveau de l'autre extrémité et à l'élément clos d'ensemble isolant (105) d'être traités pour former une zone de scellement (1052) de façon à sceller la borne électroconductrice pour l'entrée/sortie d'énergie électrique (1012) et la borne électroconductrice pour l'entrée/sortie d'énergie électrique (1022), puis les deux pliages couvrant et conditionnant les segments (1050) sont pliés respectivement et vers le haut le long de deux côtés définis au niveau de l'extérieur de la zone de scellement (1052) de l'élément clos d'ensemble isolant (105) pour sceller et couvrir respectivement l'élément électroconducteur positif latéral (109) et l'élément électroconducteur négatif latéral (110) et s'étendant en outre vers le haut pour être scellés dans la zone de scellement (1051) avec les parties de la borne électroconductrice pour l'entrée/sortie d'énergie électrique (1011) et de la borne électroconductrice pour l'entrée/sortie d'énergie électrique (1021) définies près de la plaque d'électrode, dans lequel la borne électroconductrice pour l'entrée/sortie d'énergie électrique (1012) est électriquement connectée à une extrémité de l'élément électroconducteur positif latéral (109), puis, par le biais de l'autre extrémité de l'élément électroconducteur positif latéral (109), électriquement connectée à la borne électroconductrice pour l'entrée/sortie d'énergie électrique (1011) ce qui forme par conduction électrique une connexion parallèle avec une polarité positive ; la borne électroconductrice pour l'entrée/sortie d'énergie électrique (1022) est électriquement connectée à une extrémité de l'élément électroconducteur négatif latéral (110), puis, par le biais de l'autre extrémité de l'élément électroconducteur négatif latéral (110), est électriquement connectée à la borne électroconductrice pour l'entrée/sortie d'énergie électrique (1021), ce qui forme par conduction électrique une connexion parallèle avec une polarité négative, de sorte que le dispositif de charge/décharge d'électricité avec élément clos d'ensemble isolant possédant une paire de plaques d'électrode avec des bornes électroconductrices à plusieurs côtés est structuré, et les parties distales exposées de la borne électroconductrice pour l'entrée/sortie d'énergie électrique (1011) et de la borne électroconductrice pour l'entrée/sortie d'énergie électrique (1021) sont structurées en tant qu'interface électroconductrice d'entrée/sortie à un seul côté ;
dans lequel les bandes électroconductrices s'étendant respectivement à partir des extrémités supérieure et inférieure de l'élément électroconducteur positif latéral (109) sont ensuite connectées respectivement et électriquement en parallèle avec la borne électroconductrice pour l'entrée/sortie d'énergie électrique (1011) et la borne électroconductrice pour l'entrée/sortie d'énergie électrique (1012) possédant une polarité positive, et les bandes électroconductrices s'étendant respectivement à partir des extrémités supérieure et inférieure de l'élément électroconducteur négatif latéral (110) sont ensuite connectées respectivement et électriquement en parallèle avec la borne électroconductrice pour l'entrée/sortie d'énergie électrique (1021) et la borne électroconductrice pour l'entrée/sortie d'énergie électrique (1022) possédant une polarité négative, et les parties exposées de la borne électroconductrice pour l'entrée/sortie d'énergie électrique (1011) et de la borne électroconductrice pour l'entrée/sortie d'énergie électrique (1021) sont structurées en tant qu'interface électroconductrice d'entrée/sortie à un seul côté.

14. Dispositif de charge/décharge d'électricité selon la revendication 13, dans lequel l'élément électroconducteur positif latéral (109) et l'élément électroconducteur négatif latéral (110) au niveau de deux côtés du dispositif de charge/décharge d'électricité avec élément clos d'ensemble isolant possédant une paire de plaques d'électrode avec des bornes électroconductrices à plusieurs côtés peuvent servir en outre d'interface électroconductrice d'entrée/sortie pour être utilisés individuellement, ou connectés en série, en parallèle ou en série et en parallèle, la configuration comprenant :
- les surfaces électroconductrices exposées d'un élément électroconducteur positif latéral (109) et d'un élément électroconducteur négatif latéral opposé (110) sont directement formées en tant qu'interface électroconductrice d'entrée/sortie pour être utilisées individuellement, ou connectées en série, en parallèle ou en série et en parallèle ; ou
- la surface exposée de l'élément électroconducteur positif latéral (109) est pourvue d'un élément électroconducteur auxiliaire positif latéral (1091), et la surface exposée de l'élément électroconducteur négatif latéral (110) est pourvue d'un élément électroconducteur auxiliaire négatif latéral (1101) ce qui structure l'interface électroconductrice d'entrée/sortie pour être utilisée individuellement, ou connectée en série, en parallèle ou en série et en parallèle ; ou
- un ou plusieurs emplacements définis au niveau de la partie médiane de l'élément électroconducteur positif latéral (109) sont formés avec une structure faisant saillie vers l'extérieur et un ou plusieurs emplacements définis au niveau de la partie médiane de l'élément électroconducteur négatif latéral (110) sont formés avec une structure faisant saillie vers l'extérieur, structurant de ce fait l'interface électroconductrice d'entrée/sortie pour être utilisée individuellement, ou connectée en série, en parallèle ou en série et en parallèle.

15. Dispositif de charge/décharge d'électricité selon la revendication 13, dans lequel un côté de la paire de plaques d'électrode possédant l'élément électroconducteur positif latéral de type feuille (109) et l'élément électroconducteur négatif latéral (110) sert de borne électroconductrice d'entrée/sortie possédant une polarité positive, et l'autre côté de celle-ci sert de borne électroconductrice d'entrée/sortie possédant une polarité négative ce qui structure l'interface électroconductrice d'entrée/sortie à un seul côté, dans lequel les caractéristiques principales sont les suivantes :
la périphérie de l'élément clos d'ensemble isolant (105) est formée dans un état de manchon creux scellé, et des ouvertures formées au niveau de deux côtés permettent à la plaque d'électrode positive (101) et à la plaque d'électrode négative (102) ayant le séparateur (104) serré entre elles d'être disposées, une extrémité distale de l'élément clos d'ensemble isolant (105) est formée avec un segment pliant de couverture et de conditionnement (1050) ; par le biais du segment pliant de couverture et de conditionnement (1050) dépassant vers le haut de l'élément clos d'ensemble isolant (105) qui sert d'isolation interne pour l'élément électroconducteur négatif latéral (110), et le segment s'étendant vers le haut de l'élément clos d'ensemble isolant (105) qui couvre l'isolation interne de l'élément électroconducteur positif latéral (109) qui sont traités pour former la zone de scellement (1051), la partie de connexion électroconductrice de la borne électroconductrice pour l'entrée/sortie d'énergie électrique (1011) et du segment s'étendant vers le haut de l'élément électroconducteur positif latéral (109) est activée pour être scellée ; et par le biais du segment pliant de couverture et de conditionnement (1050) dépassant vers le haut de l'élément clos d'ensemble isolant (105) qui sert d'isolation interne pour l'élément électroconducteur positif latéral (109), et le segment s'étendant vers le haut de l'élément clos d'ensemble isolant (105) qui couvre l'isolation interne de l'élément électroconducteur négatif latéral (110) qui sont traités pour former la zone de scellement (1051), la partie de connexion électroconductrice de la borne électroconductrice pour l'entrée/sortie d'énergie électrique (1021) et du segment s'étendant vers le haut de l'élément électroconducteur négatif latéral (110) est activée pour être scellée ; l'intérieur de l'élément clos d'ensemble isolant (105) permet à une solution d'électrolyte ou à un matériau électrolyte d'être rempli ; et par le biais du segment pliant de couverture et de conditionnement (1050) dépassant vers le bas de l'élément clos d'ensemble isolant (105) qui sert d'isolation interne pour l'élément électroconducteur négatif latéral (110), et le segment s'étendant vers le bas de l'élément clos d'ensemble isolant (105) qui couvre l'isolation interne de l'élément électroconducteur positif latéral (109) qui sont traités pour former la zone de scellement (1052), la partie de connexion électroconductrice de la borne électroconductrice pour l'entrée/sortie d'énergie électrique (1012) et du segment s'étendant vers le bas de l'élément électroconducteur positif latéral (109) est activée pour être scellée ; et par le biais du segment pliant de couverture et de conditionnement (1050) dépassant vers le bas de l'élément clos d'ensemble isolant (105) qui sert d'isolation interne pour l'élément électroconducteur positif latéral (109), et le segment s'étendant vers le bas de l'élément clos d'ensemble isolant (105) qui couvre l'isolation interne de l'élément électroconducteur négatif latéral (110) qui sont traités pour former la zone de scellement (1052), la partie de connexion électroconductrice de la borne électroconductrice pour l'entrée/sortie d'énergie électrique (1022) et du segment s'étendant vers le bas de l'élément électroconducteur négatif latéral (110) est activée pour être scellée, dans lequel la borne électroconductrice pour l'entrée/sortie d'énergie électrique (1012) est électriquement connectée à une extrémité de l'élément électroconducteur positif latéral (109), puis par le biais de l'autre extrémité de l'élément électroconducteur positif latéral (109) électriquement connectée à la borne électroconductrice pour l'entrée/sortie d'énergie électrique (1011), ce qui forme par conduction électrique une connexion parallèle avec une polarité positive ; la borne électroconductrice pour l'entrée/sortie d'énergie électrique (1022) est électriquement connectée à une extrémité de l'élément électroconducteur négatif latéral (110), puis par le biais de l'autre extrémité de l'élément électroconducteur négatif latéral (110) électriquement connectée à la borne électroconductrice pour l'entrée/sortie d'énergie électrique (1021), ce qui forme par conduction électrique une connexion parallèle avec une polarité négative, et la surface électroconductrice exposée de l'élément électroconducteur positif latéral (109) et la surface électroconductrice exposée de l'élément électroconducteur négatif latéral (110) sont structurées pour une formation en tant qu'interface électroconductrice d'entrée/sortie à un seul côté ;
et les bandes électroconductrices s'étendant respectivement à partir des extrémités supérieure et inférieure de l'élément électroconducteur positif latéral (109) sont ensuite connectées respectivement et électriquement en parallèle avec la borne électroconductrice pour l'entrée/sortie d'énergie électrique (1011) et la borne électroconductrice pour l'entrée/sortie d'énergie électrique (1012) possédant une polarité positive, et les bandes électroconductrices s'étendant respectivement à partir des extrémités supérieure et inférieure de l'élément électroconducteur négatif latéral (110) sont ensuite connectées respectivement et électriquement à la borne électroconductrice pour l'entrée/sortie d'énergie électrique (1021) et à la borne électroconductrice pour l'entrée/sortie d'énergie électrique (1022) possédant une polarité négative, et la surface électroconductrice exposée de l'élément électroconducteur positif latéral (109) et la surface électroconductrices exposée de l'élément électroconducteur négatif latéral (110) sont structurées pour une formation en tant qu'interface électroconductrice d'entrée/sortie à un seul côté.

16. Dispositif de charge/décharge d'électricité selon la revendication 13, dans lequel la borne électroconductrice d'entrée/sortie à un seul côté et l'élément électroconducteur positif latéral (109) et l'élément électroconducteur négatif latéral (110) de la paire de plaques d'électrode du dispositif de charge/décharge d'électricité avec élément clos d'ensemble isolant possédant une paire de plaques d'électrode avec des bornes électroconductrices à plusieurs côtés sont scellés dans un état d'isolation à couche unique pour une formation en tant que structure de roulement, et la borne électroconductrice d'entrée/sortie au niveau d'un côté sert d'interface électroconductrice d'entrée/sortie à un seul côté.

17. Dispositif de charge/décharge d'électricité selon la revendication 16, dans lequel, pour permettre à l'élément électroconducteur positif latéral (109), à l'élément électroconducteur négatif latéral (110) et à la borne électroconductrice d'entrée/sortie au niveau d'un côté d'être scellés dans un état d'isolation à couche unique, la plaque d'électrode positive (101), la plaque d'électrode négative (102), le séparateur (104), l'élément électroconducteur positif latéral (109) et l'élément électroconducteur négatif latéral (110) sont formés en tant que structure de roulement, et une ou plusieurs des bornes électroconductrices d'entrée/sortie à un seul côté disposées individuellement possédant une polarité positive et une ou plusieurs des bornes électroconductrices d'entrée/sortie possédant une polarité négative sont disposées individuellement pour structuration en tant qu'interface électroconductrice d'entrée/sortie à un seul côté.

18. Dispositif de charge/décharge d'électricité selon la revendication 16, dans lequel, pour permettre à l'élément électroconducteur positif latéral (109), à l'élément électroconducteur négatif latéral (110) et à la borne électroconductrice d'entrée/sortie au niveau d'un côté d'être scellées dans un état d'isolation à couche unique, la plaque d'électrode positive (101), la plaque d'électrode négative (102), l'élément d'isolation (104), l'élément électroconducteur positif latéral (109) et l'élément électroconducteur négatif latéral (110) sont formés en tant que structure de roulement, et une ou plusieurs des bornes électroconductrices d'entrée/sortie positives à un seul côté disposées de manière adjacente et une ou plusieurs des bornes électroconductrices d'entrée/sortie négatives sont disposées de manière adjacente et connectées en homopolarité en parallèle pour structuration en tant qu'interface électroconductrice d'entrée/sortie à un seul côté.

19. Dispositif de charge/décharge d'électricité selon la revendication 13, dans lequel les bornes électroconductrices d'entrée/sortie au niveau de deux côtés de la paire de plaques d'électrode du dispositif de charge/décharge d'électricité avec élément clos d'ensemble isolant possédant une paire de plaques d'électrode avec des bornes électroconductrices à plusieurs côtés sont scellées dans un état d'isolation à couche unique, et l'élément électroconducteur positif latéral (109) et l'élément électroconducteur négatif latéral (110) sont structurés en tant qu'interface électroconductrice d'entrée/sortie à un seul côté pour former la structure de roulement.

20. Dispositif de charge/décharge d'électricité selon la revendication 19, dans lequel, pour permettre aux bornes électroconductrices d'entrée/sortie au niveau de deux côtés de la paire de plaques d'électrode d'être scellée dans un état d'isolation à couche unique, l'élément électroconducteur positif latéral (109) et l'élément électroconducteur négatif latéral (110) au niveau de deux côtés sont structurés en tant qu'interface électroconductrice d'entrée/sortie à un seul côté.

21. Dispositif de charge/décharge d'électricité selon la revendication 1 ou la revendication 2, qui est appliqué dans un dispositif de charge/décharge d'électricité avec un élément clos d'ensemble isolant possédant une paire de plaques d'électrode avec des bornes électroconductrices à plusieurs côtés, ce qui permet à la paire de plaques d'électrode avec des bornes électroconductrices à plusieurs côtés d'être convertie en une interface électroconductrice d'entrée/sortie par le biais de bornes électroconductrices d'entrée/sortie à un seul côté possédant des polarités positive et négative dans le but de transférer l'énergie électrique vers l'extérieur, ou en outre pour être connectées en série, en parallèle ou en série et en parallèle pour une formation en tant que module, dans lequel les caractéristiques principales sont les suivantes :
la périphérie de l'élément clos d'ensemble isolant (105) est formée dans un état de manchon creux scellé, et des ouvertures formées au niveau de deux côtés permettant à la plaque d'électrode positive (101) et à la plaque d'électrode négative (102) ayant le séparateur (104) serré entre elles d'être disposées, une ouverture de l'élément clos d'ensemble isolant (105) permet à la borne électroconductrice pour l'entrée/sortie d'énergie électrique (1011) et à la borne électroconductrice pour l'entrée/sortie d'énergie électrique (1021) d'être exposées, et l'élément clos d'ensemble isolant (105) est traité pour former une zone de scellement (1051) de façon à sceller les parties de la borne électroconductrice pour l'entrée/sortie d'énergie électrique (1011) et la borne électroconductrice pour l'entrée/sortie d'énergie électrique (1021) définies près de la plaque d'électrode, et les extrémités distales de la borne électroconductrice pour l'entrée/sortie d'énergie électrique (1011) et de la borne électroconductrice pour l'entrée/sortie d'énergie électrique (1021) sont exposées au niveau du même côté, une solution d'électrolyte ou un matériau électrolyte est rempli dans l'élément clos d'ensemble isolant (105), l'autre ouverture permet à la borne électroconductrice pour l'entrée/sortie d'énergie électrique (1012) et à la borne électroconductrice pour l'entrée/sortie d'énergie électrique (1022) d'être exposées, et l'élément clos d'ensemble isolant (105) est traité pour former une zone de scellement (1052) de façon à sceller les parties de la borne électroconductrice pour l'entrée/sortie d'énergie électrique (1012) et la borne électroconductrice pour l'entrée/sortie d'énergie électrique (1022) définies près de la plaque d'électrode, et les extrémités distales de la borne électroconductrice pour l'entrée/sortie d'énergie électrique (1012) et de la borne électroconductrice pour l'entrée/sortie d'énergie électrique (1022) sont exposées et pliées vers l'intérieur le long de l'extérieur de la zone de scellement (1052) de l'élément clos d'ensemble isolant (105) en étant de ce fait respectivement connectées à l'élément électroconducteur positif latéral (109) et à l'élément électroconducteur négatif latéral (110), dans lequel la borne électroconductrice pour l'entrée/sortie d'énergie électrique (1012) est connectée par conduction électrique à une extrémité de l'élément électroconducteur positif latéral (109), et l'autre extrémité de l'élément électroconducteur positif latéral (109) est connectée par conduction électrique à la borne électroconductrice pour l'entrée/sortie d'énergie électrique (1011) en formant de ce fait une connexion électroconductrice parallèle avec une polarité positive ; la borne électroconductrice pour l'entrée/sortie d'énergie électrique (1022) est connectée par conduction électrique à une extrémité de l'élément électroconducteur négatif latéral (110), et l'autre extrémité de l'élément électroconducteur négatif latéral (110) est connectée par conduction électrique à la borne électroconductrice pour l'entrée/sortie d'énergie électrique (1021) en formant de ce fait une connexion électrique conductrice parallèle avec une polarité négative, de sorte qu'une cellule de charge/décharge d'électricité est structurée ;
les bandes électroconductrices s'étendant respectivement à partir des extrémités supérieure et inférieure de l'élément électroconducteur positif latéral (109) sont alors connectées respectivement et par conduction électrique à la borne électroconductrice pour l'entrée/sortie d'énergie électrique (1011) et à la borne électroconductrice pour l'entrée/sortie d'énergie électrique (1012) possédant une polarité positive, et les bandes électroconductrices s'étendant respectivement à partir des extrémités supérieure et inférieure de l'élément électroconducteur négatif latéral (110) sont alors connectées respectivement et par conduction électrique à la borne électroconductrice pour l'entrée/sortie d'énergie électrique (1021) et à la borne électroconductrice pour l'entrée/sortie d'énergie électrique (1022) possédant une polarité négative. - un élément clos d'ensemble isolant auxiliaire externe (106) : constitué d'un matériau de conditionnement souple ou rigide présentant une propriété isolante, tel qu'une feuille de conditionnement en Al et formé dans un état de type sachet possédant trois côtés qui sont scellés et permettant à la cellule de charge/décharge d'électricité conditionnée par l'élément clos d'ensemble isolant (105) d'être disposée, et la borne électroconductrice pour l'entrée/sortie d'énergie électrique (1011) et la borne électroconductrice pour l'entrée/sortie d'énergie électrique (1021) de la cellule de charge/décharge d'électricité sont exposées par le biais d'ouvertures formées dans l'élément clos d'ensemble isolant auxiliaire externe (106), et par le biais de l'autre élément clos d'ensemble isolant auxiliaire externe (106) étant traité pour former une zone de scellement externe (1061) et l'élément clos d'ensemble isolant (105) étant traité pour former la zone de scellement (1051), les parties médianes de la borne électroconductrice pour l'entrée/sortie d'énergie électrique (1011) et de la borne électroconductrice pour l'entrée/sortie d'énergie électrique (1021) sont scellées, et les parties distales de la borne électroconductrice pour l'entrée/sortie d'énergie électrique (1011) et de la borne électroconductrice pour l'entrée/sortie d'énergie électrique (1021) sont exposées au niveau du même côté pour une formation en tant que bornes électroconductrices pour l'entrée/sortie d'énergie électrique vers l'extérieur, ce qui structure le dispositif de charge/décharge d'électricité avec élément clos d'ensemble isolant possédant une paire de plaques d'électrode avec des bornes électroconductrices à plusieurs côtés.

22. Dispositif de charge/décharge d'électricité selon la revendication 21, dans lequel un côté de la plaque d'électrode positive (101) s'étend en outre de façon solidaire avec la borne électroconductrice pour l'entrée/sortie d'énergie électrique (1012) et l'élément électroconducteur positif latéral (109) puis est combiné avec la borne électroconductrice pour l'entrée/sortie d'énergie électrique (1011), et un côté de la plaque d'électrode négative (102) s'étend de façon solidaire avec la borne électroconductrice pour l'entrée/sortie d'énergie électrique (1022) et l'élément électroconducteur négatif latéral (110), puis est combiné avec la plaque d'électrode négative (102), ce qui structure une interface électroconductrice d'entrée/sortie à un seul côté.

23. Dispositif de charge/décharge d'électricité selon la revendication 21, dans lequel l'élément électroconducteur positif latéral (109) et l'élément électroconducteur négatif latéral (110) au niveau de deux côtés du dispositif de charge/décharge d'électricité avec l'élément clos d'ensemble isolant possédant une paire de plaques d'électrode avec des bornes électroconductrices à plusieurs côtés passent les ouvertures (1060) de l'élément clos d'ensemble isolant auxiliaire externe (106) au niveau de deux côtés pour servir respectivement d'interface électroconductrice d'entrée/sortie.

24. Dispositif de charge/décharge d'électricité selon la revendication 21, dans lequel l'élément électroconducteur positif latéral (109) étant en outre installé avec l'élément électroconducteur auxiliaire positif latéral (1091) et l'élément électroconducteur négatif latéral (110) étant installé avec l'élément électroconducteur auxiliaire négatif latéral (1101) au niveau de deux côtés du dispositif de charge/décharge d'électricité avec élément clos d'ensemble isolant possédant une paire de plaques d'électrode avec des bornes électroconductrices à plusieurs côtés passent les ouvertures (1060) de l'élément clos d'ensemble isolant auxiliaire externe (106) au niveau de deux côtés pour servir respectivement d'interface électroconductrice d'entrée/sortie.

25. Dispositif de charge/décharge d'électricité selon la revendication 21, dans lequel l'élément électroconducteur positif latéral (109) possédant la partie médiane étant formée d'une structure faisant saillie vers l'extérieur et l'élément électroconducteur négatif latéral (110) possédant la partie médiane étant formée d'une structure faisant saillie vers l'extérieur au niveau de deux côtés du dispositif de charge/décharge d'électricité avec élément clos d'ensemble isolant possédant une paire de plaques d'électrode avec des bornes électroconductrices à plusieurs côtés passent les ouvertures (1060) de l'élément clos d'ensemble isolant auxiliaire externe (106) au niveau de deux côtés pour servir respectivement d'interface électroconductrice d'entrée/sortie.

26. Dispositif de charge/décharge d'électricité selon la revendication 21, dans lequel la borne électroconductrice d'entrée/sortie à un seul côté et l'élément électroconducteur positif latéral (109) et l'élément électroconducteur négatif latéral (110) de la paire de plaques d'électrode sont scellés en tant qu'élément clos d'ensemble isolant multicouche pour une formation en tant que structure de roulement, dans lequel la borne électroconductrice d'entrée/sortie au niveau d'un côté sert d'interface électroconductrice d'entrée/sortie à un seul côté.

27. Dispositif de charge/décharge d'électricité selon la revendication 26, dans lequel, pour permettre à l'élément clos d'ensemble isolant multicouche d'être utilisé pour le scellement, une ou plusieurs des bornes électroconductrices d'entrée/sortie positives à un seul côté disposées individuellement et une ou plusieurs des bornes électroconductrices d'entrée/sortie négatives sont disposées individuellement pour une formation en tant qu'interface électroconductrice d'entrée/sortie à un seul côté.

28. Dispositif de charge/décharge d'électricité selon la revendication 26, dans lequel, pour permettre à l'élément clos d'ensemble isolant multicouche d'être utilisé pour le scellement, une ou plusieurs des bornes électroconductrices d'entrée/sortie positives à un seul côté disposées de manière adjacente et une ou plusieurs des bornes électroconductrices d'entrée/sortie négatives sont disposées de manière adjacente et connectées en homopolarité en parallèle pour une formation en tant qu'interface électroconductrice d'entrée/sortie à un seul côté.

29. Dispositif de charge/décharge d'électricité selon la revendication 26, dans lequel, pour permettre à l'élément clos d'ensemble isolant multicouche d'être utilisé pour le scellement, seuls l'élément électroconducteur positif latéral (109) et l'élément électroconducteur négatif latéral (110) servent à être structurés en tant qu'interface électroconductrice d'entrée/sortie à un seul côté.
